(19)

**Europäisches Patentamt**
**European Patent Office**
**Office européen des brevets**

(11) **EP 4 074 772 A1**

(12) **EUROPEAN PATENT APPLICATION**

(43) Date of publication:
**19.10.2022 Bulletin 2022/42**

(21) Application number: **21305501.5**

(22) Date of filing: **15.04.2021**

(51) International Patent Classification (IPC):
**C08K 3/34** *(2006.01)*　　　**C01B 33/22** *(2006.01)*
**C09C 1/30** *(2006.01)*

(52) Cooperative Patent Classification (CPC):
(C-Sets available)
**C01B 33/22; C08K 3/346; C09C 1/3018;**
C01P 2004/51; C01P 2006/12; C01P 2006/60;
C01P 2006/62; C01P 2006/63; C01P 2006/64;
C08K 2201/005; C08K 2201/006　　　(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ImerTech SAS**
**75015 Paris (FR)**

(72) Inventors:
• **BERJEAUD, Anaïs**
　**31000 Toulouse (FR)**
• **MELI, Gilles**
　**31410 La Fauga (FR)**

(74) Representative: **Haseltine Lake Kempner LLP**
**Redcliff Quay**
**120 Redcliff Street**
**Bristol BS1 6HU (GB)**

(54) **TALC PARTICULATES**

(57)　A microcrystalline talc particulate having a BET specific surface area no less than about 35 $m^2$/g and one or both of: (a) a $d_{50}$, by Sedigraph, no greater than about 2.0 $\mu$m; and (b) a $d_{50}$, by laser, no greater than about 5.0 $\mu$m.

EP 4 074 772 A1

(52) Cooperative Patent Classification (CPC): (Cont.)

C-Sets
**C08K 3/346, C08L 9/06**

**Description**

**TECHNICAL FIELD**

The present disclosure concerns talc particulates, methods for preparing talc particulates, polymer compositions comprising talc particulates, methods of making polymer compositions comprising talc particulates, and associated uses of, and methods of using, talc particulates in polymer compositions.

**BACKGROUND**

Polymer compositions are commonly reinforced with filler materials. Elastomeric polymer compositions (such as rubbers), in particular, are commonly reinforced with filler materials such as precipitated silica or carbon black. Such filler materials are used to improve properties such as the tensile strength, elongation at break and tear resistance of the polymer composition.

An important mechanical property of elastomeric polymer compositions is the reinforcement index $M_{300}/M_{100}$, which is the ratio of the tensile modulus at 300 % elongation to the tensile modulus at 100 % elongation. Reinforcing fillers such as precipitated silica and carbon black tend to increase $M_{300}/M_{100}$. However, such materials also tend to increase the viscosity of the elastomeric polymeric composition, which is undesirable, and they can be expensive, particularly if they require coating with, e.g. silanes, before incorporation into the polymer.

Talc particulates have also been developed as reinforcing fillers for polymer compositions. However, commercially available talc particulates have so far not been able to achieve reinforcing properties at the same level as precipitated silica or carbon black.

**SUMMARY**

According to a first aspect, a (e.g. microcrystalline) talc particulate has a BET specific surface area no less than about 35 $m^2/g$ and one or both of: (a) a dso, by Sedigraph, no greater than about 2.0 $\mu m$; and (b) a dso, by laser, no greater than about 5.0 $\mu m$.

According to a second aspect, a method for preparing the (e.g. microcrystalline) talc particulate according to the first aspect comprises: (a) dry milling a (e.g. microcrystalline) talc feed material in a stirred bead mill to produce a milled (e.g. microcrystalline) talc material; and (b) classifying the milled (e.g. microcrystalline) talc material to remove a coarse fraction.

According to a third aspect, a polymer composition comprises the (e.g. microcrystalline) talc particulate according to the first aspect.

According to a fourth aspect, a method of making the polymer composition according to the third aspect comprises combining a polymer or polymer precursors with the (e.g. microcrystalline) talc particulate according to the first aspect.

According to a fifth aspect, there is provided a use of the (e.g. microcrystalline) talc particulate according to the first aspect in a polymer composition to:

(a) increase the modulus at 50% elongation, $M_{50}$, of the polymer composition;
(b) increase the modulus at 100% elongation, $M_{100}$, of the polymer composition;
(c) increase the modulus at 300% elongation, $M_{300}$, of the polymer composition;
(d) increase the abrasion resistance of the polymer composition;
(e) increase the reinforcement index $M_{300}/M_{100}$ of the polymer composition;
(f) increase the tensile strength of the polymer composition; and/or
(g) increase the tear resistance of the polymer composition;

as compared to a polymer composition comprising the same amount of a talc particulate not according to the present invention.

According to a sixth aspect, there is provided a method of:

(a) increasing the modulus at 50% elongation, $M_{50}$, of a polymer composition;
(b) increasing the modulus at 100% elongation, $M_{100}$, of the polymer composition;
(c) increasing the modulus at 300% elongation, $M_{300}$, of the polymer composition;
(d) increasing the abrasion resistance of the polymer composition;
(e) increasing the reinforcement index $M_{300}/M_{100}$ of the polymer composition;
(f) increasing the tensile strength of the polymer composition; and/or

(e) increasing the tear resistance of the polymer composition;

as compared to a reference polymer composition comprising a reference amount of a talc particulate not according to the present invention, wherein the method comprises adding the (e.g. microcrystalline) talc particulate according to the first aspect to the polymer composition in the reference amount.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

## FIGURES

Embodiments will now be described by way of example only, with reference to the Figures, in which:

**Figure 1** is a schematic illustration of a milling/classifying circuit for making a talc particulate;

**Figure 2** is a plot of crystallinity index (N(TOT)/BET specific surface area) for example talc particulates Ex. 1 and Ex. 2 and reference talc particulates T. 1, T. 2, T. 3 and T. 4;

**Figure 3** is a plot of tensile strength for filled rubber formulations F. 7 to F. 12;

**Figure 4** is a plot of elongation at break for filled rubber formulations F. 7 & to F. 12;

**Figure 5** is a plot of tear resistance for filled rubber formulations F. 7 to F. 12;

**Figure 6** is a plot of compression set after 22 hours at 70°C for filled rubber formulations F. 7 to F. 12; and

**Figure 7** is a plot of weight of water adsorption as a function of relative humidity for talc particulates A to D.

## DETAILED DESCRIPTION OF THE INVENTION

It has surprisingly been found that a talc particulate combining a relatively high BET specific surface area with a relatively low particle size is particularly effective at reinforcing polymer compositions such as elastomeric polymer compositions.

*Talc particulate*

As used herein, the term "talc" means either the magnesium silicate mineral, or the mineral chlorite (magnesium aluminium silicate), or a mixture of the two, optionally associated with other minerals, for example, dolomite, calcite and/or magnesite, or furthermore, synthetic talc, also known as talcose.

In certain embodiments, the talc is the magnesium silicate mineral or the mineral chlorite, or a mixture thereof. Optionally, the talc may further include dolomite, calcite or magnesite, or combinations thereof. The total amount of other minerals such as dolomite, calcite and/or magnesite in the talc may be less than about 25 % by weight, based on the total weight of talc, for example, less than about 20 % by weight, or less than about 15 % by weight, or less than about 10 % by weight, or less than about 5 % by weight, or less than about 1 % by weight, or less than about 0.75 % by weight, or 0.5 % by weight or less, based on the total weight of talc. In certain embodiments, the talc comprises, consists essentially of, or consists of magnesium silicate mineral. In certain embodiments, the talc is a mixture of magnesium silicate mineral and/or chlorite. The chlorite may, for example, comprise, consist essentially of, or consist of clinochlore $((Mg,Fe^{2+})_5Al(Si_3Al)O_{10}(OH)_8)$. For example, the chlorite may comprise primarily clinochlore. The weight ratio of magnesium silicate mineral to chlorite may be from about 5:1 to about 1:4, for example, from about 4:1 to about 1:1, or from about 4:1 to about 2:1, or from about 4:1 to about 2.5:1, or from about 4:1 to about 3:1, or about 2:1, or about 3:1, or about 4:1. In certain embodiments, the talc comprises, consists essentially of, or consists of synthetic talc or talcose.

In certain embodiments, the talc is a hydroxylated magnesium silicate, which belongs to the family of layered phyllosilicates. Its elemental structure consists of $MgO_4(OH)$ octahedral layers (named "O") sandwiched between 6 ring silica tetrahedron $SiO_2$ (named "T"). This forms a repeating base unit made of TOT layers. These TOT layers will then pile up along c* axis to form a crystallite with a coherent crystalline structure whose size can be measured.

BET specific surface area refers to the area of the surface of the particles of the talc particulate with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277). Details of the BET specific surface area measurement method used in the preparation of the present application are set out in the Examples.

Particle size properties may be measured in a well-known manner by sedimentation of the particulate filler or material in a fully dispersed condition in an aqueous medium using a Sedigraph 5100 machine as supplied by Micromeritics Instruments Corporation, Norcross, Georgia, USA (web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that $d_{50}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by weight of the particles which have an equivalent spherical diameter less than that $d_{98}$, $d_{90}$, $d_{75}$, $d_{25}$ or $d_{10}$ value.

Particle size properties may also be measured by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer S or a Malvern Mastersizer 2000 (as supplied by Malvern instruments), provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by volume of the particles which have an equivalent spherical diameter less than that $d_{50}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by volume of the particles which have an equivalent spherical diameter less than that $d_{98}$, $d_{90}$, $d_{75}$, $d_{25}$ or $d_{10}$ value. For the avoidance of doubt, the measurement of particle size using laser light scattering is not an equivalent method to the sedimentation method referred to above.

Details of the Sedigraph and laser particle size measurement methods used in the preparation of the present application are set out in the Examples.

Particle size properties may also be measured by sieve analysis, as is well known in the art, for example using an electromagnetic vibratory sieve shaker. A suitable electromagnetic vibratory sieve shaker is the D0407.2 available from Controlab, France.

The talc particulate is preferably a microcrystalline talc (i.e. not macrocrystalline talc). The crystalline structure of talc (e.g. whether the talc is microcrystalline or macrocrystalline) may be characterized in terms of the number of TOT layers in the talc particles and the talc particle size and/or surface area.

The number of TOT layers of the talc particulate may be determined by X-Ray Diffraction (XRD) and applying the Scherrer equation on the (002) and (006) peaks of the pattern.

For example, XRD patterns may be acquired using a PAnalytical X'PRO X-Ray diffractometer using a CuKα radiation of a wavelength of $\lambda$ = 1.5406 Å. The samples are obtained by filling an aluminium holder in order to obtain a quasi-random orientation. An example of acquisition parameters can be in the $2\theta$ range = 8 - 80° with a step size of 0.01° and a step duration of 2 s. The Scherrer equation is then applied on the (002) and (006) peaks of the talc pattern which are located at approximately $2\theta$ = 9.3 - 9.7° and $2\theta$ = 28.3 - 28.9° on the XRD pattern. This formula uses the width of the peak at half height relative to the background line in order to calculate the coherent scattering domain of the talc crystallite according the c* axis. Then, the number of TOT layers in a single talc crystallite can be deduced. This method is implemented in a paper on synthetic talc (Dumas et a/., Angewandte Chemie International Edition 2016, 55, 9868 -9871), the contents of which are incorporated herein by reference.

The Scherrer equation is expressed as follows:

$$L = \frac{\lambda \times 0.91}{FWHM \times cos\theta}$$

where:

L is the coherent scattering domain (CSD c*) (Å);
$\lambda$ is the wavelength of the X-Ray beam (Å);
FWHM is the full width at half maximum of the considered diffraction peak (rad); and
$\theta$ is the position of the diffraction peak (rad).

From this coherent scattering domain, it is possible to deduce the number of TOT layers (N(TOT)) that are stacked in the coherent scattering domain:

$$N(TOT) = \frac{L}{d}$$

where:

L is the coherent scattering domain along c* axis (Å); and
d is the height of a talc elementary unit, i.e. the d(002) spacing.

d is calculated using the position of the (002) peak on the XRD pattern and the Bragg formula:

$$d = \frac{n\lambda}{2sin\theta}$$

where:

n is the diffraction order;
$\lambda$ is the wavelength of the X-Ray beam (Å); and
$\theta$ is the position of the diffraction peak (rad).

A crystallinity index, CI, may be defined as the ratio of the number of TOT layers per coherent scattering domain, N(TOT), to the BET specific surface area, BET SSA, in $m^2$/g:

$$CI = \frac{N(TOT)}{BET\ SSA}$$

A microcrystalline talc is a talc having a value of CI no greater than about 7.5 $g/m^2$.

The talc particulate (e.g. microcrystalline talc particulate) may have a crystallinity index, CI, no greater than about 7.5 $g/m^2$, for example, no greater than about 7.0 $g/m^2$, or no greater than about 6.0 $g/m^2$, or no greater than about 5.0 $g/m^2$, or no greater than about 4.0 $g/m^2$, or no greater than about 3.0 $g/m^2$, or no greater than about 2.0 $g/m^2$, or no greater than about 1.5 $g/m^2$. The talc particulate (e.g. microcrystalline talc particulate) may have a crystallinity index, CI, no less than about 0.01 $g/m^2$, for example, no less than about 0.1 $g/m^2$, or no less than about 0.5 $g/m^2$. The talc particulate (e.g. microcrystalline talc particulate) may have a crystallinity index, CI, from about 0.01 $g/m^2$ to about 7.5 $g/m^2$, or from about 0.01 $g/m^2$ to about 7.0 $g/m^2$, or from about 0.01 $g/m^2$ to about 6.0 $g/m^2$, or from about 0.01 $g/m^2$ to about 5.0 $g/m^2$, or from about 0.01 $g/m^2$ to about 4.0 $g/m^2$, or from about 0.01 $g/m^2$ to about 3.0 $g/m^2$, or from about 0.01 $g/m^2$ to about 2.0 $g/m^2$, or from about 0.01 $g/m^2$ to about 1.5 $g/m^2$, or from about 0.1 $g/m^2$ to about 7.5 $g/m^2$, or from about 0.1 $g/m^2$ to about 6.0 $g/m^2$, or from about 0.1 $g/m^2$ to about 4.0 $g/m^2$, or from about 0.1 $g/m^2$ to about 2.0 $g/m^2$, or from about 0.5 $g/m^2$ to about 7.5 $g/m^2$, or from about 0.5 $g/m^2$ to about 6.0 $g/m^2$, or from about 0.5 $g/m^2$ to about 4.0 $g/m^2$, or from about 0.5 $g/m^2$ to about 2.0 $g/m^2$.

The talc particulate (e.g. microcrystalline talc particulate) may have a BET specific surface area of no less than about 35 $m^2$/g, for example, no less than about 36 $m^2$/g, or no less than about 37 $m^2$/g, or no less than about 38 $m^2$/g, or no less than about 39 $m^2$/g, or no less than about 40 $m^2$/g, or no less than about 41 $m^2$/g, or no less than about 42 $m^2$/g, or no less than about 43 $m^2$/g, or no less than about 44 $m^2$/g, or no less than about 45 $m^2$/g, or no less than about 46 $m^2$/g, or no less than about 47 $m^2$/g, or no less than about 48 $m^2$/g. The talc particulate (e.g. microcrystalline talc particulate) may have a BET specific surface area no greater than about 150 $m^2$/g, for example, no greater than about 100 $m^2$/g, or no greater than about 80 $m^2$/g, or no greater than about 60 $m^2$/g, or no greater than about 50 $m^2$/g, or no greater than about 49 $m^2$/g, or no greater than about 45 $m^2$/g, or no greater than about 44 $m^2$/g, or no greater than about 43 $m^2$/g. The talc particulate (e.g. microcrystalline talc particulate) may have a BET specific surface area from about 35 $m^2$/g to about 150 $m^2$/g, for example, from about 36 $m^2$/g to about 150 $m^2$/g, or from about 37 $m^2$/g to about 150 $m^2$/g, or from about 38 $m^2$/g to about 150 $m^2$/g, or from about 39 $m^2$/g to about 150 $m^2$/g, or from about 40 $m^2$/g to about 150 $m^2$/g, or from about 41 $m^2$/g to about 150 $m^2$/g, or from about 42 $m^2$/g to about 150 $m^2$/g, or from about 43 $m^2$/g to about 150 $m^2$/g, or from about 44 $m^2$/g to about 150 $m^2$/g, or from about 45 $m^2$/g to about 150 $m^2$/g, or from about 46 $m^2$/g to about 150 $m^2$/g, or from about 47 $m^2$/g to about 150 $m^2$/g, or from about 48 $m^2$/g to about 150 $m^2$/g, or from about 35 $m^2$/g to about 100 $m^2$/g, or from about 36 $m^2$/g to about 100 $m^2$/g, or from about 37 $m^2$/g to about 100 $m^2$/g, or from about 38 $m^2$/g to about 100 $m^2$/g, or from about 39 $m^2$/g to about 100 $m^2$/g, or from about 40 $m^2$/g to about 100 $m^2$/g, or from about 41 $m^2$/g to about 100 $m^2$/g, or from about 42 $m^2$/g to about 100 $m^2$/g, or from about 43 $m^2$/g to about 100

$m^2/g$, or from about 44 $m^2/g$ to about 100 $m^2/g$, or from about 45 $m^2/g$ to about 100 $m^2/g$, or from about 46 $m^2/g$ to about 100 $m^2/g$, or from about 47 $m^2/g$ to about 100 $m^2/g$, or from about 48 $m^2/g$ to about 100 $m^2/g$, or from about 35 $m^2/g$ to about 80 $m^2/g$, or from about 36 $m^2/g$ to about 80 $m^2/g$, or from about 37 $m^2/g$ to about 80 $m^2/g$, or from about 38 $m^2/g$ to about 80 $m^2/g$, or from about 39 $m^2/g$ to about 80 $m^2/g$, or from about 40 $m^2/g$ to about 80 $m^2/g$, or from about 41 $m^2/g$ to about 80 $m^2/g$, or from about 42 $m^2/g$ to about 80 $m^2/g$, or from about 43 $m^2/g$ to about 80 $m^2/g$, or from about 44 $m^2/g$ to about 80 $m^2/g$, or from about 45 $m^2/g$ to about 80 $m^2/g$, or from about 46 $m^2/g$ to about 80 $m^2/g$, or from about 47 $m^2/g$ to about 150 $m^2/g$, or from about 48 $m^2/g$ to about 80 $m^2/g$, or from about 35 $m^2/g$ to about 60 $m^2/g$, or from about 36 $m^2/g$ to about 60 $m^2/g$, or from about 37 $m^2/g$ to about 60 $m^2/g$, or from about 38 $m^2/g$ to about 60 $m^2/g$, or from about 39 $m^2/g$ to about 60 $m^2/g$, or from about 40 $m^2/g$ to about 60 $m^2/g$, or from about 41 $m^2/g$ to about 60 $m^2/g$, or from about 42 $m^2/g$ to about 60 $m^2/g$, or from about 43 $m^2/g$ to about 60 $m^2/g$, or from about 44 $m^2/g$ to about 60 $m^2/g$, or from about 45 $m^2/g$ to about 60 $m^2/g$, or from about 46 $m^2/g$ to about 60 $m^2/g$, or from about 47 $m^2/g$ to about 60 $m^2/g$, or from about 48 $m^2/g$ to about 60 $m^2/g$, or from about 35 $m^2/g$ to about 50 $m^2/g$, or from about 36 $m^2/g$ to about 50 $m^2/g$, or from about 37 $m^2/g$ to about 50 $m^2/g$, or from about 38 $m^2/g$ to about 50 $m^2/g$, or from about 39 $m^2/g$ to about 50 $m^2/g$, or from about 40 $m^2/g$ to about 50 $m^2/g$, or from about 41 $m^2/g$ to about 50 $m^2/g$, or from about 42 $m^2/g$ to about 50 $m^2/g$, or from about 43 $m^2/g$ to about 50 $m^2/g$, or from about 44 $m^2/g$ to about 50 $m^2/g$, or from about 45 $m^2/g$ to about 50 $m^2/g$, or from about 46 $m^2/g$ to about 50 $m^2/g$, or from about 47 $m^2/g$ to about 50 $m^2/g$, or from about 48 $m^2/g$ to about 50 $m^2/g$, or from about 35 $m^2/g$ to about 49 $m^2/g$, or from about 36 $m^2/g$ to about 49 $m^2/g$, or from about 37 $m^2/g$ to about 49 $m^2/g$, or from about 38 $m^2/g$ to about 49 $m^2/g$, or from about 39 $m^2/g$ to about 49 $m^2/g$, or from about 40 $m^2/g$ to about 49 $m^2/g$, or from about 41 $m^2/g$ to about 49 $m^2/g$, or from about 42 $m^2/g$ to about 49 $m^2/g$, or from about 43 $m^2/g$ to about 49 $m^2/g$, or from about 44 $m^2/g$ to about 49 $m^2/g$, or from about 45 $m^2/g$ to about 49 $m^2/g$, or from about 46 $m^2/g$ to about 49 $m^2/g$, or from about 47 $m^2/g$ to about 49 $m^2/g$, or from about 48 $m^2/g$ to about 49 $m^2/g$, or from about 35 $m^2/g$ to about 45 $m^2/g$, or from about 36 $m^2/g$ to about 45 $m^2/g$, or from about 37 $m^2/g$ to about 45 $m^2/g$, or from about 38 $m^2/g$ to about 45 $m^2/g$, or from about 39 $m^2/g$ to about 45 $m^2/g$, or from about 40 $m^2/g$ to about 45 $m^2/g$, or from about 41 $m^2/g$ to about 45 $m^2/g$, or from about 42 $m^2/g$ to about 45 $m^2/g$, or from about 43 $m^2/g$ to about 45 $m^2/g$, or from about 44 $m^2/g$ to about 45 $m^2/g$, or from about 35 $m^2/g$ to about 44 $m^2/g$, or from about 36 $m^2/g$ to about 44 $m^2/g$, or from about 37 $m^2/g$ to about 44 $m^2/g$, or from about 38 $m^2/g$ to about 44 $m^2/g$, or from about 39 $m^2/g$ to about 44 $m^2/g$, or from about 40 $m^2/g$ to about 44 $m^2/g$, or from about 41 $m^2/g$ to about 44 $m^2/g$, or from about 42 $m^2/g$ to about 44 $m^2/g$, or from about 43 $m^2/g$ to about 44 $m^2/g$, or from about 35 $m^2/g$ to about 43 $m^2/g$, or from about 36 $m^2/g$ to about 43 $m^2/g$, or from about 37 $m^2/g$ to about 43 $m^2/g$, or from about 38 $m^2/g$ to about 43 $m^2/g$, or from about 39 $m^2/g$ to about 43 $m^2/g$, or from about 40 $m^2/g$ to about 43 $m^2/g$, or from about 41 $m^2/g$ to about 43 $m^2/g$.

The talc particulate (e.g. microcrystalline talc particulate) may have a $d_{50}$, by Sedigraph, no greater than about 2.0 $\mu$m, for example, no greater than about 1.5 $\mu$m, or no greater than about 1.0 $\mu$m, or no greater than about 0.9 $\mu$m, or no greater than about 0.8 $\mu$m, or no greater than about 0.7 $\mu$m, or no greater than about 0.6 $\mu$m, or no greater than about 0.5 $\mu$m. The talc particulate (e.g. microcrystalline talc particulate) may have a $d_{50}$, by Sedigraph, no less than about 0.1 $\mu$m, for example, no less than about 0.3 $\mu$m, or no less than about 0.4 $\mu$m, or no less than about 0.5 $\mu$m. The talc particulate (e.g. microcrystalline talc particulate) may have a $d_{50}$, by Sedigraph, from about 0.1 $\mu$m to about 2.0 $\mu$m, for example, from about 0.1 $\mu$m to about 1.5 $\mu$m, or from about 0.1 $\mu$m to about 1.0 $\mu$m, or from about 0.1 $\mu$m to about 0.9 $\mu$m, or from about 0.1 $\mu$m to about 0.8 $\mu$m, or from about 0.1 $\mu$m to about 0.7 $\mu$m, or from about 0.1 $\mu$m to about 0.6 $\mu$m, or from about 0.1 $\mu$m to about 0.5 $\mu$m, or from about 0.3 $\mu$m to about 2.0 $\mu$m, or from about 0.3 $\mu$m to about 1.5 $\mu$m, or from about 0.3 $\mu$m to about 1.0 $\mu$m, or from about 0.3 $\mu$m to about 0.9 $\mu$m, or from about 0.3 $\mu$m to about 0.8 $\mu$m, or from about 0.3 $\mu$m to about 0.7 $\mu$m, or from about 0.3 $\mu$m to about 0.6 $\mu$m, or from about 0.3 $\mu$m to about 0.5 $\mu$m, or from about 0.4 $\mu$m to about 2.0 $\mu$m, or from about 0.4 $\mu$m to about 1.5 $\mu$m, or from about 0.4 $\mu$m to about 1.0 $\mu$m, or from about 0.4 $\mu$m to about 0.9 $\mu$m, or from about 0.4 $\mu$m to about 0.8 $\mu$m, or from about 0.4 $\mu$m to about 0.7 $\mu$m, or from about 0.4 $\mu$m to about 0.6 $\mu$m, or from about 0.4 $\mu$m to about 0.5 $\mu$m, or from about 0.5 $\mu$m to about 2.0 $\mu$m, or from about 0.5 $\mu$m to about 1.5 $\mu$m, or from about 0.5 $\mu$m to about 1.0 $\mu$m, or from about 0.5 $\mu$m to about 0.9 $\mu$m, or from about 0.5 $\mu$m to about 0.8 $\mu$m, or from about 0.5 $\mu$m to about 0.7 $\mu$m.

The talc particulate (e.g. microcrystalline talc particulate) may have a $d_{50}$, by laser, no greater than about 5.0 $\mu$m, for example, no greater than about 4.0 $\mu$m, or no greater than about 3.0 $\mu$m, or no greater than about 2.9 $\mu$m, or no greater than about 2.8 $\mu$m, or no greater than about 2.7 $\mu$m, or no greater than about 2.6 $\mu$m, or no greater than about 2.5 $\mu$m, or no greater than about 2.4 $\mu$m. The talc particulate (e.g. microcrystalline talc particulate) may have a $d_{50}$, by laser, no less than about 1.0 $\mu$m, for example, no less than about 1.5 $\mu$m, or no less than about 2.0 $\mu$m, or no less than about 2.4 $\mu$m. The talc particulate (e.g. microcrystalline talc particulate) may have a $d_{50}$, by laser, from about 1.0 $\mu$m to about 5.0 $\mu$m, for example, from about 1.0 $\mu$m to about 4.0 $\mu$m, or from about 1.0 $\mu$m to about 3.0 $\mu$m, or from about 1.0 $\mu$m to about 2.9 $\mu$m, or from about 1.0 $\mu$m to about 2.8 $\mu$m, or from about 1.0 $\mu$m to about 2.7 $\mu$m, or from about 1.0 $\mu$m to about 2.6 $\mu$m, or from about 1.0 $\mu$m to about 2.5 $\mu$m, or from about 1.0 $\mu$m to about 2.4 $\mu$m, or from about 1.5 $\mu$m to about 5.0 $\mu$m, or from about 1.5 $\mu$m to about 4.0 $\mu$m, or from about 1.5 $\mu$m to about 3.0 $\mu$m, or from about 1.5 $\mu$m to about 2.9 $\mu$m, or from about 1.5 $\mu$m to about 2.8 $\mu$m, or from about 1.5 $\mu$m to about 2.7 $\mu$m, or

from about 1.5 μm to about 2.6 μm, or from about 1.5 μm to about 2.5 μm, or from about 1.5 μm to about 2.4 μm, or from about 2.0 μm to about 5.0 μm, or from about 2.0 μm to about 4.0 μm, or from about 2.0 μm to about 3.0 μm, or from about 2.0 μm to about 2.9 μm, or from about 2.0 μm to about 2.8 μm, or from about 2.0 μm to about 2.7 μm, or from about 2.0 μm to about 2.6 μm, or from about 2.0 μm to about 2.5 μm, or from about 2.0 μm to about 2.4 μm, or from about 2.4 μm to about 5.0 μm, or from about 2.4 μm to about 4.0 μm, or from about 2.4 μm to about 3.0 μm, or from about 2.4 μm to about 2.9 μm, or from about 2.4 μm to about 2.8 μm, or from about 2.4 μm to about 2.7 μm, or from about 2.4 μm to about 2.6 μm.

The talc particulate (e.g. microcrystalline talc particulate) may have a $d_{95}$, by laser, no greater than about 10.0 μm, for example, no greater than about 7.0 μm, or no greater than about 6.0 μm, or no greater than about 5.0 μm. The talc particulate (e.g. microcrystalline talc particulate) may have a $d_{95}$, by laser, no less than about 3.0 μm, for example, no less than about 4.0 μm, or no less than about 5 μm. The talc particulate (e.g. microcrystalline talc particulate) may have a $d_{95}$, by laser, from about 3.0 μm to about 10.0 μm, for example, from about 3.0 μm to about 7.0 μm, or from about 3.0 μm to about 6.0 μm, or from about 3.0 μm to about 5.0 μm, or from about 4.0 μm to about 10.0 μm, or from about 4.0 μm to about 7.0 μm, or from about 4.0 μm to about 6.0 μm, or from about 4.0 μm to about 5.0 μm, or from about 5.0 μm to about 10.0 μm, or from about 5.0 μm to about 7.0 μm, or from about 5.0 μm to about 6.0 μm.

The talc particulate (e.g. microcrystalline talc particulate) may have a $d_{75}$, by laser, no greater than about 7.0 μm, for example, no greater than about 5.0 μm, or no greater than about 4.0 μm. The talc particulate (e.g. microcrystalline talc particulate) may have a $d_{75}$, by laser, no less than about 2.0 μm, for example, no less than about 3.0 μm. The talc particulate (e.g. microcrystalline talc particulate) may have a $d_{75}$, by laser, from about 2.0 μm to about 7.0 μm, for example, from about 2.0 μm to about 5.0 μm, or from about 2.0 μm to about 4.0 μm, or from about 3.0 μm to about 7.0 μm, or from about 3.0 μm to about 5.0 μm, or from about 3.0 μm to about 4.0 μm.

The talc particulate (e.g. microcrystalline talc particulate) may have a $d_{25}$, by laser, no greater than about 3.0 μm, for example, no greater than about 2.0 μm, or no greater than about 1.9 μm, or no greater than about 1.8 μm. The talc particulate (e.g. microcrystalline talc particulate) may have a $d_{25}$, by laser, no less than about 0.5 μm, for example, no less than about 1.0 μm, or no less than about 1.5 μm, or no less than about 1.7 μm. The talc particulate (e.g. microcrystalline talc particulate) may have a $d_{25}$, by laser, from about 0.5 μm to about 3.0 μm, for example, from about 0.5 μm to about 2.0 μm, or from about 0.5 μm to about 1.9 μm, or from about 0.5 μm to about 1.8 μm, or from about 1.0 μm to about 3.0 μm, or from about 1.0 μm to about 2.0 μm, or from about 1.0 μm to about 1.9 μm, or from about 1.0 μm to about 1.8 μm, or from about 1.5 μm to about 3.0 μm, or from about 1.5 μm to about 2.0 μm, or from about 1.5 μm to about 1.9 μm, or from about 1.5 μm to about 1.8 μm, or from about 1.7 μm to about 3.0 μm, or from about 1.7 μm to about 2.0 μm, or from about 1.7 μm to about 1.9 μm, or from about 1.7 μm to about 1.8 μm.

The talc particulate (e.g. microcrystalline talc particulate) may have a $d_{95}$, by Sedigraph, no greater than about 5.0 μm, for example, no greater than about 4.0 μm, or no greater than about 3.0 μm, or no greater than about 2.5 μm, or no greater than about 2.0 μm. The talc particulate (e.g. microcrystalline talc particulate) may have a $d_{95}$, by Sedigraph, no less than about 0.5 μm, for example, no less than about 1.0 μm, or no less than about 1.4 μm, or no less than about 1.7 μm. The talc particulate (e.g. microcrystalline talc particulate) may have a $d_{95}$, by Sedigraph, from about 0.5 μm to about 5.0 μm, for example, from about 0.5 μm to about 4.0 μm, or from about 0.5 μm to about 3.0 μm, or from about 0.5 μm to about 2.5 μm, or from about 0.5 μm to about 2.0 μm, or from about 1.0 μm to about 5.0 μm, or from about 1.0 μm to about 4.0 μm, or from about 1.0 μm to about 3.0 μm, or from about 1.0 μm to about 2.5 μm, or from about 1.0 μm to about 2.0 μm, or from about 1.4 μm to about 5.0 μm, or from about 1.4 μm to about 4.0 μm, or from about 1.4 μm to about 3.0 μm, or from about 1.4 μm to about 2.5 μm, or from about 1.4 μm to about 2.0 μm, or from about 1.7 μm to about 5.0 μm, or from about 1.7 μm to about 4.0 μm, or from about 1.7 μm to about 3.0 μm, or from about 1.7 μm to about 2.5 μm, or from about 1.7 μm to about 2.0 μm.

The talc particulate (e.g. microcrystalline talc particulate) may have a $d_{75}$, by Sedigraph, no greater than about 3.0 μm, for example, no greater than about 2.0 μm, or no greater than about 1.5 μm, or no greater than about 1.1 μm, or no greater than about 1.0 μm. The talc particulate (e.g. microcrystalline talc particulate) may have a $d_{75}$, by Sedigraph, no less than about 0.1 μm, for example, no less than about 0.5 μm, or no less than about 0.8 μm, or no less than about 1.0 μm. The talc particulate (e.g. microcrystalline talc particulate) may have a $d_{75}$, by Sedigraph, from about 0.1 μm to about 3.0 μm, for example, from about 0.1 μm to about 2.0 μm, or from about 0.1 μm to about 1.5 μm, or from about 0.1 μm to about 1.1 μm, or from about 0.1 μm to about 1.0 μm, or from about 0.5 μm to about 3.0 μm, or from about 0.5 μm to about 2.0 μm, or from about 0.5 μm to about 1.5 μm, or from about 0.5 μm to about 1.1 μm, or from about 0.5 μm to about 1.0 μm, or from about 0.8 μm to about 3.0 μm, or from about 0.8 μm to about 2.0 μm, or from about 0.8 μm to about 1.5 μm, or from about 0.8 μm to about 1.1 μm, or from about 0.8 μm to about 1.0 μm, or from about 1.0 μm to about 3.0 μm, or from about 1.0 μm to about 2.0 μm, or from about 1.0 μm to about 1.5 μm, or from about 1.0 μm to about 1.1 μm.

The talc particulate (e.g. microcrystalline talc particulate) may have a $d_{25}$, by Sedigraph, no greater than about 1.0 μm, for example, no greater than about 0.5 μm, or no greater than about 0.4 μm, or no greater than about 0.3 μm. The talc particulate (e.g. microcrystalline talc particulate) may have a $d_{25}$, by Sedigraph, no less than about 0.1, for example, no less than about 0.3 $\mu$m, or no less than about 0.4 $\mu$m. The talc particulate (e.g. microcrystalline talc particulate) may have a $d_{25}$, by Sedigraph, from about 0.1 $\mu$m to about 1.0 $\mu$m, for example, from about 0.1 $\mu$m to about 0.5 $\mu$m, or from about 0.1 $\mu$m to about 0.4 $\mu$m, or from about 0.1 $\mu$m to about 0.3 $\mu$m, or from about 0.3 $\mu$m to about 1.0 $\mu$m, or from about 0.3 $\mu$m to about 0.5 $\mu$m, or from about 0.3 $\mu$m to about 0.4 $\mu$m, or from about 0.4 $\mu$m to about 1.0 $\mu$m, or from about 0.4 $\mu$m to about 0.5 $\mu$m.

The talc particulate (e.g. microcrystalline talc particulate) may have a BET specific surface area no less than about 35 m$^2$/g and one or both of: (a) a $d_{50}$, by Sedigraph, no greater than about 2.0 $\mu$m; and (b) a $d_{50}$, by laser, no greater than about 5.0 $\mu$m.

The talc particulate (e.g. microcrystalline talc particulate) may have a BET specific surface area no less than about 35 m$^2$/g and one or more of: (a) a $d_{50}$, by Sedigraph, no greater than about 2.0 $\mu$m; (b) a $d_{50}$, by laser, no greater than about 5.0 $\mu$m; and (c) a Cl no greater than about 7.5 g/m$^2$, for example, from about 0.01 g/m$^2$ to about 7.5 g/m$^2$, or from about 0.01 g/m$^2$ to about 4.0 g/m$^2$.

The talc particulate (e.g. microcrystalline talc particulate) may have a BET specific surface area no less than about 35 m$^2$/g and one or both of: (a) a $d_{50}$, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about 0.1 $\mu$m to about 1.0 $\mu$m; and (b) a $d_{50}$, by laser, no greater than about 4.0 $\mu$m, for example, no greater than about 3.0 $\mu$m, or from about 1.0 $\mu$m to about 5.0 $\mu$m, for example, from about 1.0 $\mu$m to about 4.0 $\mu$m, or from about 1.0 $\mu$m to about 3.0 $\mu$m.

The talc particulate (e.g. microcrystalline talc particulate) may have a BET specific surface area no less than about 35 m$^2$/g and one or more of: (a) a $d_{50}$, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about 0.1 $\mu$m to about 1.0 $\mu$m; (b) a dso, by laser, no greater than about 4.0 $\mu$m, for example, no greater than about 3.0 $\mu$m, or from about 1.0 $\mu$m to about 5.0 $\mu$m, for example, from about 1.0 $\mu$m to about 4.0 $\mu$m, or from about 1.0 $\mu$m to about 3.0 $\mu$m; and (c) a Cl no greater than about 7.5 g/m$^2$, for example, from about 0.01 g/m$^2$ to about 7.5 g/m$^2$, or from about 0.01 g/m$^2$ to about 4.0 g/m$^2$.

The talc particulate (e.g. microcrystalline talc particulate) may have a BET specific surface area no less than about 40 m$^2$/g and one or both of: (a) a $d_{50}$, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about 0.1 $\mu$m to about 1.0 $\mu$m; and (b) a $d_{50}$, by laser, no greater than about 4.0 $\mu$m, for example, no greater than about 3.0 $\mu$m, or from about 1.0 $\mu$m to about 5.0 $\mu$m, for example, from about 1.0 $\mu$m to about 4.0 $\mu$m, or from about 1.0 $\mu$m to about 3.0 $\mu$m.

The talc particulate (e.g. microcrystalline talc particulate) may have a BET specific surface area no less than about 40 m$^2$/g and one or more of: (a) a dso, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about 0.1 $\mu$m to about 1.0 $\mu$m; (b) a $d_{50}$, by laser, no greater than about 4.0 $\mu$m, for example, no greater than about 3.0 $\mu$m, or from about 1.0 $\mu$m to about 5.0 $\mu$m, for example, from about 1.0 $\mu$m to about 4.0 $\mu$m, or from about 1.0 $\mu$m to about 3.0 $\mu$m; and (c) a Cl no greater than about 7.5 g/m$^2$, for example, from about 0.01 g/m$^2$ to about 7.5 g/m$^2$, or from about 0.01 g/m$^2$ to about 4.0 g/m$^2$.

The talc particulate (e.g. microcrystalline talc particulate) may have: (A) a BET specific surface area no less than about 35 m$^2$/g, for example, no less than about 40 m$^2$/g; (B) one or both of (a) a dso, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about 0.1 $\mu$m to about 1.0 $\mu$m and (b) a dso, by laser, no greater than about 4.0 $\mu$m, for example, no greater than about 3.0 $\mu$m, or from about 1.0 $\mu$m to about 5.0 $\mu$m, for example, from about 1.0 $\mu$m to about 4.0 $\mu$m, or from about 1.0 $\mu$m to about 3.0 $\mu$m; and (C) one or more of (a) a $d_{95}$, by laser, no greater than about 10.0 $\mu$m, for example, no greater than about 7.0 $\mu$m, or from about 4.0 $\mu$m to about 10.0 $\mu$m, or from about 4.0 $\mu$m to about 7.0 $\mu$m, (b) a $d_{75}$, by laser, no greater than about 7.0 $\mu$m, for example, no greater than about 5.0 $\mu$m, or from about 2.0 $\mu$m to about 7.0 $\mu$m, or from about 2.0 $\mu$m to about 5.0 $\mu$m, (c) a $d_{25}$, by laser, no greater than about 3.0 $\mu$m, for example, no greater than about 2.0 $\mu$m, or from about 0.5 $\mu$m to about 3.0 $\mu$m, or from about 0.5 $\mu$m to about 2.0 $\mu$m, (d) a $d_{95}$, by Sedigraph, no greater than about 5.0 $\mu$m, for example, no greater than about 3.0 $\mu$m, or from about 0.5 $\mu$m to about 5.0 $\mu$m, or from about 0.5 $\mu$m to about 3.0 $\mu$m, (e) a $d_{75}$, by Sedigraph, no greater than about 3.0 $\mu$m, for example, no greater than about 2.0 $\mu$m, or from about 0.1 $\mu$m to about 3.0 $\mu$m, or from about 0.1 $\mu$m to about 2.0 $\mu$m and (f) a $d_{25}$, by Sedigraph, no greater than about 1.0 $\mu$m, for example, no greater than about 0.5 $\mu$m, or from about 0.1 $\mu$m to about 1.0 $\mu$m, or from about 0.1 $\mu$m to about 0.5 $\mu$m.

The talc particulate (e.g. microcrystalline talc particulate) may have: (A) a BET specific surface area no less than about 35 m$^2$/g, for example, no less than about 40 m$^2$/g; (B) one or both of (a) a dso, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about 0.1 $\mu$m to about 1.0 $\mu$m and (b) a dso, by laser, no greater than about 4.0 $\mu$m, for example, no greater than about 3.0 $\mu$m, or from about 1.0 $\mu$m to about 5.0 $\mu$m, for example, from about 1.0 $\mu$m

to about 4.0 μm, or from about 1.0 μm to about 3.0 μm; (C) one or more of (a) a $d_{95}$, by laser, no greater than about 10.0 μm, for example, no greater than about 7.0 μm, or from about 4.0 μm to about 10.0 μm, or from about 4.0 μm to about 7.0 μm, (b) a $d_{75}$, by laser, no greater than about 7.0 μm, for example, no greater than about 5.0 μm, or from about 2.0 μm to about 7.0 μm, or from about 2.0 μm to about 5.0 μm, (c) a $d_{25}$, by laser, no greater than about 3.0 μm, for example, no greater than about 2.0 μm, or from about 0.5 μm to about 3.0 μm, or from about 0.5 μm to about 2.0 μm, (d) a $d_{95}$, by Sedigraph, no greater than about 5.0 μm, for example, no greater than about 3.0 μm, or from about 0.5 μm to about 5.0 μm, or from about 0.5 μm to about 3.0 μm, (e) a $d_{75}$, by Sedigraph, no greater than about 3.0 μm, for example, no greater than about 2.0 μm, or from about 0.1 μm to about 3.0 μm, or from about 0.1 μm to about 2.0 μm and (f) a $d_{25}$, by Sedigraph, no greater than about 1.0 μm, for example, no greater than about 0.5 μm, or from about 0.1 μm to about 1.0 μm, or from about 0.1 μm to about 0.5 μm; and (D) a Cl no greater than about 7.5 g/m², for example, from about 0.01 g/m² to about 7.5 g/m², or from about 0.01 g/m² to about 4.0 g/m².

The talc particulate (e.g. microcrystalline talc particulate) may have: a BET specific surface area of from about 40 m²/g to about 45 m²/g; a $d_{95}$, by Sedigraph, from about 1.5 μm to about 2.0 μm and/or a $d_{95}$, by laser, from about 4.5 μm to about 5.2 μm; a $d_{75}$, by Sedigraph, from about 0.8 μm to about 1.2 μm and/or a $d_{75}$, by laser, from about 3.0 μm to about 3.4 μm; a $d_{50}$, by Sedigraph, from about 0.4 μm to about 0.8 μm and/or a $d_{50}$, by laser, from about 2.2 μm to about 2.6 μm; and a $d_{25}$, by Sedigraph, from about 0.1 μm to about 0.5 μm and/or a $d_{25}$, by laser, from about 1.6 μm to about 2.0 μm.

The talc particulate (e.g. microcrystalline talc particulate) may have: a BET specific surface area of from about 40 m²/g to about 45 m²/g; a $d_{95}$, by Sedigraph, from about 1.5 μm to about 2.0 μm and/or a $d_{95}$, by laser, from about 4.5 μm to about 5.2 μm; a $d_{75}$, by Sedigraph, from about 0.8 μm to about 1.2 μm and/or a $d_{75}$, by laser, from about 3.0 μm to about 3.4 μm; a $d_{50}$, by Sedigraph, from about 0.4 μm to about 0.8 μm and/or a $d_{50}$, by laser, from about 2.2 μm to about 2.6 μm; a $d_{25}$, by Sedigraph, from about 0.1 μm to about 0.5 μm and/or a $d_{25}$, by laser, from about 1.6 μm to about 2.0 μm; and a Cl no greater than about 7.5 g/m², for example, from about 0.01 g/m² to about 7.5 g/m², or from about 0.01 g/m²to about 4.0 g/m².

The talc particulate (e.g. microcrystalline talc particulate) may have: a BET specific surface area of from about 45 m²/g to about 50 m²/g; a $d_{95}$, by Sedigraph, from about 1.2 μm to about 1.6 μm and/or a $d_{95}$, by laser, from about 6.0 μm to about 6.5 μm; a $d_{75}$, by Sedigraph, from about 0.5 μm to about 1.0 μm and/or a $d_{75}$, by laser, from about 3.5 μm to about 4.0 μm; a $d_{50}$, by Sedigraph, from about 0.3 μm to about 0.7 μm and/or a $d_{50}$, by laser, from about 2.3 μm to about 2.7 μm; and a $d_{25}$, by Sedigraph, from about 0.1 μm to about 0.5 μm and/or a $d_{25}$, by laser, from about 1.5 μm to about 2.0 μm.

The talc particulate (e.g. microcrystalline talc particulate) may have: a BET specific surface area of from about 45 m²/g to about 50 m²/g; a $d_{95}$, by Sedigraph, from about 1.2 μm to about 1.6 μm and/or a $d_{95}$, by laser, from about 6.0 μm to about 6.5 μm; a $d_{75}$, by Sedigraph, from about 0.5 μm to about 1.0 μm and/or a $d_{75}$, by laser, from about 3.5 μm to about 4.0 μm; a $d_{50}$, by Sedigraph, from about 0.3 μm to about 0.7 μm and/or a $d_{50}$, by laser, from about 2.3 μm to about 2.7 μm; a $d_{25}$, by Sedigraph, from about 0.1 μm to about 0.5 μm and/or a $d_{25}$, by laser, from about 1.5 μm to about 2.0 μm; and a Cl no greater than about 7.5 g/m², for example, from about 0.01 g/m² to about 7.5 g/m², or from about 0.01 g/m²to about 4.0 g/m².

The talc particulate (e.g. microcrystalline talc particulate) may have: a BET specific surface area of from about 38 m²/g to about 44 m²/g; a $d_{95}$, by Sedigraph, from about 1.8 μm to about 2.2 μm and/or a $d_{95}$, by laser, from about 5.0 μm to about 5.8 μm; a $d_{75}$, by Sedigraph, from about 0.8 μm to about 1.5 μm and/or a $d_{75}$, by laser, from about 3.2 μm to about 3.8 μm; a $d_{50}$, by Sedigraph, from about 0.5 μm to about 1.0 μm and/or a $d_{50}$, by laser, from about 2.1 μm to about 2.7 μm; and a $d_{25}$, by Sedigraph, from about 0.2 μm to about 0.7 μm and/or a $d_{25}$, by laser, from about 1.5 μm to about 2.0 μm.

The talc particulate (e.g. microcrystalline talc particulate) may have: a BET specific surface area of from about 38 m²/g to about 44 m²/g; a $d_{95}$, by Sedigraph, from about 1.8 μm to about 2.2 μm and/or a $d_{95}$, by laser, from about 5.0 μm to about 5.8 μm; a $d_{75}$, by Sedigraph, from about 0.8 μm to about 1.5 μm and/or a $d_{75}$, by laser, from about 3.2 μm to about 3.8 μm; a $d_{50}$, by Sedigraph, from about 0.5 μm to about 1.0 μm and/or a $d_{50}$, by laser, from about 2.1 μm to about 2.7 μm; a $d_{25}$, by Sedigraph, from about 0.2 μm to about 0.7 μm and/or a $d_{25}$, by laser, from about 1.5 μm to about 2.0 μm; and a Cl no greater than about 7.5 g/m², for example, from about 0.01 g/m² to about 7.5 g/m², or from about 0.01 g/m² to about 4.0 g/m².

The talc particulate (e.g. microcrystalline talc particulate) may have a water adsorption at 50 % relative humidity of no less than about 0.75 mg/m², for example, no less than about 0.8 mg/m², or no less than about 0.9 mg/m², or no less than about 1.0 mg/m². The talc particulate (e.g. microcrystalline talc particulate) may have a water adsorption at 50 % relative humidity of no greater than about 2.5 mg/m², for example, no greater than about 2.0 mg/m², or no greater than about 1.5 mg/m², or no greater than about 1.25 mg/m². The talc particulate (e.g. microcrystalline talc particulate) may have a water adsorption at 50 % relative humidity from about 0.75 mg/m² to about 2.5 mg/m², for example, from about 0.75 mg/m² to about 2.0 mg/m², or from about 0.75 mg/m² to about 1.5 mg/m², or from about 0.75 mg/m² to about 1.25 mg/m², or from about 0.8 mg/m² to about 2.5 mg/m², or from about 0.8 mg/m² to about 2.0 mg/m², or from about

0.9 mg/m$^2$ to about 1.5 mg/m$^2$, or from about 0.9 mg/m$^2$ to about 1.25 mg/m$^2$, or from about 0.9 mg/m$^2$ to about 2.5 mg/m$^2$, or from about 0.9 mg/m$^2$ to about 2.0 mg/m$^2$, or from about 0.9 mg/m$^2$ to about 1.5 mg/m$^2$, or from about 0.9 mg/m$^2$ to about 1.25 mg/m$^2$, or from about 1.0 mg/m$^2$ to about 2.5 mg/m$^2$, or from about 1.0 mg/m$^2$ to about 2.0 mg/m$^2$, or from about 1.0 mg/m$^2$ to about 1.5 mg/m$^2$, or from about 1.0 mg/m$^2$ to about 1.25 mg/m$^2$.

The talc particulate (e.g. microcrystalline talc particulate) may have a Minolta Y whiteness no less than about 90, for example, no less than about 92, or no less than about 93, or no less than about 94. Minolta Y whiteness may be measured using a spectrophotometer/colorimeter such as the Konica Minolta CM-3700d (available from Konica Minolta Sensing Europe B.V.) with D65 illuminant and color space CIE LAB (1976).

The talc particulate (e.g. microcrystalline talc particulate) may have a CIELAB L* no less than about 95, for example, no less than about 97.

The talc particulate (e.g. microcrystalline talc particulate) may have a CIELAB b* no greater than about 2.0, for example, no greater than about 1.5. The talc particulate (e.g. microcrystalline talc particulate) may have a CIELAB b* no less than about 0.9, for example, no less than about 1.0, or no less than about 1.1. The talc particulate (e.g. microcrystalline talc particulate) may have a CIELAB b* from about 0.9 to about 2.0, for example, from about 0.9 to about 1.5, or from about 1.0 to about 2.0, or from about 1.0 to about 1.5, or from about 1.1 to about 2.0, or from about 1.1 to about 1.5.

L* and b* are the colour component values on the CIE L*a*b* colour space scale. L* is a measure of whiteness. b* is a measure of yellowness. L* and b* can be determined using a spectrophotometer/colorimeter such as the Konica Minolta CM-3700d (available from Konica Minolta Sensing Europe B.V.) with D65 illuminant and color space CIE LAB (1976).

The talc particulate (e.g. microcrystalline talc particulate) may be treated with a surface treatment agent. Surface treated talc (e.g. microcrystalline talc) may, for example, be referred to as coated talc (e.g. microcrystalline talc). Surface treatment of the talc (e.g. microcrystalline talc) may serve to reduce or eliminate aggregation of the talc particulate (e.g. microcrystalline talc particulate) and/or enhance incorporation of the talc particulate (e.g. microcrystalline talc particulate) into a polymer composition.

Suitable surface treatment agents for talc particulates (e.g. microcrystalline talc particulates) include a compound with hydrophobic carbon chains bearing polar radicals, for example, the family of amines, silanes, siloxanes, alcohols or acids and metals salts thereof.

In certain embodiments, the surface treatment agent is a polyether or a derivative thereof, for example, polyether modified polysiloxane. In certain embodiments, the polyether is a polyoxyalkylene (POA), for example, polyalkylene glycol (PAG) or polyalkylene oxide (PAO). As used herein, the term 'polyalkylene glycol' means a POA having a number average molecular mass below 20,000 g/mol, and the term 'polyalkylene oxide' means a POA having a number average molecular mass above 20,000 g/mol. In certain embodiments, the surface treatment agent comprises or is a polyalkylene glycol having a number average molecular mass of from about 100 to about 15,000 g/mo, for example, from about 200 to about 10,000 g/mol, or from about 500 to about 9000 g/mol, or from about 1000 to about 9000 g/mol, or from about 2000 to about 9000 g/mol, or from about 2000 to about 5000 g/mol, or from about 3000 to about 5000 g/mol, or from about 4000 to about 9000 g/mol, or from about 6000 to about 9000 g/mol, or from about 6000 to about 8500 g/mol. In certain embodiments, the polyether is a polyalkylene oxide selected from one or more of paraformaldehyde (polymethylene oxide), polytetramethylene glycol, polytetramehtylene ether glycol, polyethylene oxide, polypropylene oxide, polybutylene oxide, and combinations thereof. In certain embodiments, the surface treatment agent comprises or is polyethylene glycol. In certain embodiments, the surface treatment comprises or is a mixture of polyethylene glycol and polypropylene glycol (PPG). In certain embodiments, the surface treatment agent is polyethylene glycol (PEG) having a number average molecular mass of from about 200 to about 10,000 g/mol, for example, from about 500 to about 9000 g/mol, or from about 1000 to about 9000 g/mol, or from about 2000 to about 9000 g/mol, or from about 2000 to about 5000 g/mol, or from about 3000 to about 5000 g/mol, or from about 4000 to about 9000 g/mol, or from about 6000 to about 9000 g/mol, or from about 6000 to about 8500 g/mol. An exemplary PEG includes the Puriol™ range of polyglycols from BASF, for example, Puriol™ 8005.

In certain embodiments, the surface treatment agent comprises or is a fatty acid, and/or a metal salt thereof, for example, stearic acid or a metal stearate, such as magnesium, calcium or zinc stearate. This includes fatty acids having a carbon chain length from C8 to C24 and mixtures of fatty acids having a carbon chain length from C8 to C24.

Suitable silane based agents are aminosilanes, for example, trimethoxysilyl ethyl amine, triethoxysilyl ethyl amine, tripropoxysilyl ethyl amine, tributoxysilyl ethyl amine, trimethoxysilyl propyl amine, triethoxysilyl propyl amine, tripropoxysilyl propyl amine, triisopropoxysilyl propyl amine, tributoxysilyl propyl amine, trimethoxysilyl butyl amine, triethoxysilyl butyl amine, tripropoxysilyl butyl amine, tributoxysilyl butyl amine, trimethoxysilyl pentyl amine, triethoxysilyl pentyl amine, tripropoxysilyl pentyl amine, tributoxysilyl pentyl amine, trimethoxysilyl hexyl amine, triethoxysilyl hexyl amine, tripropoxysilyl hexyl amine, tributoxysilyl hexyl amine, trimethoxysilyl heptyl amine, triethoxysilyl heptyl amine, tripropoxysilyl heptyl amine, tributoxysilyl heptyl amine, trimethoxysilyl octyl amine, triethoxysilyl octyl amine, tripropoxysilyl octyl amine, tributoxysilyl octyl amine, and the like. Suitable agents having a hydrocarbyl group and a polar group are hydrocarbyl amines such as triethanolamine (TEA), and amino alcohol agents such as 2-amino-2-methyl-1-propanol.

AMP-95® is a commercially available 2-amino-2-methyl-1-propanol formulation containing 5% water. Other suitable agents include 3-thiocyanatopropyl triethoxy silane and bis-(3-triethoxysilylpropyl) tetrasulfane.

The surface treatment agent may be added in an amount effective to achieve the desired result. In certain embodiments, the quantity of surface treatment agent is from about 0.1 % to 5 % by weight with respect to the weight of talc, for example, from about 0.1 % to 2 % by weight with respect to the weight of talc.

Surface treatment agents may be applied by adding to the talc particulate (e.g. microcrystalline talc particulate) and mixing using conventional methods. Surface treatment agents may be applied during preparation of the talc particulate (e.g. microcrystalline talc particulate) from a relative coarse talc (e.g. microcrystalline talc) starting material and before the talc particulate (e.g. microcrystalline talc particulate) is added to a polymer composition.

It may be that less surface treatment agent is required to incorporate the talc particulate (e.g. microcrystalline talc particulate) successfully into a polymer composition than is required to incorporate an equivalent (e.g. the same) quantity (e.g. weight) of silica or carbon black into the same polymer composition.

In some embodiments, the talc particulate (e.g. microcrystalline talc particulate) is not treated with a surface treatment agent at all (i.e. the talc particulate (e.g. microcrystalline talc particulate) is uncoated talc (e.g. microcrystalline talc)).

*Method for making the talc particulate*

The talc particulate (e.g. microcrystalline talc particulate) may be made by: (a) milling a talc feed material (e.g. a microcrystalline talc feed material) to produce a milled talc material (e.g. milled microcrystalline talc material); and (b) classifying the milled talc material (e.g. milled microcrystalline talc material) to remove a coarse fraction.

The talc feed material (e.g. microcrystalline talc feed material) may be dry milled. The talc feed material (e.g. microcrystalline talc feed material) may be (e.g. dry) milled using a stirred mill, for example, a stirred bead mill (i.e. a dry agitated bead mill). The stirred bead mill may be a horizontal stirred bead mill. A suitable stirred bead mill is the NETZSCH Ecutec PAMIR 30 stirred bead mill (available from NETZSCH-Feinmahltechnik GmbH, Germany). The NETZSCH Ecutec PAMIR 30 stirred bead mill has an installed power of 22 kW, an absorbed power of 6 to 8 kW (when used with ceramic beads, for example alumina beads having diameter from about 4 mm to about 6 mm and a bulk density of about 2 kg/L) and an operating speed of 400 rpm.

The talc feed material (e.g. microcrystalline talc feed material) may be (e.g. dry) milled (e.g. in the stirred bead mill) using a grinding medium. For example, the talc feed material (e.g. microcrystalline talc feed material) may be (e.g. dry) milled in the stirred bead mill using grinding media comprising milling beads. The milling beads may have diameters no less than about 2 mm, for example, no less than about 4 mm. The milling beads may have diameters no greater than about 20 mm, for example, no greater than about 15 mm, or no greater than about 10 mm, or no greater than about 8 mm, or no greater than about 6 mm. The milling beads may have diameters from about 2 mm to about 20 mm, for example, from about 2 mm to about 15 mm, or from about 2 mm to about 10 mm, or from about 2 mm to about 8 mm, or from about 2 mm to about 6 mm, or from about 4 mm to about 10 mm, or from about 4 mm to about 8 mm, or from about 4 mm to about 6 mm. The milling beads may be made of ceramic (for example alumina or stabilized zirconia, for example cerium- or yttrium-stabilized zirconia), plastic or metal (for example, steel). The grinding medium may have a Media Volume Ratio (MVR), which is the ratio of the milling bead volume over the total volume of the grinding medium, from about 20 % to about 80 %.

The stirred mill (e.g. the stirred bead mill) may be operated at a speed no less than about 100 rpm, for example, no less than about 200 rpm, or no less than about 300 rpm, or no less than about 400 rpm. The stirred mill (e.g. the stirred bead mill) may be operated at a speed no greater than about 1000 rpm, for example, no greater than about 600 rpm, or no greater than about 500 rpm, or no greater than about 400 rpm. The stirred mill (e.g. the stirred bead mill) may be operated at a speed from about 100 rpm to about 1000 rpm, for example, from about 200 rpm to about 600 rpm, or from about 300 rpm to about 500 rpm, for example about 400 rpm.

The stirred mill (e.g. the stirred bead mill) may be operated with a specific grinding energy of no less than about 100 kWh/t, for example, no less than about 200 kWh/t, or no less than about 300 kWh/t, or no less than about 400 kWh/t, or no less than about 500 kWh/t. The stirred mill (e.g. the stirred bead mill) may be operated with a specific grinding energy of no greater than about 1000 kWh/t, for example, no greater than about 900 kWh/t, or no greater than about 800 kWh/t, or no greater than about 700 kWh/t, or no greater than about 600 kWh/t, or no greater than about 500 kWh/t, or no greater than about 400 kWh/t. The stirred mill (e.g. the stirred bead mill) may be operated with a specific grinding energy from about 100 kWh/t to about 800 kWh/t, for example, from about 200 kWh/t to about 700 kWh/t, or from about 300 kWh/t to about 600 kWh/t, or from about 300 kWh/t to about 400 kWh/t, or from about 500 kWh/t to about 600 kWh/t.

Classification refers to a process in which particles of the milled talc material (e.g. milled microcrystalline talc material) are separated by size. Classification may, for example, take place by any suitable method including, for example, air classification, sieve analysis and sedimentation. The classification may, for example, be dry classification. Preferably, the milled talc material (e.g. milled microcrystalline talc material) is classified using air classification. A suitable air classifier is the NETZSCH Ecutec BORA 50 turbo air classifier (available from NETZSCH-Feinmahltechnik GmbH, Germany). The NETZSCH Ecutec BORA 50 turbo air classifier has a maximum air flow of 1800 $m^3/h$, a maximum rotor speed of 8700 rpm, an installed power of 10 kW, a feed rate of up to 1800 kg/h and a main fan installed power of 30 kW.

In the method described herein, a portion of the largest particles (i.e. a coarse fraction) of the milled talc material (e.g. milled microcrystalline talc material) is removed by classification. Thus, the talc particulate (e.g. microcrystalline talc particulate) of the present invention comprises (e.g. consists essentially of, or consists of) the fine talc particles that remain after larger particles are removed.

In other words, the milled talc material (e.g. milled microcrystalline talc material) can be classified to split the material into two fractions. The fine fraction is the talc particulate (e.g. microcrystalline talc particulate) of the present invention. The coarse fraction may be considered a by-product. The coarse fraction can optionally be milled and classified again.

The proportion of larger particles that are removed can be selected depending on the target particle size distribution for the talc particulate (e.g. microcrystalline talc particulate). For example, from about 10 wt. % to about 99.5 wt. %, for example, from about 10 wt. % to about 99 wt. %, or from about 10 wt. % to about 95 wt. %, or from about 20 wt. % to about 99.5 wt. %, or from about 20 wt. % to about 99 wt. %, or from about 20 wt. % to about 95 wt. %, or from about 30 wt. % to about 99.5 wt. %, or from about 30 wt. % to about 99 wt. %, or from about 30 wt. % to about 95 wt. %, or from about 40 wt. % to about 99.5 wt. %, or from about 40 wt. % to about 99 wt. %, or from about 40 wt. % to about 95 wt. %, or from about 50 wt. % to about 99.5 wt. %, or from about 50 wt. % to about 99 wt. %, or from about 50 wt. % to about 95 wt. %, or from about 60 wt. % to about 99.5 wt. %, or from about 60 wt. % to about 99 wt. %, or from about 60 wt. % to about 95 wt. %, or from about 70 wt. % to about 99.5 wt. %, or from about 70 wt. % to about 99 wt. %, or from about 70 wt. % to about 95 wt. %, or from about 80 wt. % to about 99.5 wt. %, or from about 80 wt. % to about 99 wt. %, or from about 80 wt. % to about 95 wt. %, or from about 80 w. % to about 90 wt. %, or from about 90 wt. % to about 99.5 wt. %, or from about 90 wt. % to about 99 wt. %, or from about 90 wt. % to about 95 wt. %, of the largest particles may be removed to make the talc particulate (e.g. microcrystalline talc particulate).

The amount of the fine fraction produced may be directly correlated to the speed of the classifying turbine. The faster the classifier speed, the smaller the fine product yield (%). The faster the classifier speed, the lower the top cut (e.g. $d_{95}$ or $d_{98}$) of the fine fraction. Thus, the speed of the classifying turbine can be adjusted depending on the desired particle size and product yield.

The classifying turbine may be operated at a speed no less than about 1000 rpm, for example, no less than about 2000 rpm, or no less than about 3000 rpm, or no less than about 4000 rpm, or no less than about 5000 rpm, or no less than about 6000 rpm, or no less than about 7000 rpm, or no less than about 8000 rpm. The classifying turbine may be operated at a speed no greater than about 15000 rpm, for example, no greater than about 14000 rpm, or no greater than about 13000 rpm, or no greater than about 12000 rpm, or no greater than about 11000 rpm, or no greater than about 10000 rpm, or no greater than about 9000 rpm, or no greater than about 8000 rpm, or no greater than about 7000 rpm, or no greater than about 6000 rpm. The classifying turbine may be operated at a speed from about 1000 rpm to about 15000 rpm, for example, from about 2000 rpm to about 14000 rpm, or from about 3000 rpm to about 13000 rpm, or from about 4000 rpm to about 12000 rpm, or from about 4000 rpm to about 11000 rpm, or from about 4000 rpm to about 10000 rpm, or from about 4000 rpm to about 9000 rpm, or from about 5000 rpm to about 10000 rpm, or from about 5000 rpm to about 9000 rpm, or from about 6000 rpm to about 10000 rpm, or from about 6000 rpm to about 9000 rpm.

The classifying turbine may be operated at a peripheral speed no less than about 10 m/s, for example, no less than about 20 m/s, or no less than about 30 m/s, or no less than about 40 m/s, or no less than about 50 m/s, or no less than about 60 m/s, or no less than about 70 m/s, or no less than about 80 m/s. The classifying turbine may be operated at a peripheral speed no greater than about 100 m/s, for example, no greater than about 90 m/s, or no greater than about 80 m/s, or no greater than about 70 pm/s. The classifying turbine may be operated at a peripherical speed from about 10 m/s to about 100 m/s, for example, from about 20 m/s to about 90 m/s, or from about 30 m/s to about 80 m/s.

The amount of the fine fraction produced may also be correlated with other operating parameters of the classifying turbine such as the air flow. The classifying turbine may be operated with an air flow no less than about 500 $m^3/h$, for example, no less than about 750 $m^3/h$, or no less than about 1000 $m^3/h$. The classifying turbine may be operated with an air flow no greater than about 2500 $m^3/h$, for example, no greater than about 2000 $m^3/h$, or no greater than about 1500 $m^3/h$. The classifying turbine may be operated with an air flow from about 500 $m^3/h$ to about 2500 $m^3/h$, for example, from about 500 $m^3/h$ to about 2000 $m^3/h$, or from about 500 $m^3/h$ to about 1500 $m^3/h$, or from about 750 $m^3/h$ to about 2500 $m^3/h$, or from about 750 $m^3/h$ to about 2000 $m^3/h$, or from about 750 $m^3/h$ to about 1500 $m^3/h$, or from about 1000 $m^3/h$ to about 2500 $m^3/h$, or from about 1000 $m^3/h$ to about 2000 $m^3/h$, or from about 1000 $m^3/h$ to about 1500 $m^3/h$.

The classifying turbine may be operated with a fines yield of no less than about 3 %, for example, no less than about 4 %, or no less than about 5 %, or no less than about 6 %, or no less than about 7 %, or no less than about 8 %, or no less than about 9 %, or no less than about 10 %. The classifying turbine may be operated with a fines yield of no more than about 20 %, for example, no more than about 15 %, or no more than about 12 %, or no more than about 11 %. The classifying turbine may be operated with a fines yield from about 3 % to about 20 %, for example, from about 4% to about 15 %, or from about 5 % to about 12 %, or from about 6 % to about 12 %, or from about 7 % to about 11 %.

The method may comprise returning the coarse fraction, removed by classification, for further milling. For example, the method may comprise returning the coarse fraction to the mill (e.g. stirred bead mill) for further dry milling. For example, the mill (e.g. stirred bead mill) and the classifier (e.g. air classifier) may be arranged to form a milling/classifying circuit in which (a) the mill (e.g. stirred bead mill) continuously or periodically feeds milled talc material (e.g. milled microcrystalline talc material) to the classifier (e.g. air classifier) for classification and (b) the coarse fraction is continuously or periodically returned from the classifier (e.g. air classifier) to the mill (e.g. stirred bead mill) for further milling.

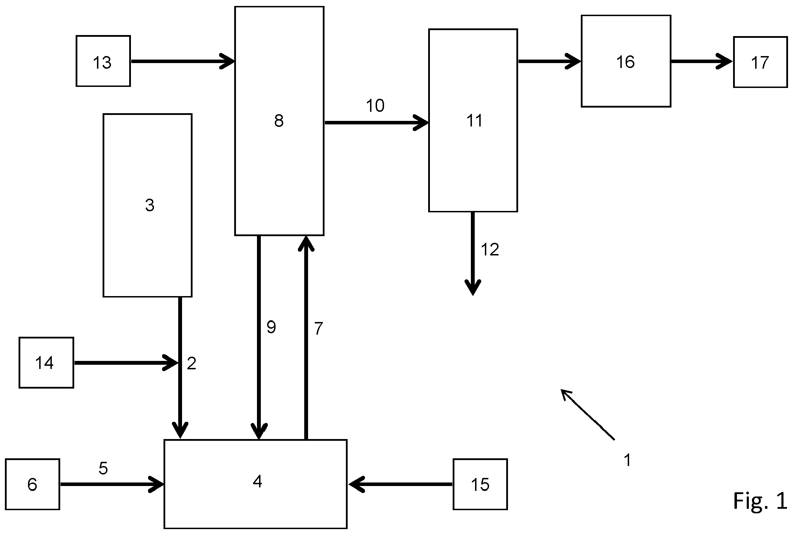

An example milling/classifying circuit 1 is illustrated schematically in Figure 1. Talc feed material 2 is supplied from an input hopper 3 to a stirred bead mill 4 for milling. An optional grinding aid 5 may be supplied to the stirred bead mill 4 from a grinding aid store 6. Milled talc material 7 is output by the stirred bead mill 4 to an air classifier 8. The air classifier 8 separates the milled talc material 7 into a coarse fraction 9, which is fed back to the stirred bead mill 4, and a fine fraction 10, which is fed to an output hopper 11. The talc particulate product 12 may be removed from the output hopper 11. Movement of material through the system is assisted using an air flow generated by air flow inlets 13, 14 and 15, air mover 16 and air outlet 17.

The method may comprise increasing the BET specific surface area of the talc particulate (e.g. microcrystalline talc particulate) by no less than about 10 $m^2/g$, for example, no less than about 20 $m^2/g$, or no less than about 30 $m^2/g$ (relative to the BET specific surface area of the talc feed material (e.g. microcrystalline talc feed material) prior to milling). The method may comprise increasing the BET specific surface area of the talc particulate (e.g. microcrystalline talc particulate) by no less than about 100 %, for example, by no less than about 200 %, or by no less than about 300 % (relative to the BET specific surface area of the talc feed material (e.g. microcrystalline talc feed material) prior to milling). The method may comprise increasing the BET specific surface area of the talc particulate by a factor of no less than about 2, for example, no less than about 3, or no less than about 4 (relative to the BET specific surface area of the talc feed material (e.g. microcrystalline talc feed material) prior to milling).

The method may comprise reducing the $d_{50}$, by Sedigraph, of the talc particulate by no less than about 5 $\mu$m, for example, no less than about 6 $\mu$m, or no less than about 7 $\mu$m, or no less than about 8 $\mu$m, or no less than about 9 $\mu$m, or no less than about 10 $\mu$m, or no less than about 50 $\mu$m, or no less than about 100 $\mu$m, or no less than about 1 mm, or no less than about 5 mm (relative to the dso, by Sedigraph, of the talc feed material (e.g. microcrystalline talc feed material) prior to milling). The method may comprise reducing by the $d_{50}$, by Sedigraph, of the talc particulate by no less than about 50 %, for example, no less than about 60 %, or no less than about 70 %, or no less than about 80 %, or no less than about 90 %, or no less than about 95 %, or no less than about 99 % (relative to the $d_{50}$, by Sedigraph, of the talc feed material (e.g. microcrystalline talc feed material) prior to milling). The method may comprise reducing the dso, by Sedigraph, of the talc particulate by a factor of no less than about 2, for example, no less than about 5, or no less than about 7, or no less than about 10, or no less than about 12, or no less than about 20, or no less than about 30 or no less than about 40, or no less than about 50, or no less than about 100 (relative to the dso, by Sedigraph, of the talc feed material (e.g. microcrystalline talc feed material) prior to milling).

The method may comprise reducing the $d_{50}$, by laser, of the talc particulate by no less than about 5 $\mu$m, for example, no less than about 6 $\mu$m, or no less than about 7 $\mu$m, or no less than about 8 $\mu$m, or no less than about 9 $\mu$m, or no less than about 10 $\mu$m, or no less than about 50 $\mu$m, or no less than about 100 $\mu$m, or no less than about 1 mm, or no less than about 5 mm (relative to the dso, by laser, of the talc feed material (e.g. microcrystalline talc feed material) prior to milling). The method may comprise reducing the $d_{50}$, by laser, of the talc particulate by no less than about 50 %, for example, no less than about 60 %, or no less than about 70 %, or no less than about 80 %, or no less than about 90 %, or no less than about 95 %, or no less than about 99 % (relative to the dso, by laser, of the talc feed material (e.g. microcrystalline talc feed material) prior to milling). The method may comprise reducing the $d_{50}$, by laser, of the talc particulate by a factor of no less than about 2, for example, no less than about 3, or no less than about 4, or no less than about 5, or no less than about 7, or no less than about 10, or no less than about 12, or no less than about 20, or no less than about 30 or no less than about 40, or no less than about 50, or no less than about 100 (relative to the dso, by laser, of the talc feed material (e.g. microcrystalline talc feed material) prior to milling).

*Talc feed material*

The talc feed material may be a microcrystalline talc feed material.

The talc feed material (e.g. microcrystalline talc feed material) may have a crystallinity index, CI, no greater than about 7.5 $g/m^2$, for example, no greater than about 7.0 $g/m^2$, or no greater than about 6.0 $g/m^2$, or no greater than about 5.0 $g/m^2$, or no greater than about 4.0 $g/m^2$, or no greater than about 3.0 $g/m^2$, or no greater than about 2.0 $g/m^2$, or no greater than about 1.5 $g/m^2$. The talc feed material (e.g. microcrystalline talc feed material) may have a crystallinity index, CI, no less than about 0.01 $g/m^2$, for example, no less than about 0.1 $g/m^2$, or no less than about 0.5 $g/m^2$. The talc feed material (e.g. microcrystalline talc feed material) may have a crystallinity index, CI, from about 0.01 $g/m^2$ to about 7.5 $g/m^2$, or from about 0.01 $g/m^2$ to about 7.0 $g/m^2$, or from about 0.01 $g/m^2$ to about 6.0 $g/m^2$, or from about

0.01 g/m$^2$ to about 5.0 g/m$^2$, or from about 0.01 g/m$^2$ to about 4.0 g/m$^2$, or from about 0.01 g/m$^2$ to about 3.0 g/m$^2$, or from about 0.01 g/m$^2$ to about 2.0 g/m$^2$, or from about 0.01 g/m$^2$ to about 1.5 g/m$^2$, or from about 0.1 g/m$^2$ to about 7.5 g/m$^2$, or from about 0.1 g/m$^2$ to about 6.0 g/m$^2$, or from about 0.1 g/m$^2$ to about 4.0 g/m$^2$, or from about 0.1 g/m$^2$ to about 2.0 g/m$^2$, or from about 0.5 g/m$^2$ to about 7.5 g/m$^2$, or from about 0.5 g/m$^2$ to about 6.0 g/m$^2$, or from about 0.5 g/m$^2$ to about 4.0 g/m$^2$, or from about 0.5 g/m$^2$ to about 2.0 g/m$^2$.

The talc feed material (e.g. microcrystalline talc feed material) may have a dso, by Sedigraph, no less than about 5.0 $\mu$m, for example, no less than about 6.0 $\mu$m, or no less than about 7.0 $\mu$m, or no less than about 7.5 $\mu$m. The maximum $d_{50}$ of the talc feed material (e.g. microcrystalline talc feed material) may not be limited. Alternatively, the talc feed material (e.g. microcrystalline talc feed material) may have a dso, measured by sieving, no greater than about 20 mm, or no greater than about 10 mm, or no greater than about 5 mm, or no greater than about 1 mm, or no greater than about 100 $\mu$m. The talc feed material (e.g. microcrystalline talc feed material) may have a $d_{50}$, by Sedigraph, no greater than about 50 $\mu$m, or no greater than about 20.0 $\mu$m, or no greater than about 15.0 $\mu$m, or no greater than about 10.0 $\mu$m, or no greater than about 9.0 $\mu$m, or no greater than about 8.5 $\mu$m, or no greater than about 8.0 $\mu$m. The talc feed material (e.g. microcrystalline talc feed material) may have a $d_{50}$, by Sedigraph for values of $d_{50}$ no greater than 50 $\mu$m and by sieving for values of $d_{50}$ greater than 50 $\mu$m, from about 5.0 $\mu$m to about 20 mm, for example, from about 5.0 $\mu$m to about 15 mm, or from about 5.0 $\mu$m to about 10 mm, for example, from about 6.0 $\mu$m to about 10 mm, or from about 7.0 $\mu$m to about 10 mm, or from about 7.5 $\mu$m to about 10 mm, or from about 5.0 $\mu$m to about 5 mm, or from about 6.0 $\mu$m to about 5 mm, or from about 7.0 $\mu$m to about 5 mm, or from about 7.5 $\mu$m to about 5 mm, or from about 5.0 $\mu$m to about 1 mm, or from about 6.0 $\mu$m to about 1 mm, or from about 7.0 $\mu$m to about 1 mm, or from about 7.5 $\mu$m to about 1 mm, or from about 5.0 $\mu$m to about 100 $\mu$m, or from about 6.0 $\mu$m to about 100 $\mu$m, or from about 7.0 $\mu$m to about 100 $\mu$m, or from about 7.5 $\mu$m to about 100 $\mu$m, or from about 5.0 $\mu$m to about 20.0 $\mu$m, or from about 6.0 $\mu$m to about 20.0 $\mu$m, or from about 7.0 $\mu$m to about 20.0 $\mu$m, or from about 7.5 $\mu$m to about 20.0 $\mu$m, or from about 5.0 $\mu$m to about 15.0 $\mu$m, or from about 6.0 $\mu$m to about 15.0 $\mu$m, or from about 7.0 $\mu$m to about 15.0 $\mu$m, or from about 7.5 $\mu$m to about 15.0 $\mu$m, or from about 5.0 $\mu$m to about 10.0 $\mu$m, or from about 6.0 $\mu$m to about 10.0 $\mu$m, or from about 7.0 $\mu$m to about 10.0 $\mu$m, or from about 7.5 $\mu$m to about 10.0 $\mu$m, or from about 5.0 $\mu$m to about 9.0 $\mu$m, or from about 6.0 $\mu$m to about 9.0 $\mu$m, or from about 7.0 $\mu$m to about 9.0 $\mu$m, or from about 7.5 $\mu$m to about 9.0 $\mu$m, or from about 5.0 $\mu$m to about 8.5 $\mu$m, or from about 6.0 $\mu$m to about 8.5 $\mu$m, or from about 7.0 $\mu$m to about 8.5 $\mu$m, or from about 7.5 $\mu$m to about 8.5 $\mu$m, or from about 5.0 $\mu$m to about 8.0 $\mu$m, or from about 6.0 $\mu$m to about 8.0 $\mu$m, or from about 7.0 $\mu$m to about 8.0 $\mu$m, or from about 7.5 $\mu$m to about 8.0 $\mu$m.

The talc feed material (e.g. microcrystalline talc feed material) may have a dso, by laser, no less than about 5.0 $\mu$m, for example, no less than about 7.0 $\mu$m, or no less than about 9.0 $\mu$m, or no less than about 10.0 $\mu$m. The maximum $d_{50}$ of the talc feed material (e.g. microcrystalline talc feed material) may not be limited. Alternatively, the talc feed material (e.g. microcrystalline talc feed material) may have a dso, measured by sieving, no greater than about 20 mm, or no greater than about 10 mm, or no greater than about 5 mm. The talc feed material (e.g. microcrystalline talc feed material) may have a dso, by laser, no greater than about no greater than about 1 mm, or no greater than about 200 $\mu$m, or no greater than about 40.0 $\mu$m, or no greater than about 30.0 $\mu$m, or no greater than about 20.0 $\mu$m, or no greater than about 15.0 $\mu$m, or no greater than about 12.0 $\mu$m, or no greater than about 11.0 $\mu$m. The talc feed material (e.g. microcrystalline talc feed material) may have a $d_{50}$, by laser for values of $d_{50}$ no greater than 1 mm and by sieving for values of $d_{50}$ greater than 1 mm, from about 5.0 $\mu$m to about 20 mm, for example, from about 7.0 $\mu$m to about 20 mm, or from about 9.0 $\mu$m to about 20 mm, or from about 10.0 $\mu$m to about 20 mm, or from about 5.0 $\mu$m to about 10 mm, or from about 7.0 $\mu$m to about 10 mm, or from about 9.0 $\mu$m to about 10 mm, or from about 10.0 $\mu$m to about 10 mm, or from about 5.0 $\mu$m to about 1 mm, or from about 7.0 $\mu$m to about 1 mm, or from about 9.0 $\mu$m to about 1 mm, or from about 10.0 $\mu$m to about 1 mm, or from about 5.0 $\mu$m to about 200 $\mu$m, or from about 7.0 $\mu$m to about 200 $\mu$m, or from about 9.0 $\mu$m to about 200 $\mu$m, or from about 10.0 $\mu$m to about 200 $\mu$m, or from about 5.0 $\mu$m to about 40.0 $\mu$m, or from about 7.0 $\mu$m to about 40.0 $\mu$m, or from about 9.0 $\mu$m to about 40.0 $\mu$m, or from about 10.0 $\mu$m to about 40.0 $\mu$m, or from about 5.0 $\mu$m to about 40.0 $\mu$m, or from about 7.0 $\mu$m to about 40.0 $\mu$m, or from about 9.0 $\mu$m to about 40.0 $\mu$m, or from about 10.0 $\mu$m to about 40.0 $\mu$m, or from about 5.0 $\mu$m to about 30.0 $\mu$m, or from about 7.0 $\mu$m to about 30.0 $\mu$m, or from about 9.0 $\mu$m to about 30.0 $\mu$m, or from about 10.0 $\mu$m to about 30.0 $\mu$m, or from about 5.0 $\mu$m to about 20.0 $\mu$m, or from about 7.0 $\mu$m to about 20.0 $\mu$m, or from about 9.0 $\mu$m to about 20.0 $\mu$m, or from about 10.0 $\mu$m to about 20.0 $\mu$m, or from about 5.0 $\mu$m to about 15.0 $\mu$m, or from about 7.0 $\mu$m to about 15.0 $\mu$m, or from about 9.0 $\mu$m to about 15.0 $\mu$m, or from about 10.0 $\mu$m to about 15.0 $\mu$m, or from about 5.0 $\mu$m to about 12.0 $\mu$m, or from about 7.0 $\mu$m to about 12.0 $\mu$m, or from about 9.0 $\mu$m to about 12.0 $\mu$m, or from about 10.0 $\mu$m to about 12.0 $\mu$m, or from about 5.0 $\mu$m to about 11.0 $\mu$m, or from about 7.0 $\mu$m to about 11.0 $\mu$m, or from about 9.0 $\mu$m to about 11.0 $\mu$m, or from about 10.0 $\mu$m to about 11.0 $\mu$m.

The talc feed material (e.g. microcrystalline talc feed material) may have a Minolta Y whiteness no less than about 80, for example, no less than about 85, or no less than about 86.

The talc feed material (e.g. microcrystalline talc feed material) may have a CIELAB L* no less than about 85, for example, no less than about 90, or no less than about 94. The talc feed material (e.g. microcrystalline talc feed material) may have a CIELAB a* no greater than about 1.0, for example, no greater than about 0.5, or no greater than about 0.3, or no greater than about 0.2, or no greater than about 0.1.

The talc feed material (e.g. microcrystalline talc feed material) may have a CIELAB b* no less than about 1.0, for example, no less than about 2.0, or no less than about 2.5, or no less than about 2.6. The talc feed material (e.g. microcrystalline talc feed material) may have a CIELAB b* no greater than about 4.0, for example, no greater than about 3.0, or no greater than about 2.7, or no greater than about 2.6. The talc feed material (e.g. microcrystalline talc feed material) may have a CIELAB b* from about 1.0 to about 4.0, for example, from about 2.0 to about 4.0, or from about 2.5 to about 4.0, or from about 2.6 to about 4.0, or from about 1.0 to about 3.0, or from about 2.0 to about 3.0, or from about 2.5 to about 3.0, or from about 2.6 to about 3.0, or from about 1.0 to about 2.7, or from about 2.0 to about 2.7, or from about 2.5 to about 2.7, or from about 2.6 to about 2.7, or from about 1.0 to about 2.6, or from about 2.0 to about 2.6, or from about 2.5 to about 2.6.

The talc feed material (e.g. microcrystalline talc feed material) may have a BET specific surface area no greater than about 30 $m^2/g$, for example, no greater than about 20 $m^2/g$, or no greater than about 10 $m^2/g$, or no greater than about 9.5 $m^2/g$. The talc feed material (e.g. microcrystalline talc feed material) may have a BET specific surface area no less than about 1 $m^2/g$, for example, no less than about 5 $m^2/g$. The talc feed material (e.g. microcrystalline talc feed material) may have a BET specific surface area from about 1 $m^2/g$ to about 30 $m^2/g$, for example, from about 1 $m^2/g$ to about 20 $m^2/g$, or from about 1 $m^2/g$ to about 10 $m^2/g$, or from about 1 $m^2/g$ to about 9.5 $m^2/g$, or from about 5 $m^2/g$ to about 30 $m^2/g$, or from about 5 $m^2/g$ to about 20 $m^2/g$, or from about 5 $m^2/g$ to about 10 $m^2/g$, or from about 5 $m^2/g$ to about 9.5 $m^2/g$.

The talc feed material (e.g. microcrystalline talc feed material) may have a talc content (i.e. magnesium silicate content) of no less than about 60 %, for example, no less than about 70 %, or no less than about 80 %, or no less than about 90 %, or no less than about 95 %, or no less than about 99 %, talc (i.e. magnesium silicate). The talc feed material (e.g. microcrystalline talc feed material) may have a talc content (i.e. magnesium silicate content) of up to and including 100 % talc (i.e. magnesium silicate), for example, no greater than about 99 %, or no greater than about 95 %, or no greater than about 90 %, or no greater than about 80 %, talc (i.e. magnesium silicate). The talc feed material (e.g. microcrystalline talc feed material) may have a talc content (i.e. magnesium silicate content) from about 60 % to about 100 %, or from about 70 % to about 100 %, or from about 80 % to about 100 %, or from about 90 % to about 100 %, or from about 95 % to about 100 %, or from about 99 % to about 100 %, or from about 60 % to about 99 %, or from about 70 % to about 99 %, or from about 80 % to about 99 %, or from about 90 % to about 99 %, or from about 95 % to about 99 %, or from about 60 % to about 95 %, or from about 70 % to about 95 %, or from about 80 % to about 95 %, or from about 90 % to about 95 %, or from about 60 % to about 90 %, or from about 70 % to about 90 %, or from about 80 % to about 90 %, for example, about 80 %, talc (i.e. magnesium silicate).

The talc feed material (e.g. microcrystalline talc feed material) may have a chlorite content of no greater than about 40 %, for example, no greater than about 30 %, or no greater than about 20 %, or no greater than about 10 %, or no greater than about 5 %, or no greater than about 1 %, chlorite. The talc feed material (e.g. microcrystalline talc feed material) may comprise: from about 60 % to about 100 %, for example, from about 70 % to about 100 %, or from about 80 % to about 100 %, or from about 90 % to about 100 %, or from about 95 % to about 100 %, or from about 99 % to about 100 %, or from about 60 % to about 99 %, or from about 70 % to about 99 %, or from about 80 % to about 99 %, or from about 90 % to about 99 %, or from about 95 % to about 99 %, or from about 60 % to about 95 %, or from about 70 % to about 95 %, or from about 80 % to about 95 %, or from about 90 % to about 95 %, or from about 60 % to about 90 %, or from about 70 % to about 90 %, or from about 80 % to about 90 %, for example, about 80 %, talc; and optionally no greater than about 40 %, for example, no greater than about 30 %, or no greater than about 20 %, or no greater than about 10 %, or no greater than about 5 %, or no greater than about 1 %, chlorite. The talc feed material (e.g. microcrystalline talc feed material) may comprise from about 60 % to about 99 %, for example, from about 70 % to about 99 %, or from about 80 % to about 99 %, or from about 90 % to about 99 %, or from about 95 % to about 99 %, or from about 60 % to about 95 %, or from about 70 % to about 95 %, or from about 80 % to about 95 %, or from about 90 % to about 95 %, or from about 60 % to about 90 %, or from about 70 % to about 90 %, or from about 80 % to about 90 %, for example, about 80 %, talc, the balance being chlorite and the usual impurities.

The talc feed material (e.g. microcrystalline talc feed material) may have a water adsorption at 50 % relative humidity of no less than about 0.75 $mg/m^2$, for example, no less than about 0.8 $mg/m^2$, or no less than about 0.9 $mg/m^2$, or no less than about 1.0 $mg/m^2$. The talc feed material (e.g. microcrystalline talc feed material) may have a water adsorption at 50 % relative humidity of no greater than about 2.5 $mg/m^2$, for example, no greater than about 2.0 $mg/m^2$, or no greater than about 1.5 $mg/m^2$, or no greater than about 1.25 $mg/m^2$. The talc feed material (e.g. microcrystalline talc feed material) may have a water adsorption at 50 % relative humidity from about 0.75 $mg/m^2$ to about 2.5 $mg/m^2$, for example, from about 0.75 $mg/m^2$ to about 2.0 $mg/m^2$, or from about 0.75 $mg/m^2$ to about 1.5 $mg/m^2$, or from about 0.75 $mg/m^2$ to about 1.25 $mg/m^2$, or from about 0.8 $mg/m^2$ to about 2.5 $mg/m^2$, or from about 0.8 $mg/m^2$ to about 2.0 $mg/m^2$, or from about 0.9 $mg/m^2$ to about 1.5 $mg/m^2$, or from about 0.9 $mg/m^2$ to about 1.25 $mg/m^2$, or from about 0.9 $mg/m^2$ to about 2.5 $mg/m^2$, or from about 0.9 $mg/m^2$ to about 2.0 $mg/m^2$, or from about 0.9 $mg/m^2$ to about 1.5 $mg/m^2$,

or from about 0.9 mg/m$^2$ to about 1.25 mg/m$^2$, or from about 1.0 mg/m$^2$ to about 2.5 mg/m$^2$, or from about 1.0 mg/m$^2$ to about 2.0 mg/m$^2$, or from about 1.0 mg/m$^2$ to about 1.5 mg/m$^2$, or from about 1.0 mg/m$^2$ to about 1.25 mg/m$^2$.

The talc feed material may be a microcrystalline talc feed material having: (a) a dso, by Sedigraph for values of $d_{50}$ no greater than 50 $\mu$m and by sieving for values of $d_{50}$ greater than 50 $\mu$m, from about 5.0 $\mu$m to about 20 mm, for example, from about 5.0 $\mu$m to about 10 mm, from about 5.0 $\mu$m to about 5 mm, or from about 5.0 $\mu$m to about 1 mm, or from about 5.0 $\mu$m to about 100 $\mu$m, or from about 5.0 $\mu$m to about 20.0 $\mu$m, or from about 5.0 $\mu$m to about 10.0 $\mu$m; (b) a $d_{50}$, by laser for values of $d_{50}$ no greater than 1 mm and by sieving for values of $d_{50}$ greater than 1 mm, from about 5.0 $\mu$m to about 20 mm, for example, from about 5.0 $\mu$m to about 10 mm, or from about 5.0 $\mu$m to about 1 mm, or from about 5.0 $\mu$m to about 200 $\mu$m, or from about 5.0 5.0 $\mu$m to about 40.0 $\mu$m, or from about 5.0 $\mu$m to about 20.0 $\mu$m; (c) a Minolta Y whiteness no less than about 80, for example, no less than about 85; (d) a CIELAB L* no less than about 85, for example, no less than about 90; (e) a CIELAB a* no greater than about 1.0, for example, no greater than about 0.5; (f) a CIELAB b* from about 1.0 to about 4.0, for example, from about 2.0 to about 3.0; (g) a BET specific surface area no greater than about 30 m$^2$/g, for example, no greater than about 20 m$^2$/g, or no greater than about 10 m$^2$/g; and/or (h) a talc content of no less than about 60 %, for example, no less than about 80%, talc and an optional chlorite content of no greater than about 40 %, for example, no greater than about 20 %, chlorite.

The talc feed material may be a microcrystalline talc feed material having: (a) a dso, by Sedigraph for values of $d_{50}$ no greater than 50 $\mu$m and by sieving for values of $d_{50}$ greater than 50 $\mu$m, from about 5.0 $\mu$m to about 20 mm, for example, from about 5.0 $\mu$m to about 10 mm, from about 5.0 $\mu$m to about 5 mm, or from about 5.0 $\mu$m to about 1 mm, or from about 5.0 $\mu$m to about 100 $\mu$m, or from about 5.0 $\mu$m to about 20.0 $\mu$m, or from about 5.0 $\mu$m to about 10.0 $\mu$m; (b) a dso, by laser for values of $d_{50}$ no greater than 1 mm and by sieving for values of $d_{50}$ greater than 1 mm, from about 5.0 $\mu$m to about 20 mm, for example, from about 5.0 $\mu$m to about 10 mm, or from about 5.0 $\mu$m to about 1 mm, or from about 5.0 $\mu$m to about 200 $\mu$m, or from about 5.0 5.0 $\mu$m to about 40.0 $\mu$m, or from about 5.0 $\mu$m to about 20.0 $\mu$m; (c) a Minolta Y whiteness no less than about 80, for example, no less than about 85; (d) a CIELAB L* no less than about 85, for example, no less than about 90; (e) a CIELAB a* no greater than about 1.0, for example, no greater than about 0.5; (f) a CIELAB b* from about 1.0 to about 4.0, for example, from about 2.0 to about 3.0; (g) a BET specific surface area no greater than about 30 m$^2$/g, for example, no greater than about 20 m$^2$/g, or no greater than about 10 m$^2$/g; (h) a talc content of no less than about 60 %, for example, no less than about 80%, talc and an optional chlorite content of no greater than about 40 %, for example, no greater than about 20 %, chlorite; and/or (i) a Cl no greater than about 7.5 g/m$^2$, for example, from about 0.01 g/m$^2$ to about 7.5 g/m$^2$, or from about 0.01 g/m$^2$ to about 4.0 g/m$^2$.

The talc feed material may be a microcrystalline talc feed material having: (a) a dso, by Sedigraph for values of $d_{50}$ no greater than 50 $\mu$m and by sieving for values of $d_{50}$ greater than 50 $\mu$m, from about 5.0 $\mu$m to about 20 mm, for example, from about 5.0 $\mu$m to about 10 mm, or from about 5.0 $\mu$m to about 5 mm, or from about 5.0 $\mu$m to about 1 mm, or from about 5.0 $\mu$m to about 100 $\mu$m, or from about 5.0 $\mu$m to about 20.0 $\mu$m, or from about 5.0 $\mu$m to about 10.0 $\mu$m; (b) a dso, by laser for values of $d_{50}$ no greater than 1 mm and by sieving for values of $d_{50}$ greater than 1 mm, from about 5.0 $\mu$m to about 20 mm, for example, from about 5.0 $\mu$m to about 10 mm, or from about 5.0 $\mu$m to about 1 mm, or from about 5.0 $\mu$m to about 200 $\mu$m, or from about 5.0 $\mu$m to about 40.0 $\mu$m, or from about 5.0 $\mu$m to about 20.0 $\mu$m; (c) a Minolta Y whiteness no less than about 80, for example, no less than about 85; (d) a CIELAB L* no less than about 85, for example, no less than about 90; (e) a CIELAB a* no greater than about 1.0, for example, no greater than about 0.5; (f) a CIELAB b* from about 1.0 to about 4.0, for example, from about 2.0 to about 3.0; (g) a BET specific surface area no greater than about 30 m$^2$/g, for example, no greater than about 20 m$^2$/g, or no greater than about 10 m$^2$/g; and (h) a talc content of no less than about 60 %, for example, no less than about 80%, talc and an optional chlorite content of no greater than about 40 %, for example, no greater than about 20 %, chlorite.

The talc feed material may be a microcrystalline talc feed material having: (a) a $d_{50}$, by Sedigraph for values of $d_{50}$ no greater than 50 $\mu$m and by sieving for values of $d_{50}$ greater than 50 $\mu$m, from about 5.0 $\mu$m to about 20 mm, for example, from about 5.0 $\mu$m to about 10 mm, or from about 5.0 $\mu$m to about 5 mm, or from about 5.0 $\mu$m to about 1 mm, or from about 5.0 $\mu$m to about 100 $\mu$m, or from about 5.0 $\mu$m to about 20.0 $\mu$m, or from about 5.0 $\mu$m to about 10.0 $\mu$m; (b) a $d_{50}$, by laser for values of $d_{50}$ no greater than 1 mm and by sieving for values of $d_{50}$ greater than 1 mm, from about 5.0 $\mu$m to about 20 mm, for example, from about 5.0 $\mu$m to about 10 mm, or from about 5.0 $\mu$m to about 1 mm, or from about 5.0 $\mu$m to about 200 $\mu$m, or from about 5.0 $\mu$m to about 40.0 $\mu$m, or from about 5.0 $\mu$m to about 20.0 $\mu$m; (c) a Minolta Y whiteness no less than about 80, for example, no less than about 85; (d) a CIELAB L* no less than about 85, for example, no less than about 90; (e) a CIELAB a* no greater than about 1.0, for example, no greater than about 0.5; (f) a CIELAB b* from about 1.0 to about 4.0, for example, from about 2.0 to about 3.0; (g) a BET specific surface area no greater than about 30 m$^2$/g, for example, no greater than about 20 m$^2$/g, or no greater than about 10 m$^2$/g; (h) a talc content of no less than about 60 %, for example, no less than about 80%, talc and an optional chlorite content of no greater than about 40 %, for example, no greater than about 20 %, chlorite; and (i) a Cl no greater than about 7.5 g/m$^2$, for example, from about 0.01 g/m$^2$ to about 7.5 g/m$^2$, or from about 0.01 g/m$^2$ to about 4.0 g/m$^2$.

*Polymer composition*

The talc particulates described herein may be used as a filler in a polymer composition. The talc particulate may be used as an extender filler or a functional filler. As used herein, the term "functional filler" is understood to mean an additive incorporated into a polymeric composition with a view to enhancing one or more of its physical (e.g., mechanical) properties. An "extender filler" typically modifies the properties of the polymer composition very little and essentially serves to reduce cost. Thus, there is also provided herein a polymer composition comprising a talc particulate (e.g. microcrystalline talc particulate) as described herein.

In certain embodiments, the talc particulate (e.g. microcrystalline talc particulate) may be used as a functional filler in a polymer composition, for example, to modify or enhance one or more mechanical properties of the polymer composition.

In certain embodiments, the talc particulate (e.g. microcrystalline talc particulate) is used as an extender filler, for example, to supplement or supplant other filler materials, which may be more expensive or more difficult to incorporate into the polymer composition.

In certain embodiments, the talc particulate (e.g. microcrystalline talc particulate) functions as both an extender filler and as a functional filler.

The polymer composition may comprise no less than about 5 phr (i.e. parts per hundred rubber), for example, no less than about 10 phr, or no less than about 20 phr, or no less than about 30 phr, or no less than about 40 phr, or no less than about 50 phr, or no less than about 60 phr, or no less than about 70 phr, or no less than about 80 phr, or no less than about 90 phr, or no less than about 100 phr, of the talc particulate (e.g. microcrystalline talc particulate). The polymer composition may comprise no more than about 300 phr, for example, no more than about 200 phr, or no more than about 150 phr, or no more than about 100 phr, of the talc particulate (e.g. microcrystalline talc particulate). The polymer composition may comprise from about 5 phr to about 300 phr, for example, from about 10 phr to about 300 phr, or from about 20 phr to about 300 phr, or from about 30 phr to about 300 phr, or from about 40 phr to about 300 phr, or from about 50 phr to about 300 phr, or from about 60 phr to about 300 phr, or from about 70 phr to about 300 phr, or from about 80 phr to about 300 phr, or from about 90 phr to about 300 phr, or from about 100 phr to about 300 phr, or from about 5 phr to about 200 phr, or from about 10 phr to about 200 phr, or from about 20 phr to about 200 phr, or from about 30 phr to about 200 phr, or from about 40 phr to about 200 phr, or from about 50 phr to about 200 phr, or from about 60 phr to about 200 phr, or from about 70 phr to about 200 phr, or from about 80 phr to about 200 phr, or from about 90 phr to about 200 phr, or from about 100 phr to about 200 phr, or from about 5 phr to about 150 phr, or from about 10 phr to about 150 phr, or from about 20 phr to about 150 phr, or from about 30 phr to about 150 phr, or from about 40 phr to about 150 phr, or from about 50 phr to about 150 phr, or from about 60 phr to about 150 phr, or from about 70 phr to about 150 phr, or from about 80 phr to about 150 phr, or from about 90 phr to about 150 phr, or from about 100 phr to about 150 phr, or from about 5 phr to about 100 phr, or from about 10 phr to about 100 phr, or from about 20 phr to about 100 phr, or from about 30 phr to about 100 phr, or from about 40 phr to about 100 phr, or from about 50 phr to about 100 phr, or from about 60 phr to about 100 phr, or from about 70 phr to about 100 phr, or from about 80 phr to about 100 phr, or from about 90 phr to about 100 phr, or from about 100 phr to about 100 phr, of the talc particulate (e.g. microcrystalline talc particulate).

The polymer composition may comprise filler other than the talc particulate (e.g. microcrystalline talc particulate). For example, the polymer composition may comprise one or more minerals other than the talc particulate (e.g. microcrystalline talc particulate). For example, the polymer composition may comprise synthetic silica or silicates (e.g. precipitated silica or silicates), natural silica or silicates, a clay mineral (for example, a hydrous kandite clay such as kaolin, halloysite or ball clay), carbon black, a metal hydroxide such as aluminium trihydroxide or magnesium dihydroxide, an alkaline earth metal carbonate or sulphate, such as calcium carbonate, magnesium carbonate, dolomite, gypsum, an anhydrous (calcined) kandite clay such as metakaolin or fully calcined kaolin, mica, perlite, feldspars, nepheline syenite, wollastonite, diatomaceous earth, barite and/or glass.

In certain embodiments, the polymer composition comprises, in addition to the talc particulate (e.g. microcrystalline talc particulate), precipitated silica, a clay mineral such as kaolin or ball clay, diatomaceous earth and/or carbon black. In certain embodiments, the polymer composition comprises, in addition to the talc particulate (e.g. microcrystalline talc particulate), precipitated silica. In certain embodiments, the polymer composition comprises, in addition to the talc particulate (e.g. microcrystalline talc particulate), a clay mineral such as kaolin or ball clay. In certain embodiments, the polymer composition comprises, in addition to the talc particulate (e.g. microcrystalline talc particulate), diatomaceous earth. In certain embodiments, the polymer composition comprises, in addition to the talc particulate (e.g. microcrystalline talc particulate), carbon black. In certain embodiments, the polymer composition comprises, in addition to the talc particulate (e.g. microcrystalline talc particulate), precipitated silica and a clay mineral such as kaolin or ball clay. In certain embodiments, the polymer composition comprises, in addition to the talc particulate (e.g. microcrystalline talc particulate), precipitated silica and diatomaceous earth.

In certain embodiments, the polymer composition may comprise a talc other than the talc particulate (e.g.

microcrystalline talc particulate) of the present invention. In certain embodiments, the polymer composition does not comprise talc other than the talc particulate (e.g. microcrystalline talc particulate) of the present invention.

The filler compounds other than the talc particulate (e.g. microcrystalline talc particulate) may be included during preparation of the polymer composition, or alternatively, during preparation of the talc particulate (e.g. microcrystalline talc particulate), e.g., the talc particulate (e.g. microcrystalline talc particulate) may be mixed and blended with the other filler compound(s), and optionally combined with surface treatment agent.

In certain embodiments, the amount of other filler compound(s) is present in amount less than about 100 phr, for example, less than about 50 phr, or less than about 25 phr.

The polymer composition may comprise any natural or synthetic polymer or mixture thereof. The polymer may, for example, be thermoplastic or thermoset. The term "polymer" used herein includes homopolymers and/or copolymers, as well as crosslinked and/or entangled polymers.

The term "precursor" as may be applied to the polymer component will be readily understood by one of ordinary skill in the art. For example, suitable precursors may include one or more of: monomers, cross-linking agents, curing systems comprising cross-linking agents and promoters, or any combination thereof. Where the talc particulate (e.g. microcrystalline talc particulate) is mixed with precursors of the polymer, the polymer composition will subsequently be formed by curing and/or polymerising the precursor components to form the desired polymer (e.g. vulcanizing a rubber).

Polymers, including homopolymers and/or copolymers, comprised in the polymer composition of the present invention may be prepared from one or more of the following monomers: acrylic acid, methacrylic acid, methyl methacrylate, and alkyl acrylates having 1-18 carbon atoms in the alkyl group, styrene, substituted styrenes, divinyl benzene, diallyl phthalate, butadiene, vinyl acetate, acrylonitrile, methacrylonitrile, maleic anhydride, esters of maleic acid or fumaric acid, tetrahydrophthalic acid or anhydride, itaconic acid or anhydride, and esters of itaconic acid, with or without a cross-linking dimer, trimer, or tetramer, crotonic acid, neopentyl glycol, propylene glycol, butanediols, ethylene glycol, diethylene glycol, dipropylene glycol, glycerol, cyclohexanedimethanol, 1,6 hexanediol, trimethyolpropane, pentaerythritol, phthalic anhydride, isophthalic acid, terephthalic acid, hexahydrophthalic anyhydride, adipic acid or succinic acids, azelaic acid and dimer fatty acids, toluene diisocyanate and diphenyl methane diisocyanate.

The polymer may be selected from one or more of polymethylmethacrylate (PMMA), polyacetal, polycarbonate, polyvinyls, polyacrylonitrile, polybutadiene, polystyrene, polyacrylate, polyethylene, polypropylene, epoxy polymers, unsaturated polyesters, polyurethanes, polycyclopentadienes, ethylene vinyl acetate, butyl rubber, hydrogenated nitrile butadiene rubber (NBR), natural rubber, polychloroprene, a fluoroelastomer, poly vinyl acetate, ethylene-propylene-diene-methylene (EPDM), and copolymers thereof. Suitable polymers also include liquid rubbers, such as silicones.

In certain embodiments, the polymer composition comprises (e.g. the polymer content of the polymer composition is) an elastomer such as a synthetic rubber or a natural rubber, for example, a styrene-butadiene rubber.

The polymer composition may further comprise one or more additives. The one or more additives may be selected from: thickeners, emulsifiers, viscosity modifiers, softeners, plasticizers (such as polyethylene glycol), activators (such as zinc oxide), accelerators (such as 2-mercaptobenzothiazole (MBT), mercaptobenzothiazole disulfide (MBTS) or tetramethylthiuram disulfide (DTMT)), rubber process oils (such as naphthenic oil), fire retardants (such as aluminium hydroxide), antibacterial agents, anti-mould agents (such as propionic acid), hydrophobic agents (such as silicone oil), stearic acid, sulfur, and/or thermal conductivity regulating agents (such as graphite), or any combination thereof. The polymer composition may comprise no more than about 50 phr, for example, no more than about 40 phr, or no more than about 30 phr, of such additives in total. The polymer composition may comprise no less than about 1 phr, for example, no less than about 10 phr, of such additives in total. The polymer composition may comprise from about 1 phr to about 50 phr, for example, from about 1 phr to about 40 phr, or from about 1 phr to about 30 phr, or from about 10 phr to about 50 phr, or from about 10 phr to about 40 phr, or from about 10 phr to about 30 phr, of such additives in total.

The polymer composition may comprise: from about 50 phr to about 150 phr, for example, from about 75 phr to about 125 phr, of polymer (e.g. elastomeric polymer such as a rubber); and from about 50 phr to about 150 phr, for example, from about 75 phr to about 125 phr, of the talc particulate (e.g. microcrystalline talc particulate). The polymer composition may further comprise: no more than about 20 phr, for example, no more than about 15 phr, or no more than about 10 phr, for example, from about 1 phr to about 10 phr, of one or more additives (e.g., PEG, zinc oxide, stearic acid, accelerators, sulfur, etc.); and/or from about 5 phr to about 40 phr, for example, from about 10 phr to about 30 phr, of a rubber process oil. It may be that the polymer composition comprises no mineral fillers other than the talc particulate (e.g. microcrystalline talc particulate).

The polymer composition may comprise: from about 50 phr to about 150 phr, for example, from about 75 phr to about 125 phr, of polymer (e.g. elastomeric polymer such as a rubber); from about 10 phr to about 100 phr, for example, from about 10 phr to about 60 phr, of precipitated silica; and from about 10 phr to about 100 phr, for example, from about 10 phr to about 80 phr, of the talc particulate (e.g. microcrystalline talc particulate). The polymer composition may further comprise: no more than about 20 phr, for example, no more than about 15 phr, or no more than about 10 phr, for example, from about 1 phr to about 10 phr, of one or more additives (e.g., PEG, zinc oxide, stearic acid, accelerators, sulfur, etc.); and/or from about 5 phr to about 40 phr, for example, from about 10 phr to about 30 phr, of a rubber process oil. It may be that the polymer composition comprises no mineral fillers other than the precipitated silica and the talc particulate (e.g. microcrystalline talc particulate).

The polymer composition may comprise an elastomer (e.g. a rubber) and have a $t_{90}$ vulcanization time (i.e. the time to 90% vulcanization), as measured using a rotorless curemeter according to ISO 6502 (Part 3), of no less than about 0.5 minutes, for example, no less than about 1 minute, or no less than about 2 minutes. The polymer composition may comprise an elastomer (e.g. a rubber) and have a $t_{90}$ vulcanization time, as measured using a rotorless curemeter according to ISO 6502 (Part 3), of no greater than about 30 minutes, for example, no greater than about 20 minutes, or no greater than about 10 minutes, no greater than about 5 minutes, or no greater than about 3 minutes. The polymer composition may comprise an elastomer (e.g. a rubber) and have a $t_{90}$ vulcanization time, as measured using a rotorless curemeter according to ISO 6502 (Part 3), from about 0.5 to about 30 minutes, for example, from about 0.5 to about 20 minutes, or from about 0.5 to about 10 minutes, or from about 1 to about 5 minutes, or from about 1 to about 3 minutes, or from about 2 to about 10 minutes, or from about 2 to about 5, or from about 2 to about 3 minutes.

The polymer composition may have a crosslink density, as measured using a rotorless curemeter according to ISO 6502 (Part 3), no less than about 10, for example, no less than about 20, or no less than about 30, or no less than about 35, or no less than about 40, or no less than about 41, or no less than about 42, or no less than about 45, or no less than about 46. The polymer composition may have a crosslink density, as measured using a rotorless curemeter according to ISO 6502 (Part 3), of no greater than about 55, for example, no greater than about 50, or no greater than about 47, or no greater than about 46, or no greater than about 43, or no greater than about 42, or no greater than about 41. The polymer composition may have a crosslink density, as measured using a rotorless curemeter according to ISO 6502 (Part 3), from about 10 to about 55, for example, from about 20 to about 55, or from about 30 to about 55, or from about 35 to about 55, from about 40 to about 55, or from about 41 to about 55, or from about 42 to about 55, or from about 45 to about 55, or from about 46 to about 55, or from about 35 to about 50, or from about 40 to about 50, or from about 41 to about 50, or from about 42 to about 50, or from about 45 to about 50, or from about 46 to about 50, or from about 35 to about 47, or from about 40 to about 47, or from about 41 to about 47, or from about 42 to about 47, or from about 45 to about 47, or from about 46 to about 47, or from about 35 to about 46, or from about 40 to about 46, or from about 41 to about 46, or from about 42 to about 46, or from about 45 to about 46, or from about 35 to about 43, or from about 40 to about 43, or from about 41 to about 43, or from about 42 to about 43, or from about 35 to about 42, or from about 40 to about 42, or from about 41 to about 42, or from about 35 to about 41, or from about 40 to about 41.

The polymer composition may have a Mooney viscosity at 100°C, measured using a shearing-disc viscometer according to ISO 289-1, no greater than about 100 Mooney Units (MU), for example, no greater than about 90 MU, or no greater than about 80 MU, or no greater than about 70 MU, or no greater than about 60 MU, or no greater than about 50 MU, or no greater than about 38 MU, or no greater than about 37 MU, or no greater than about 35 MU, or no greater than about 33 MU. The polymer composition may have a Mooney viscosity at 100°C, measured using a shearing-disc viscometer according to ISO 289-1, no less than about 20 MU, for example, no less than about 25 MU, or no less than about 30 MU, or no less than about 32 MU, or no less than about 35 MU, or no less than about 36 MU. The polymer composition may have a Mooney viscosity at 100°C, measured using a shearing-disc viscometer according to ISO 289-1, from about 20 MU to about 100 MU, for example, from about 20 MU to about 90 MU, or from about 20 MU to about 80 MU, or from about 20 MU to about 70 MU, or from about 20 MU to about 60 MU, or from about 20 MU to about 50 MU, from about 25 MU to about 90 MU, or from about 25 MU to about 80 MU, or from about 25 MU to about 70 MU, or from about 25 MU to about 60 MU, or from about 25 MU to about 50 MU, from about 30 MU to about 90 MU, or from about 30 MU to about 80 MU, or from about 30 MU to about 70 MU, or from about 30 MU to about 60 MU, or from about 30 MU to about 50 MU, from about 35 MU to about 90 MU, or from about 35 MU to about 80 MU, or from about 35 MU to about 70 MU, or from about 35 MU to about 60 MU, or from about 35 MU to about 50 MU, from about 40 MU to about 90 MU, or from about 40 MU to about 80 MU, or from about 40 MU to about 70 MU, or from about 40 MU to about 60 MU, or from about 40 MU to about 50 MU, from about 25 MU to about 50 MU, or from about 30 MU to about 50 MU, or from about 32 MU to about 50 MU, or from about 35 MU to about 50 MU, or from about 36 MU to about 50 MU, or from about 20 MU to about 40 MU, or from about 25 MU to about 40 MU, or from about 30 MU to about 40 MU, or from about 32 MU to about 40 MU, or from about 35 MU to about 40 MU, or from about 36 MU to about 40 MU, or from about 20 MU to about 38 MU, or from about 25 MU to about 38 MU, or from about 30 MU to about 38 MU, or from about 32 MU to about 38 MU, or from about 35 MU to about 38 MU, or from about 36 MU to about 38 MU, or from about 20 MU to about 37 MU, or from about 25 MU to about 37 MU, or from about 30 MU to about 37 MU, or from about 32 MU to about 37 MU, or from about 35 MU to about 37 MU, or from about 36 MU to about 37 MU, or from about 20 MU to about 35 MU, or from about 25 MU to about 35 MU, or from about 30 MU to about 35 MU, or from about 32 MU to about 35 MU, or from about 20 MU to about 33 MU, or from about 25 MU to about 33 MU, or from about 30 MU to about 33 MU, or from about 32 MU to about 33 MU.

The polymer composition may have a storage modulus G' (of the complex dynamic modulus $G = G' + iG''$) at 150 % extension, obtained using a moving die rheometer according to ISO 13145, no less than about 15 kPa, for example, no less than about 20 kPa. The polymer composition may have a storage modulus G' at 150 % extension, obtained using a moving die rheometer according to ISO 13145, no greater than about 50 kPa, for example, no greater than about 40 kPa, or no greater than about 35 kPa, or no greater than about 32 kPa. The polymer composition may have a storage modulus G' at 150 % extension, obtained using a moving die rheometer according to ISO 13145, from about 15 kPa to about 50 kPa, for example, from about 15 kPa to about 40 kPa, or from about 15 kPa to about 35 kPa, or from about 15 kPa to about 32 kPa, or from about 20 kPa to about 50 kPa, or from about 20 kPa to about 40 kPa, or from about 20 kPa to about 35 kPa, or from about 20 kPa to about 32 kPa.

The polymer composition may have a density, measured according to ISO 2781, of no less than about 1.0 kg/m$^3$, for example, no less than about 1.10 kg/m$^3$, or no less than about 1.20 kg/m$^3$, or no less than about 1.25 kg/m$^3$, or no less than about 1.30 kg/m$^3$, or no less than about 1.33 kg/m$^3$. The polymer composition may have a density, measured according to ISO 2781, of no more than about 1.50 kg/m$^3$, for example, no more than about 1.45 kg/m$^3$, or no more than about 1.40 kg/m$^3$, or no more than about 1.35 kg/m$^3$, or no more than about 1.34 kg/m$^3$. The polymer composition may have a density, measured according to ISO 2781, from about 1.0 kg/m$^3$ to about 1.50 kg/m$^3$, for example, from about 1.10 kg/m$^3$ to about 1.50 kg/m$^3$, or from about 1.20 kg/m$^3$ to about 1.50 kg/m$^3$, or from about 1.0 kg/m$^3$ to about 1.40 kg/m$^3$, or from about 1.10 kg/m$^3$ to about 1.40 kg/m$^3$, or from about 1.20 kg/m$^3$ to about 1.40 kg/m$^3$, or from about 1.0 kg/m$^3$ to about 1.35 kg/m$^3$, 1.10 kg/m$^3$ to about 1.35 kg/m$^3$, 1.20 kg/m$^3$ to about 1.35 kg/m$^3$, or from about 1.25 kg/m$^3$ to about 1.50 kg/m$^3$, or from about 1.30 kg/m$^3$ to about 1.50 kg/m$^3$, or from about 1.33 kg/m$^3$ to about 1.50 kg/m$^3$, or from about 1.20 kg/m$^3$ to about 1.45 kg/m$^3$, or from about 1.25 kg/m$^3$ to about 1.45 kg/m$^3$, or from about 1.30 kg/m$^3$ to about 1.45 kg/m$^3$, or from about 1.33 kg/m$^3$ to about 1.45 kg/m$^3$, or from about 1.20 kg/m$^3$ to about 1.40 kg/m$^3$, or from about 1.25 kg/m$^3$ to about 1.40 kg/m$^3$, or from about 1.30 kg/m$^3$ to about 1.40 kg/m$^3$, or from about 1.33 kg/m$^3$ to about 1.40 kg/m$^3$, or from about 1.20 kg/m$^3$ to about 1.35 kg/m$^3$, or from about 1.25 kg/m$^3$ to about 1.35 kg/m$^3$, or from about 1.30 kg/m$^3$ to about 1.35 kg/m$^3$, or from about 1.33 kg/m$^3$ to about 1.35 kg/m$^3$, or from about 1.20 kg/m$^3$ to about 1.34 kg/m$^3$, or from about 1.25 kg/m$^3$ to about 1.34 kg/m$^3$, or from about 1.30 kg/m$^3$ to about 1.34 kg/m$^3$, or from about 1.33 kg/m$^3$ to about 1.34 kg/m$^3$.

The polymer composition may have a modulus (i.e. tensile modulus) at 50 % elongation, $M_{50}$, as measured according to ISO 37, of no less than about 0.5 MPa, for example, no less than about 0.8 MPa, or no less than about 0.9 MPa, or no less than about 1.0 MPa, or no less than about 1.1 MPa, or no less than about 1.2 MPa. The polymer composition may have a modulus (i.e. tensile modulus) at 50 % elongation, $M_{50}$, as measured according to ISO 37, of no more than about 1.7 MPa, for example, no more than about 1.6 MPa, or no more than about 1.5 MPa, or no more than about 1.4 MPa, or no more than about 1.3 MPa, or no more than about 1.2 MPa, or no more than about 1.1 MPa. The polymer composition may have a modulus (i.e. tensile modulus) at 50 % elongation, $M_{50}$, as measured according to ISO 37, from about 0.5 MPa to about 1.7 MPa, for example, from about 0.5 MPa to about 1.6 MPa, or from about 0.5 MPa to about 1.5 MPa, or from about 0.8 MPa to about 1.7 MPa, or from about 0.8 MPa to about 1.6 MPa, or from about 0.8 MPa to about 1.5 MPa, or from about 0.9 MPa to about 1.7 MPa, or from about 0.9 MPa to about 1.6 MPa, or from about 0.9 MPa to about 1.5 MPa, or from about 1.0 MPa to about 1.5 MPa, or from about 1.1 MPa to about 1.5 MPa, or from about 1.2 MPa to about 1.5 MPa, or from about 0.5 MPa to about 1.4 MPa, or from about 0.8 MPa to about 1.4 MPa, or from about 0.9 MPa to about 1.4 MPa, or from about 1.0 MPa to about 1.4 MPa, or from about 1.1 MPa to about 1.4 MPa, or from about 1.2 MPa to about 1.4 MPa, or from about 0.5 MPa to about 1.3 MPa, or from about 0.8 MPa to about 1.3 MPa, or from about 0.9 MPa to about 1.3 MPa, or from about 1.0 MPa to about 1.3 MPa, or from about 1.1 MPa to about 1.3 MPa, or from about 1.2 MPa to about 1.3 MPa, or from about 0.5 MPa to about 1.2 MPa, or from about 0.8 MPa to about 1.2 MPa, or from about 0.9 MPa to about 1.2 MPa, or from about 1.0 MPa to about 1.2 MPa, or from about 1.1 MPa to about 1.2 MPa, or from about 0.5 MPa to about 1.1 MPa, or from about 0.8 MPa to about 1.1 MPa, or from about 0.9 MPa to about 1.1 MPa, or from about 1.0 MPa to about 1.1 MPa.

The polymer composition may have a modulus (i.e. tensile modulus) at 100 % elongation, $M_{100}$, as measured according to ISO 37, of no less than about 1.0 MPa, for example, no less than about 1.2 MPa, or no less than about 1.4 MPa, or no less than about 1.5 MPa, or no less than about 1.6 MPa, or no less than about 1.8 MPa. The polymer composition may have a modulus (i.e. tensile modulus) at 100 % elongation, $M_{100}$, as measured according to ISO 37, of no more than about 2.5 MPa, for example, no more than about 2.4 MPa, or no more than about 2.2 MPa, or no more than about 2.0 MPa, or no more than about 1.9 MPa, or no more than about 1.8 MPa, or no more than about 1.6 MPa. The polymer composition may have a modulus (i.e. tensile modulus) at 100 % elongation, $M_{100}$, as measured according to ISO 37, from about 1.0 MPa to about 2.5 MPa, for example, from about 1.2 MPa to about 2.5 MPa, or from about 1.4 MPa to about 2.5 MPa, or from about 1.5 MPa to about 2.5 MPa, or from about 1.6 MPa to about 2.5 MPa, or from about 1.8 MPa to about 2.5 MPa, or from about 1.0 MPa to about 2.4 MPa, or from about 1.2 MPa to about 2.4 MPa, or from about 1.4 MPa to about 2.4 MPa, or from about 1.5 MPa to about 2.4 MPa, or from about 1.6 MPa to about 2.4 MPa, or from about 1.8 MPa to about 2.4 MPa, or from about 1.0 MPa to about 2.2 MPa, or from about 1.2 MPa to about 2.2 MPa, or from about 1.4 MPa to about 2.2 MPa, or from about 1.5 MPa to about 2.2 MPa, or from about 1.6 MPa to about 2.2 MPa, or from about 1.8 MPa to about 2.2 MPa, or from about 1.0 MPa to about 2.0 MPa, or from about 1.2 MPa to about 2.0 MPa, or from about 1.4 MPa to about 2.0 MPa, or from about 1.5 MPa to about 2.0 MPa, or from about 1.6 MPa to about 2.0 MPa, or from about 1.8 MPa to about 2.0 MPa, or from about 1.0 MPa to about 1.9 MPa, or from about 1.2 MPa to about 1.9 MPa, or from about 1.4 MPa to about 1.9 MPa, or from about 1.5 MPa to about 1.9 MPa, or from about 1.6 MPa to about 1.9 MPa, or from about 1.8 MPa to about 1.9 MPa, or from about 1.0 MPa to about 1.8 MPa, or from about 1.2 MPa to about 1.8 MPa, or from about 1.4 MPa to about 1.8 MPa, or from about 1.5 MPa to about 1.8 MPa, or from about 1.6 MPa to about 1.8 MPa, or from about 1.0 MPa to about 1.6 MPa, or from about 1.2 MPa to about 1.6 MPa, or from about 1.4 MPa to about 1.6 MPa, or from about 1.5 MPa to about 1.6 MPa.

The polymer composition may have a modulus (i.e. tensile modulus) at 300 % elongation, $M_{300}$, as measured according to ISO 37, of no less than about 1.5 MPa, for example, no less than about 1.6 MPa, or no less than about 2.0 MPa, or no less than about 2.2 MPa, or no less than about 2.4 MPa, or no less than about 2.5 MPa, or no less than about 2.6 MPa, or no less than about 2.8 MPa, or no less than about 2.9 MPa, or no less than about 3.0 MPa, or no less than about 3.1 MPa, or no less than about 3.2 MPa, or no less than about 3.3 MPa. The polymer composition may have a modulus (i.e. tensile modulus) at 300 % elongation, $M_{300}$, as measured according to ISO 37,of no more than about 5.5 MPa, for example, no more than about 5.0 MPa, or no more than about 4.5 MPa, or no more than about 4.0 MPa, or no more than about 3.5 MPa, or no more than about 3.4 MPa, or no more than about 3.3 MPa, or no more than about 3.2 MPa, or no more than about 3.1 MPa, or no more than about 3.0 MPa, or no more than about 2.9 MPa, or no more than about 2.7 MPa, or no more than about 2.6 MPa. The polymer composition may have a modulus (i.e. tensile modulus) at 300 % elongation, $M_{300}$, as measured according to ISO 37, of from about 1.5 MPa to about 5.5 MPa, or from about 1.5 MPa to about 5.0 MPa, for example, from about 1.5 MPa to about 4.5 MPa, or from about 1.5 MPa to about 4.0 MPa, or from about 1.5 MPa to about 3.5 MPa, or from about 1.5 MPa to about 3.4 MPa, or from about 1.5 MPa to about 3.3 MPa, or from about 1.5 MPa to about 3.2 MPa, or from about 1. 5 MPa to about 3.1 MPa, or from about 1.5 MPa to about 3.0 MPa, or from about 1.5 MPa to about 2.9 MPa, or from about 1.5 MPa to about 2.7 MPa, or from about 1.5 MPa to about 2.6 MPa, or from about 1.6 MPa to about 5.5 MPa, or from about 1.6 MPa to about 5.0 MPa, or from about 1.6 MPa to about 4.5 MPa, or from about 1.6 MPa to about 4.0 MPa, or from about 1.6 MPa to about 3.5 MPa, or from about 1.6 MPa to about 3.4 MPa, or from about 1.6 MPa to about 3.3 MPa, or from about 1.6 MPa to about 3.2 MPa, or from about 1.6 MPa to about 3.1 MPa, or from about 1.6 MPa to about 3.0 MPa, or from about 1.6 MPa to about 2.9 MPa, or from about 1.6 MPa to about 2.7 MPa, or from about 1.6 MPa to about 2.6 MPa, or from about 2.0 MPa to about 5.5 MPa, or from about 2.0 MPa to about 5.0 MPa, or from about 2.0 MPa to about 4.5 MPa, or from about 2.0 MPa to about 4.0 MPa, or from about 2.0 MPa to about 3.5 MPa, or from about 2.0 MPa to about 3.4 MPa, or from about 2.0 MPa to about 3.3 MPa, or from about 2.0 MPa to about 3.2 MPa, or from about 2.0 MPa to about 3.1 MPa, or from about 2.0 MPa to about 3.0 MPa, or from about 2.0 MPa to about 2.9 MPa, or from about 2.0 MPa to about 2.7 MPa, or from about 2.0 MPa to about 2.6 MPa, or from about 2.2 MPa to about 4.5 MPa, or from about 2.4 MPa to about 4.5 MPa, or from about 2.5 MPa to about 4.5 MPa, or from about 2.6 MPa to about 4.5 MPa, or from about 2.8 MPa to about 4.5 MPa, or from about 2.9 MPa to about 4.5 MPa, or from about 3.0 MPa to about 4.5 MPa, or from about 3.1 MPa to about 4.5 MPa, or from about 3.2 MPa to about 4.5 MPa, or from about 3.3 MPa to about 4.5 MPa, or from about 2.0 MPa to about 4.0 MPa, or from about 2.2 MPa to about 4.0 MPa, or from about 2.4 MPa to about 4.0 MPa, or from about 2.5 MPa to about 4.0 MPa, or from about 2.6 MPa to about 4.0 MPa, or from about 2.8 MPa to about 4.0 MPa, or from about 2.9 MPa to about 4.0 MPa, or from about 3.0 MPa to about 4.0 MPa, or from about 3.1 MPa to about 4.0 MPa, or from about 3.2 MPa to about 4.0 MPa, or from about 3.3 MPa to about 4.0 MPa, or from about 2.0 MPa to about 3.5 MPa, or from about 2.2 MPa to about 3.5 MPa, or from about 2.4 MPa to about 3.5 MPa, or from about 2.5 MPa to about 3.5 MPa, or from about 2.6 MPa to about 3.5 MPa, or from about 2.8 MPa to about 3.5 MPa, or from about 2.9 MPa to about 3.5 MPa, or from about 3.0 MPa to about 3.5 MPa, or from about 3.1 MPa to about 3.5 MPa, or from about 3.2 MPa to about 3.5 MPa, or from about 3.3 MPa to about 3.5 MPa, or from about 2.0 MPa to about 3.4 MPa, or from about 2.2 MPa to about 3.4 MPa, or from about 2.4 MPa to about 3.4 MPa, or from about 2.5 MPa to about 3.4 MPa, or from about 2.6 MPa to about 3.4 MPa, or from about 2.8 MPa to about 3.4 MPa, or from about 2.9 MPa to about 3.4 MPa, or from about 3.0 MPa to about 3.4 MPa, or from about 3.1 MPa to about 3.4 MPa, or from about 3.2 MPa to about 3.4 MPa, or from about 3.3 MPa to about 3.4 MPa, or from about 2.0 MPa to about 3.3 MPa, or from about 2.2 MPa to about 3.3 MPa, or from about 2.4 MPa to about 3.3 MPa, or from about 2.5 MPa to about 3.3 MPa, or from about 2.6 MPa to about 3.3 MPa, or from about 2.8 MPa to about 3.3 MPa, or from about 2.9 MPa to about 3.3 MPa, or from about 3.0 MPa to about 3.3 MPa, or from about 3.1 MPa to about 3.3 MPa, or from about 3.2 MPa to about 3.3 MPa, or from about 2.0 MPa to about 3.2 MPa, or from about 2.2 MPa to about 3.2 MPa, or from about 2.4 MPa to about 3.2 MPa, or from about 2.5 MPa to about 3.2 MPa, or from about 2.6 MPa to about 3.2 MPa, or from about 2.8 MPa to about 3.2 MPa, or from about 2.9 MPa to about 3.2 MPa, or from about 3.0 MPa to about 3.2 MPa, or from about 3.1 MPa to about 3.2 MPa, or from about 2.0 MPa to about 3.1 MPa, or from about 2.2 MPa to about 3.1 MPa, or from about 2.4 MPa to about 3.1 MPa, or from about 2.5 MPa to about 3.1 MPa, or from about 2.6 MPa to about 3.1 MPa, or from about 2.8 MPa to about 3.1 MPa, or from about 2.9 MPa to about 3.1 MPa, or from about 3.0 MPa to about 3.1 MPa, or from about 2.0 MPa to about 3.0 MPa, or from about 2.2 MPa to about 3.0 MPa, or from about 2.4 MPa to about 3.0 MPa, or from about 2.5 MPa to about 3.0 MPa, or from about 2.6 MPa to about 3.0 MPa, or from about 2.8 MPa to about 3.0 MPa, or from about 2.9 MPa to about 3.0 MPa, or from about 2.0 MPa to about 2.9 MPa, or from about 2.2 MPa to about 2.9 MPa, or from about 2.4 MPa to about 2.9 MPa, or from about 2.5 MPa to about 2.9 MPa, or from about 2.6 MPa to about 2.9 MPa, or from about 2.8 MPa to about 2.9 MPa, or from about 2.0 MPa to about 2.7 MPa, or from about 2.2 MPa to about 2.7 MPa, or from about 2.4 MPa to about 2.7 MPa, or from about 2.5 MPa to about 2.7 MPa, or from about 2.6 MPa to about 2.7 MPa, or from about 2.0 MPa to about 2.6 MPa, or from about 2.2 MPa to about 2.6 MPa, or from about 2.4 MPa to about 2.6 MPa, or from about 2.5 MPa to about 2.6 MPa.

The polymer composition may have a reinforcement index, $M_{300}/M_{100}$, no less than about 1.45, for example, no less than about 1.50, or no less than about 1.60, or no less than about 1.62, or no less than about 1.70, or no less than about 1.80, or no less than about 1.90. The polymer composition may have a reinforcement index, $M_{300}/M_{100}$, no more than about 3.10, for example, no more than about 3.0, or no more than about 2.90, or no more than about 2.80, or no more than about 2.70, or no more than about 2.60, or no more than about 2.40, or no more than about 2.50, or no more than about 2.30, or no more than about 2.10, or no more than about 2.00, or no more than about 1.94, or no more than about 1.90, or no more than about 1.80, or no more than about 1.70. The polymer composition may have a reinforcement index, $M_{300}/M_{100}$, from about 1.45 to about 3.10, for example, from about 1.45 to about 3.0, or from about 1.45 to about 2.90, or from about 1.45 to about 2.80, or from about 1.45 to about 2.70, or from about 1.45 to about 2.60, or from about 1.45 to about 2.40, or from about 1.45 to about 2.50, or from about 1.45 to about 2.30, or from about 1.45 to about 2.10, or from about 1.45 to about 2.00, or from about 1.45 to about 1.94, or from about 1.45 to about 1.90, or from about 1.45 to about 1.80, or from about 1.45 to about 1.70, or from about 1.50 to about 3.10, or from about 1.50 to about 3.0, or from about 1.50 to about 2.90, or from about 1.50 to about 2.80, or from about 1.50 to about 2.70, or from about 1.50 to about 2.60, or from about 1.50 to about 2.40, or from about 1.50 to about 2.50, or from about 1.50 to about 2.30, or from about 1.50 to about 2.10, or from about 1.50 to about 2.00, or from about 1.50 to about 1.94, or from about 1.50 to about 1.90, or from about 1.50 to about 1.80, or from about 1.50 to about 1.70, or from about 1.50 to about 2.50, or from about 1.60 to about 2.50, or from about 1.62 to about 2.50, or from about 1.70 to about 2.50, or from about 1.80 to about 2.50, or from about 1.90 to about 2.50, or from about 1.50 to about 2.30, or from about 1.60 to about 2.30, or from about 1.62 to about 2.30, or from about 1.70 to about 2.30, or from about 1.80 to about 2.30, or from about 1.90 to about 2.30, or from about 1.50 to about 2.10, or from about 1.60 to about 2.10, or from about 1.62 to about 2.10, or from about 1.70 to about 2.10, or from about 1.80 to about 2.10, or from about 1.90 to about 2.10, or from about 1.50 to about 2.00, or from about 1.60 to about 2.00, or from about 1.62 to about 2.00, or from about 1.70 to about 2.00, or from about 1.80 to about 2.00, or from about 1.90 to about 2.00, or from about 1.50 to about 1.94, or from about 1.60 to about 1.94, or from about 1.62 to about 1.94, or from about 1.70 to about 1.94, or from about 1.80 to about 1.94, or from about 1.90 to about 1.94, or from about 1.50 to about 1.90, or from about 1.60 to about 1.90, or from about 1.62 to about 1.90, or from about 1.70 to about 1.90, or from about 1.80 to about 1.90, or from about 1.50 to about 1.80, or from about 1.60 to about 1.80, or from about 1.62 to about 1.80, or from about 1.70 to about 1.80, or from about 1.50 to about 1.70, or from about 1.60 to about 1.70, or from about 1.62 to about 1.70.

The polymer composition may have a tensile strength, as measured according to ISO 37, no less than about 6 MPa, for example, no less than about 8 MPa, or no less than about 9 MPa, or no less than about 9.3 MPa, or no less than about 10 MPa. The polymer composition may have a tensile strength, as measured according to ISO 37, no more than about 15 MPa, for example, no more than about 12 MPa, or no more than about 11 MPa, or no more than about 10.8 MPa, or no more than about 10 MPa. The polymer composition may have a tensile strength, as measured according to ISO 37, from about 6 MPa to about 15 MPa, for example, from about 6 MPa, to about 12 MPa, or from about 6 MPa to about 11 MPa, or from about 6 MPa to about 10.8 MPa, or from about 6 MPa to about 10 MPa, or from about 8 MPa to about 15 MPa, or from about 9 MPa to about 15 MPa, or from about 9.3 MPa to about 15 MPa, or from about 10 MPa to about 15 MPa, or from about 8 MPa to about 12 MPa, or from about 9 MPa to about 12 MPa, or from about 9.3 MPa to about 12 MPa, or from about 10 MPa to about 12 MPa, or from about 8 MPa to about 11 MPa, or from about 9 MPa to about 11 MPa, or from about 9.3 MPa to about 11 MPa, or from about 10 MPa to about 11 MPa, or from about 8 MPa to about 10.8 MPa, or from about 9 MPa to about 10.8 MPa, or from about 9.3 MPa to about 10.8 MPa, or from about 10 MPa to about 10.8 MPa, or from about 8 MPa to about 10 MPa, or from about 9 MPa to about 10 MPa, or from about 9.3 MPa to about 10 MPa.

The polymer composition may have an elongation at break, as measured according to ISO 37, of no less than about 500 %, for example, no less than about 600 %, or no less than about 700 %, or no less than about 710 %, or no less than about 1000 %. The polymer composition may have an elongation at break, as measured according to ISO 37, of no more than about 1500 %, for example, no more than about 1200 %, or no more than about 1100 %, or no more than about 1010 %, or no more than about 800 %. The polymer composition may have an elongation at break, as measured according to ISO 37, from about 500 % to about 1500 %, for example, from about 600 % to about 1500 %, or from about 700 % to about 1500 %, or from about 710 % to about 1500 %, or from about 1000 % to about 1500 %, or from about 500 % to about 1200 %, or from about 600 % to about 1200 %, or from about 700 % to about 1200 %, or from about 710 % to about 1200 %, or from about 1000 % to about 1200 %, or from about 500 % to about 1100 %, or from about 600 % to about 1100 %, or from about 700 % to about 1100 %, or from about 710 % to about 1100 %, or from about 1000 % to about 1100 %, or from about 500 % to about 1010 %, or from about 600 % to about 1010 %, or from about 700 % to about 1010 %, or from about 710 % to about 1010 %, or from about 1000 % to about 1010 %, or from about 500 % to about 800 %, or from about 600 % to about 800 %, or from about 700 % to about 800 %, or from about 710 % to about 800 %.

The polymer composition may have a tear resistance, as measured according to ISO 34, no less than about 20 N/mm, for example, no less than about 25 N/mm, or no less than about 29 N/mm, or no less than about 30 N/mm. The polymer composition may have a tear resistance, as measured according to ISO 34, no more than about 40 N/mm, for example, no more than about 35 N/mm, or no more than about 32 N/mm, or no more than about 30 N/mm. The polymer composition may have a tear resistance, as measured according to ISO 34, from about 20 N/mm to about 40 N/mm, for example, from about 25 N/mm to about 40 N/mm, or from about 29 N/mm to about 40 N/mm, or from about 30 N/mm to about 40 N/mm, or from about 20 N/mm to about 35 N/mm, or from about 25 N/mm to about 35 N/mm, or from about 29 N/mm to about 35 N/mm, or from about 30 N/mm to about 35 N/mm, or from about 20 N/mm to about 32 N/mm, or from about 25 N/mm to about 32 N/mm, or from about 29 N/mm to about 32 N/mm, or from about 30 N/mm to about 32 N/mm, or from about 20 N/mm to about 30 N/mm, or from about 25 N/mm to about 30 N/mm, or from about 29 N/mm to about 30 N/mm.

The polymer composition may have a Shore A hardness, measured according to ISO 7619-1, no less than about 30, for example, no less than about 40, or no less than about 50. The polymer composition may have a Shore A hardness, measured according to ISO 7619-1, no more than about 70, for example, no more than about 60, or no more than about 55, or no more than about 52. The polymer composition may have a Shore A hardness, measured according to ISO 7619-1, from about 30 to about 70, for example, from about 40 to about 70, or from about 50 to about 70, or from about 30 to about 60, or from about 40 to about 60, or from about 50 to about 60, or from about 30 to about 55, or from about 40 to about 55, or from about 50 to about 55, or from about 30 to about 52, or from about 40 to about 52, or from about 50 to about 52.

The polymer composition may have a compression set, as measured according to ISO 815, no less than about 10 %, for example, no less than about 20 %, or no less than about 30 %, or no less than about 35 %, or no less than about 38 %. The polymer composition may have a compression set, as measured according to ISO 815, no more than about 50 %, for example, no more than about 45 %, or no more than about 43 %. The polymer composition may have a compression set, as measured according to ISO 815, from about 10 % to about 50 %, for example, from about 20 % to about 50 %, or from about 30 % to about 50 %, or from about 35 % to about 50 %, or from about 38 % to about 50 %, or from about 10 % to about 45 %, or from about 20 % to about 45 %, or from about 30 % to about 45 %, or from about 35 % to about 45 %, or from about 38 % to about 45 %, or from about 10 % to about 43 %, or from about 20 % to about 43 %, or from about 30 % to about 43 %, or from about 35 % to about 43 %, or from about 38 % to about 43 %.

The polymer composition may exhibit an abrasion loss, when tested according to ISO 4649, no less than about 0.200 g, for example, no less than about 0.210 g, or no less than about 0.250 g, or no less than about 0.300 g. The polymer composition may exhibit an abrasion loss, when tested according to ISO 4649, no greater than about 0.450 g, for example, no greater than about 0.425 g, or no greater than about 0.400 g, or no greater than about 0.300g. The polymer composition may exhibit an abrasion loss, when tested according to ISO 4649, from about 0.200 g to about 0.450 g, for example, from about 0.210 g to about 0.450 g, or from about 0.250 g to about 0.450 g, or from about 0.300 g to about 0.450 g, or from about 0.200 g to about 0.425 g, or from about 0.210 g to about 0.425 g, or from about 0.250 g to about 0.425 g, or from about 0.300 g to about 0.425 g, or from about 0.200 g to about 0.400 g, or from about 0.210 g to about 0.400 g, or from about 0.250 g to about 0.400 g, or from about 0.300 g to about 0.400 g, or from about 0.200 g to about 0.300 g, or from about 0.210 g to about 0.300 g, or from about 0.250 g to about 0.300 g, or from about 0.300 g to about 0.300 g.

The polymer composition may have an abrasion resistance, according to ISO 4649, no less than about 0.20 $cm^3$, for example, no less than about 0.25 $cm^3$, or no less than about 0.30 $cm^3$. The polymer composition may have an abrasion resistance, according to ISO 4649, no greater than about 0.60 $cm^3$, for example, no greater than about 0.55 $cm^3$, or no greater than about 0.50 $cm^3$. The polymer composition may have an abrasion resistance, according to ISO 4649, from about 0.20 $cm^3$ to about 0.60 $cm^3$, for example, from about 0.25 $cm^3$ to about 0.60 $cm^3$, or from about 0.30 $cm^3$ to about 0.60 $cm^3$, or from about 0.20 $cm^3$ to about 0.55 $cm^3$, or from about 0.25 $cm^3$ to about 0.55 $cm^3$, or from about 0.30 $cm^3$ to about 0.55 $cm^3$, from about 0.20 $cm^3$ to about 0.50 $cm^3$, or from about 0.25 $cm^3$ to about 0.50 $cm^3$, or from about 0.30 $cm^3$ to about 0.50 $cm^3$.

The polymer composition may: (a) comprise an elastomer (e.g. a rubber) and have a $t_{90}$ vulcanization time, as measured using a rotorless curemeter according to ISO 6502 (Part 3), from about 0.5 to about 30 minutes, for example, from about 0.5 to about 20 minutes, or from about 0.5 to about 10 minutes, or from about 1 to about 5 minutes, or from about 1 to about 3 minutes, or from about 2 to about 10 minutes, or from about 2 to about 5, or from about 2 to about 3 minutes; (b) have a crosslink density, as measured using a rotorless curemeter according to ISO 6502 (Part 3), from about 10 to about 55, for example, from about 20 to about 55, or from about 30 to about 55, or from about 35 to about 55, from about 40 to about 55, or from about 41 to about 55, or from about 42 to about 55, or from about 45 to about 55, or from about 46 to about 55, or from about 35 to about 50, or from about 40 to about 50, or from about 41 to about 50, or from about 42 to about 50, or from about 45 to about 50, or from about 46 to about 50, or from about 35 to about 47, or from about 40 to about 47, or from about 41 to about 47, or from about 42 to about 47, or from about 45 to about 47, or from about 46 to about 47, or from about 35 to about 46, or from about 40 to about 46, or from about 41 to about 46, or from about 42 to about 46, or from about 45 to about 46, or from about 35 to about 43, or from about 40 to about 43, or from about 41 to about 43, or from about 42 to about 43, or from about 35 to about 42, or from about 40 to about 42, or from about 41 to about 42, or from about 35 to about 41, or from about 40 to about 41; (c) have a Mooney viscosity at 100°C, measured using a shearing-disc viscometer according to ISO 289-1, from about 20 MU to about 100 MU, for example, from about 20 MU to about 90 MU, or from about 20 MU to about 80 MU, or from about 20 MU to about 70 MU, or from about 20 MU to about 60 MU, or from about 20 MU to about 50 MU, from about 25 MU to about 90 MU, or from about 25 MU to about 80 MU, or from about 25 MU to about 70 MU, or from about 25 MU to about 60 MU, or from about 25 MU to about 50 MU, from about 30 MU to about 90 MU, or from about 30 MU to about 80 MU, or from about 30 MU to about 70 MU, or from about 30 MU to about 60 MU, or from about 30 MU to about 50 MU, from about 35 MU to about 90 MU, or from about 35 MU to about 80 MU, or from about 35 MU to about 70 MU, or from about 35 MU to about 60 MU, or from about 35 MU to about 50 MU, from about 40 MU to about 90 MU, or from about 40 MU to about 80 MU, or from about 40 MU to about 70 MU, or from about 40 MU to about 60 MU, or from about 40 MU to about 50 MU, from about 25 MU to about 50 MU, or from about 30 MU to about 50 MU, or from about 32 MU to about 50 MU, or from about 35 MU to about 50 MU, or from about 36 MU to about 50 MU, or from about 20 MU to about 40 MU, or from about 25 MU to about 40 MU, or from about 30 MU to about 40 MU, or from about 32 MU to about 40 MU, or from about 35 MU to about 40 MU, or from about 36 MU to about 40 MU, or from about 20 MU to about 38 MU, or from about 25 MU to about 38 MU, or from about 30 MU to about 38 MU, or from about 32 MU to about 38 MU, or from about 35 MU to about 38 MU, or from about 36 MU to about 38 MU, or from about 20 MU to about 37 MU, or from about 25 MU to about 37 MU, or from about 30 MU to about 37 MU, or from about 32 MU to about 37 MU, or from about 35 MU to about 37 MU, or from about 36 MU to about 37 MU, or from about 20 MU to about 35 MU, or from about 25 MU to about 35 MU, or from about 30 MU to about 35 MU, or from about 32 MU to about 35 MU, or from about 20 MU to about 33 MU, or from about 25 MU to about 33 MU, or from about 30 MU to about 33 MU, or from about 32 MU to about 33 MU; (d) have a storage modulus G' (of the complex dynamic modulus $G = G' + iG''$) at 150 % extension, obtained using a moving die rheometer according to ISO 13145, from about 15 kPa to about 50 kPa, for example, from about 15 kPa to about 40 kPa, or from about 15 kPa to about 35 kPa, or from about 15 kPa to about 32 kPa, or from about 20 kPa to about 50 kPa, or from about 20 kPa to about 40 kPa, or from about 20 kPa to about 35 kPa, or from about 20 kPa to about 32 kPa; (e) have a density, measured according to ISO 2781, from about 1.0 $kg/m^3$ to about 1.50 $kg/m^3$, for example, from about 1.10 $kg/m^3$ to about 1.50 $kg/m^3$, or from about 1.20 $kg/m^3$ to about 1.50 $kg/m^3$, or from about 1.0 $kg/m^3$ to about 1.40 $kg/m^3$, or from about 1.10 $kg/m^3$ to about 1.40 $kg/m^3$, or from about 1.20 $kg/m^3$ to about 1.40 $kg/m^3$, or from about 1.0 $kg/m^3$ to about 1.35 $kg/m^3$, 1.10 $kg/m^3$ to about 1.35 $kg/m^3$, 1.20 $kg/m^3$ to about 1.35 $kg/m^3$, or from about 1.25 $kg/m^3$ to about 1.50 $kg/m^3$, or from about 1.30 $kg/m^3$ to about 1.50 $kg/m^3$, or from about 1.33 $kg/m^3$ to about 1.50 $kg/m^3$, or from about 1.20 $kg/m^3$ to about 1.45 $kg/m^3$, or from about 1.25 $kg/m^3$ to about 1.45 $kg/m^3$, or from about 1.30 $kg/m^3$ to about 1.45 $kg/m^3$, or from about 1.33 $kg/m^3$ to about 1.45 $kg/m^3$, or from about 1.20 $kg/m^3$ to about 1.40 $kg/m^3$, or from about 1.25 $kg/m^3$ to about 1.40 $kg/m^3$, or from about 1.30 $kg/m^3$ to about 1.40 $kg/m^3$, or from about 1.33 $kg/m^3$ to about 1.40 $kg/m^3$, or from about 1.20 $kg/m^3$ to about 1.35 $kg/m^3$, or from about 1.25 $kg/m^3$ to about 1.35 $kg/m^3$, or from about 1.30 $kg/m^3$ to about 1.35 $kg/m^3$, or from about 1.33 $kg/m^3$ to about 1.35 $kg/m^3$, or from about 1.20 $kg/m^3$ to about 1.34 $kg/m^3$, or from about 1.25 $kg/m^3$ to about 1.34 $kg/m^3$, or from about 1.30 $kg/m^3$ to about 1.34 $kg/m^3$, or from about 1.33 $kg/m^3$ to about 1.34 $kg/m^3$; (f) have a modulus (i.e. tensile modulus) at 50 % elongation, $M_{50}$, as measured according to ISO 37, from about 0.5 MPa to about 1.7 MPa, for example, from about 0.5 MPa to about 1.6 MPa, or from about 0.5 MPa to about 1.5 MPa, or from about 0.8 MPa to about 1.7 MPa, or from about 0.8 MPa to about 1.6 MPa, or from about 0.8 MPa to about 1.5 MPa, or from about 0.9 MPa to about 1.7 MPa, or from about 0.9 MPa to about 1.6 MPa, or from about 0.9 MPa to about 1.5 MPa, or from about 1.0 MPa to about 1.5 MPa, or from about 1.1 MPa to about 1.5 MPa, or from about 1.2 MPa to about 1.5 MPa, or from about 0.5 MPa to about 1.4 MPa, or from about 0.8 MPa to about 1.4 MPa, or from about 0.9 MPa to about 1.4 MPa, or from about 1.0 MPa to about 1.4 MPa, or from about 1.1 MPa to about 1.4 MPa, or from about 1.2 MPa to about 1.4 MPa, or from about 0.5 MPa to about 1.3 MPa, or from about 0.8 MPa to about 1.3 MPa, or from about 0.9 MPa to about 1.3 MPa, or from about 1.0 MPa to about 1.3 MPa, or from about 1.1 MPa to about 1.3 MPa, or from about 1.2 MPa to about 1.3 MPa, or from about 0.5 MPa to about 1.2 MPa, or from about 0.8 MPa to about 1.2 MPa, or from about 0.9 MPa to about 1.2 MPa, or from about 1.0 MPa to about 1.2 MPa, or from about 1.1 MPa to about 1.2 MPa, or from about 0.5 MPa to about 1.1 MPa, or from about 0.8 MPa to about 1.1 MPa, or from about 0.9 MPa to about 1.1 MPa, or from about 1.0 MPa to about 1.1 MPa; (g) have a modulus (i.e. tensile modulus) at 100 % elongation, $M_{100}$, as measured according to ISO 37, from about 1.0 MPa to about 2.5 MPa, for example, from about 1.2 MPa to about 2.5 MPa, or from about 1.4 MPa to about 2.5 MPa, or from about 1.5 MPa to about 2.5 MPa, or from about 1.6 MPa to about 2.5 MPa, or from about 1.8 MPa to about 2.5 MPa, or from about 1.0 MPa to about 2.4 MPa, or from about 1.2 MPa to about 2.4 MPa, or from about 1.4 MPa to about 2.4 MPa, or from about 1.5 MPa to about 2.4 MPa, or from about 1.6 MPa to about 2.4 MPa, or from about 1.8 MPa to about 2.4 MPa, or from about 1.0 MPa to about 2.2 MPa, or from about 1.2 MPa to about 2.2 MPa, or from about 1.4 MPa to about 2.2 MPa, or from about 1.5 MPa to about 2.2 MPa, or from about 1.6 MPa to about 2.2 MPa, or from about 1.8 MPa to about 2.2 MPa, or from about 1.0 MPa to about 2.0 MPa, or from about 1.2 MPa to about 2.0 MPa, or from about 1.4 MPa to about 2.0 MPa, or from about 1.5 MPa to about 2.0 MPa, or from about 1.6 MPa to about 2.0 MPa, or from about 1.8 MPa to about 2.0 MPa, or from about 1.0 MPa to about 1.9 MPa, or from about 1.2 MPa to about 1.9 MPa, or from about 1.4 MPa to about 1.9 MPa, or from about 1.5 MPa to about 1.9 MPa, or from about 1.6 MPa to about 1.9 MPa, or from about 1.8 MPa to about 1.9 MPa, or from about 1.0 MPa to about 1.8 MPa, or from about 1.2 MPa to about 1.8 MPa, or from about 1.4 MPa to about 1.8 MPa, or from about 1.5 MPa to about 1.8 MPa, or from about 1.6 MPa to about 1.8 MPa, or from about 1.0 MPa to about 1.6 MPa, or from about 1.2 MPa to about 1.6 MPa, or from about 1.4 MPa to about 1.6 MPa, or from about 1.5 MPa to about 1.6 MPa; (h) have a modulus (i.e. tensile modulus) at 300 % elongation, $M_{300}$, as measured according to ISO 37, of from about 1.5 MPa to about 5.5 MPa, or from about 1.5 MPa to about 5.0 MPa, for example, from about 1.5 MPa to about 4.5 MPa, or from about 1.5 MPa to about 4.0 MPa, or from about 1.5 MPa to about 3.5 MPa, or from about 1.5 MPa to about 3.4 MPa, or from about 1.5 MPa to about 3.3 MPa, or from about 1.5 MPa to about 3.2 MPa, or from about 1. 5 MPa to about 3.1 MPa, or from about 1.5 MPa to about 3.0 MPa, or from about 1.5 MPa to about 2.9 MPa, or from about 1.5 MPa to about 2.7 MPa, or from about 1.5 MPa to about 2.6 MPa, or from about 1.6 MPa to about 5.5 MPa, or from about 1.6 MPa to about 5.0 MPa, or from about 1.6 MPa to about 4.5 MPa, or from about 1.6 MPa to about 4.0 MPa, or from about 1.6 MPa to about 3.5 MPa, or from about 1.6 MPa to about 3.4 MPa, or from about 1.6 MPa to about 3.3 MPa, or from about 1.6 MPa to about 3.2 MPa, or from about 1.6 MPa to about 3.1 MPa, or from about 1.6 MPa to about 3.0 MPa, or from about 1.6 MPa to about 2.9 MPa, or from about 1.6 MPa to about 2.7 MPa, or from about 1.6 MPa to about 2.6 MPa, or from about 2.0 MPa to about 5.5 MPa, or from about 2.0 MPa to about 5.0 MPa, or from about 2.0 MPa to about 4.5 MPa, or from about 2.0 MPa to about 4.0 MPa, or from about 2.0 MPa to about 3.5 MPa, or from about 2.0 MPa to about 3.4 MPa, or from about 2.0 MPa to about 3.3 MPa, or from about 2.0 MPa to about 3.2 MPa, or from about 2.0 MPa to about 3.1 MPa, or from about 2.0 MPa to about 3.0 MPa, or from about 2.0 MPa to about 2.9 MPa, or from about 2.0 MPa to about 2.7 MPa, or from about 2.0 MPa to about 2.6 MPa, or from about 2.2 MPa to about 4.5 MPa, or from about 2.4 MPa to about 4.5 MPa, or from about 2.5 MPa to about 4.5 MPa, or from about 2.6 MPa to about 4.5 MPa, or from about 2.8 MPa to about 4.5 MPa, or from about 2.9 MPa to about 4.5 MPa, or from about 3.0 MPa to about 4.5 MPa, or from about 3.1 MPa to about 4.5 MPa, or from about 3.2 MPa to about 4.5 MPa, or from about 3.3 MPa to about 4.5 MPa, or from about 2.0 MPa to about 4.0 MPa, or from about 2.2 MPa to about 4.0 MPa, or from about 2.4 MPa to about 4.0 MPa, or from about 2.5 MPa to about 4.0 MPa, or from about 2.6 MPa to about 4.0 MPa, or from about 2.8 MPa to about 4.0 MPa, or from about 2.9 MPa to about 4.0 MPa, or from about 3.0 MPa to about 4.0 MPa, or from about 3.1 MPa to about 4.0 MPa, or from about 3.2 MPa to about 4.0 MPa, or from about 3.3 MPa to about 4.0 MPa, or from about 2.0 MPa to about 3.5 MPa, or from about 2.2 MPa to about 3.5 MPa, or from about 2.4 MPa to about 3.5 MPa, or from about 2.5 MPa to about 3.5 MPa, or from about 2.6 MPa to about 3.5 MPa, or from about 2.8 MPa to about 3.5 MPa, or from about 2.9 MPa to about 3.5 MPa, or from about 3.0 MPa to about 3.5 MPa, or from about 3.1 MPa to about 3.5 MPa, or from about 3.2 MPa to about 3.5 MPa, or from about 3.3 MPa to about 3.5 MPa, or from about 2.0 MPa to about 3.4 MPa, or from about 2.2 MPa to about 3.4 MPa, or from about 2.4 MPa to about 3.4 MPa, or from about 2.5 MPa to about 3.4 MPa, or from about 2.6 MPa to about 3.4 MPa, or from about 2.8 MPa to about 3.4 MPa, or from about 2.9 MPa to about 3.4 MPa, or from about 3.0 MPa to about 3.4 MPa, or from about 3.1 MPa to about 3.4 MPa, or from about 3.2 MPa to about 3.4 MPa, or from about 3.3 MPa to about 3.4 MPa, or from about 2.0 MPa to about 3.3 MPa, or from about 2.2 MPa to about 3.3 MPa, or from about 2.4 MPa to about 3.3 MPa, or from about 2.5 MPa to about 3.3 MPa, or from about 2.6 MPa to about 3.3 MPa, or from about 2.8 MPa to about 3.3 MPa, or from about 2.9 MPa to about 3.3 MPa, or from about 3.0 MPa to about 3.3 MPa, or from about 3.1 MPa to about 3.3 MPa, or from about 3.2 MPa to about 3.3 MPa, or from about 2.0 MPa to about 3.2 MPa, or from about 2.2 MPa to about 3.2 MPa, or from about 2.4 MPa to about 3.2 MPa, or from about 2.5 MPa to about 3.2 MPa, or from about 2.6 MPa to about 3.2 MPa, or from about 2.8 MPa to about 3.2 MPa, or from about 2.9 MPa to about 3.2 MPa, or from about 3.0 MPa to about 3.2 MPa, or from about 3.1 MPa to about 3.2 MPa, or from about 2.0 MPa to about 3.1 MPa, or from about 2.2 MPa to about 3.1 MPa, or from about 2.4 MPa to about 3.1 MPa, or from about 2.5 MPa to about 3.1 MPa, or from about 2.6 MPa to about 3.1 MPa, or from about 2.8 MPa to about 3.1 MPa, or from about 2.9 MPa to about 3.1 MPa, or from about 3.0 MPa to about 3.1 MPa, or from about 2.0 MPa to about 3.0 MPa, or from about 2.2 MPa to about 3.0 MPa, or from about 2.4 MPa to about 3.0 MPa, or from about 2.5 MPa to about 3.0 MPa, or from about 2.6 MPa to about 3.0 MPa, or from about 2.8 MPa to about 3.0 MPa, or from about 2.9 MPa to about 3.0 MPa, or from about 2.0 MPa to about 2.9 MPa, or from about 2.2 MPa to about 2.9 MPa, or from about 2.4 MPa to about 2.9 MPa, or from about 2.5 MPa to about 2.9 MPa, or from about 2.6 MPa to about 2.9 MPa, or from about 2.8 MPa to about 2.9 MPa, or from about 2.0 MPa to about 2.7 MPa, or from about 2.2 MPa to about 2.7 MPa, or from about 2.4 MPa to about 2.7 MPa, or from about 2.5 MPa to about 2.7 MPa, or from about 2.6 MPa to about 2.7 MPa, or from about 2.0 MPa to about 2.6 MPa, or from about 2.2 MPa to about 2.6 MPa, or from about 2.4 MPa to about 2.6 MPa, or from about 2.5 MPa to about 2.6 MPa; (i) have a reinforcement index, $M_{300}/M_{100}$, from about 1.45 to about 3.10, for example, from about 1.45 to about 3.0, or from about 1.45 to about 2.90, or from about 1.45 to about 2.80, or from about 1.45 to about 2.70, or from about 1.45 to about 2.60, or from about 1.45 to about 2.40, or from about 1.45 to about 2.50, or from about 1.45 to about 2.30, or from about 1.45 to about 2.10, or from about 1.45 to about 2.00, or from about 1.45 to about 1.94, or from about 1.45 to about 1.90, or from about 1.45 to about 1.80, or from about 1.45 to about 1.70, or from about 1.50 to about 3.10, or from about 1.50 to about 3.0, or from about 1.50 to about 2.90, or from about 1.50 to about 2.80, or from about 1.50 to about 2.70, or from about 1.50 to about 2.60, or from about 1.50 to about 2.40, or from about 1.50 to about 2.50, or from about 1.50 to about 2.30, or from about 1.50 to about 2.10, or from about 1.50 to about 2.00, or from about 1.50 to about 1.94, or from about 1.50 to about 1.90, or from about 1.50 to about 1.80, or from about 1.50 to about 1.70, or from about 1.50 to about 2.50, or from about 1.60 to about 2.50, or from about 1.62 to about 2.50, or from about 1.70 to about 2.50, or from about 1.80 to about 2.50, or from about 1.90 to about 2.50, or from about 1.50 to about 2.30, or from about 1.60 to about 2.30, or from about 1.62 to about 2.30, or from about 1.70 to about 2.30, or from about 1.80 to about 2.30, or from about 1.90 to about 2.30, or from about 1.50 to about 2.10, or from about 1.60 to about 2.10, or from about 1.62 to about 2.10, or from about 1.70 to about 2.10, or from about 1.80 to about 2.10, or from about 1.90 to about 2.10, or from about 1.50 to about 2.00, or from about 1.60 to about 2.00, or from about 1.62 to about 2.00, or from about 1.70 to about 2.00, or from about 1.80 to about 2.00, or from about 1.90 to about 2.00, or from about 1.50 to about 1.94, or from about 1.60 to about 1.94, or from about 1.62 to about 1.94, or from about 1.70 to about 1.94, or from about 1.80 to about 1.94, or from about 1.90 to about 1.94, or from about 1.50 to about 1.90, or from about 1.60 to about 1.90, or from about 1.62 to about 1.90, or from about 1.70 to about 1.90, or from about 1.80 to about 1.90, or from about 1.50 to about 1.80, or from about 1.60 to about 1.80, or from about 1.62 to about 1.80, or from about 1.70 to about 1.80, or from about 1.50 to about 1.70, or from about 1.60 to about 1.70, or from about 1.62 to about 1.70; (j) have a tensile strength, as measured according to ISO 37, from about 6 MPa to about 15 MPa, for example, from about 6 MPa, to about 12 MPa, or from about 6 MPa to about 11 MPa, or from about 6 MPa to about 10.8 MPa, or from about 6 MPa to about 10 MPa, or from about 8 MPa to about 15 MPa, or from about 9 MPa to about 15 MPa, or from about 9.3 MPa to about 15 MPa, or from about 10 MPa to about 15 MPa, or from about 8 MPa to about 12 MPa, or from about 9 MPa to about 12 MPa, or from about 9.3 MPa to about 12 MPa, or from about 10 MPa to about 12 MPa, or from about 8 MPa to about 11 MPa, or from about 9 MPa to about 11 MPa, or from about 9.3 MPa to about 11 MPa, or from about 10 MPa to about 11 MPa, or from about 8 MPa to about 10.8 MPa, or from about 9 MPa to about 10.8 MPa, or from about 9.3 MPa to about 10.8 MPa, or from about 10 MPa to about 10.8 MPa, or from about 8 MPa to about 10 MPa, or from about 9 MPa to about 10 MPa, or from about 9.3 MPa to about 10 MPa; (k) have an elongation at break, as measured according to ISO 37, from about 500 % to about 1500 %, for example, from about 600 % to about 1500 %, or from about 700 % to about 1500 %, or from about 710 % to about 1500 %, or from about 1000 % to about 1500 %, or from about 500 % to about 1200 %, or from about 600 % to about 1200 %, or from about 700 % to about 1200 %, or from about 710 % to about 1200 %, or from about 1000 % to about 1200 %, or from about 500 % to about 1100 %, or from about 600 % to about 1100 %, or from about 700 % to about 1100 %, or from about 710 % to about 1100 %, or from about 1000 % to about 1100 %, or from about 500 % to about 1010 %, or from about 600 % to about 1010 %, or from about 700 % to about 1010 %, or from about 710 % to about 1010 %, or from about 1000 % to about 1010 %, or from about 500 % to about 800 %, or from about 600 % to about 800 %, or from about 700 % to about 800 %, or from about 710 % to about 800 %; (l) have a tear resistance, as measured according to ISO 34, from about 20 N/mm to about 40 N/mm, for example, from about 25 N/mm to about 40 N/mm, or from about 29 N/mm to about 40 N/mm, or from about 30 N/mm to about 40 N/mm, or from about 20 N/mm to about 35 N/mm, or from about 25 N/mm to about 35 N/mm, or from about 29 N/mm to about 35 N/mm, or from about 30 N/mm to about 35 N/mm, or from about 20 N/mm to about 32 N/mm, or from about 25 N/mm to about 32 N/mm, or from about 29 N/mm to about 32 N/mm, or from about 30 N/mm to about 32 N/mm, or from about 20 N/mm to about 30 N/mm, or from about 25 N/mm to about 30 N/mm, or from about 29 N/mm to about 30 N/mm; (m) have a Shore A hardness, measured according to ISO 7619-1, from about 30 to about 70, for example, from about 40 to about 70, or from about 50 to about 70, or from about 30 to about 60, or from about 40 to about 60, or from about 50 to about 60, or from about 30 to about 55, or from about 40 to about 55, or from about 50 to about 55, or from about 30 to about 52, or from about 40 to about 52, or from about 50 to about 52; (n) have a compression set, as measured according to ISO 815, from about 10 % to about 50 %, for example, from about 20 % to about 50 %, or from about 30 % to about 50 %, or from about 35 % to about 50 %, or from about 38 % to about 50 %, or from about 10 % to about 45 %, or from about 20 % to about 45 %, or from about 30 % to about 45 %, or from about 35 % to about 45 %, or from about 38 % to about 45 %, or from about 10 % to about 43 %, or from about 20 % to about 43 %, or from about 30 % to about 43 %, or from about 35 % to about 43 %, or from about 38 % to about 43 %; (o) exhibit an abrasion loss, when tested according to ISO 4649, from about 0.200 g to about 0.450 g, for example, from about 0.210 g to about 0.450 g, or from about 0.250 g to about 0.450 g, or from about 0.300 g to about 0.450 g, or from about 0.200 g to about 0.425 g, or from about 0.210 g to about 0.425 g, or from about 0.250 g to about 0.425 g, or from about 0.300 g to about 0.425 g, or from about 0.200 g to about 0.400 g, or from about 0.210 g to about 0.400 g, or from about 0.250 g to about 0.400 g, or from about 0.300 g to about 0.400 g, or from about 0.200 g to about 0.300 g, or from about 0.210 g to about 0.300 g, or from about 0.250 g to about 0.300 g, or from about 0.300 g to about 0.300 g; and/or (p) have an abrasion resistance, according to ISO 4649, from about 0.20 $cm^3$ to about 0.60 $cm^3$, for example, from about 0.25 $cm^3$ to about 0.60 $cm^3$, or from about 0.30 $cm^3$ to about 0.60 $cm^3$, or from about 0.20 $cm^3$ to

about 0.55 cm$^3$, or from about 0.25 cm$^3$ to about 0.55 cm$^3$, or from about 0.30 cm$^3$ to about 0.55 cm$^3$, from about 0.20 cm$^3$ to about 0.50 cm$^3$, or from about 0.25 cm$^3$ to about 0.50 cm$^3$, or from about 0.30 cm$^3$ to about 0.50 cm$^3$.

The polymer composition may: (a) comprise an elastomer (e.g. a rubber) and have a $t_{90}$ vulcanization time, as measured using a rotorless curemeter according to ISO 6502 (Part 3), from about 0.5 to about 30 minutes, for example, from about 0.5 to about 20 minutes, or from about 0.5 to about 10 minutes, or from about 1 to about 5 minutes, or from about 1 to about 3 minutes, or from about 2 to about 10 minutes, or from about 2 to about 5, or from about 2 to about 3 minutes; (b) have a crosslink density, as measured using a rotorless curemeter according to ISO 6502 (Part 3), from about 10 to about 55, for example, from about 20 to about 55, or from about 30 to about 55, or from about 35 to about 55, from about 40 to about 55, or from about 41 to about 55, or from about 42 to about 55, or from about 45 to about 55, or from about 46 to about 55, or from about 35 to about 50, or from about 40 to about 50, or from about 41 to about 50, or from about 42 to about 50, or from about 45 to about 50, or from about 46 to about 50, or from about 35 to about 47, or from about 40 to about 47, or from about 41 to about 47, or from about 42 to about 47, or from about 45 to about 47, or from about 46 to about 47, or from about 35 to about 46, or from about 40 to about 46, or from about 41 to about 46, or from about 42 to about 46, or from about 45 to about 46, or from about 35 to about 43, or from about 40 to about 43, or from about 41 to about 43, or from about 42 to about 43, or from about 35 to about 42, or from about 40 to about 42, or from about 41 to about 42, or from about 35 to about 41, or from about 40 to about 41; (c) have a Mooney viscosity at 100°C, measured using a shearing-disc viscometer according to ISO 289-1, from about 20 MU to about 100 MU, for example, from about 20 MU to about 90 MU, or from about 20 MU to about 80 MU, or from about 20 MU to about 70 MU, or from about 20 MU to about 60 MU, or from about 20 MU to about 50 MU, from about 25 MU to about 90 MU, or from about 25 MU to about 80 MU, or from about 25 MU to about 70 MU, or from about 25 MU to about 60 MU, or from about 25 MU to about 50 MU, from about 30 MU to about 90 MU, or from about 30 MU to about 80 MU, or from about 30 MU to about 70 MU, or from about 30 MU to about 60 MU, or from about 30 MU to about 50 MU, from about 35 MU to about 90 MU, or from about 35 MU to about 80 MU, or from about 35 MU to about 70 MU, or from about 35 MU to about 60 MU, or from about 35 MU to about 50 MU, from about 40 MU to about 90 MU, or from about 40 MU to about 80 MU, or from about 40 MU to about 70 MU, or from about 40 MU to about 60 MU, or from about 40 MU to about 50 MU, from about 25 MU to about 50 MU, or from about 30 MU to about 50 MU, or from about 32 MU to about 50 MU, or from about 35 MU to about 50 MU, or from about 36 MU to about 50 MU, or from about 20 MU to about 40 MU, or from about 25 MU to about 40 MU, or from about 30 MU to about 40 MU, or from about 32 MU to about 40 MU, or from about 35 MU to about 40 MU, or from about 36 MU to about 40 MU, or from about 20 MU to about 38 MU, or from about 25 MU to about 38 MU, or from about 30 MU to about 38 MU, or from about 32 MU to about 38 MU, or from about 35 MU to about 38 MU, or from about 36 MU to about 38 MU, or from about 20 MU to about 37 MU, or from about 25 MU to about 37 MU, or from about 30 MU to about 37 MU, or from about 32 MU to about 37 MU, or from about 35 MU to about 37 MU, or from about 36 MU to about 37 MU, or from about 20 MU to about 35 MU, or from about 25 MU to about 35 MU, or from about 30 MU to about 35 MU, or from about 32 MU to about 35 MU, or from about 20 MU to about 33 MU, or from about 25 MU to about 33 MU, or from about 30 MU to about 33 MU, or from about 32 MU to about 33 MU; (d) have a storage modulus G' (of the complex dynamic modulus $G = G' + iG''$) at 150 % extension, obtained using a moving die rheometer according to ISO 13145, from about 15 kPa to about 50 kPa, for example, from about 15 kPa to about 40 kPa, or from about 15 kPa to about 35 kPa, or from about 15 kPa to about 32 kPa, or from about 20 kPa to about 50 kPa, or from about 20 kPa to about 40 kPa, or from about 20 kPa to about 35 kPa, or from about 20 kPa to about 32 kPa; (e) have a density, measured according to ISO 2781, from about 1.0 kg/m$^3$ to about 1.50 kg/m$^3$, for example, from about 1.10 kg/m$^3$ to about 1.50 kg/m$^3$, or from about 1.20 kg/m$^3$ to about 1.50 kg/m$^3$, or from about 1.0 kg/m$^3$ to about 1.40 kg/m$^3$, or from about 1.10 kg/m$^3$ to about 1.40 kg/m$^3$, or from about 1.20 kg/m$^3$ to about 1.40 kg/m$^3$, or from about 1.0 kg/m$^3$ to about 1.35 kg/m$^3$, 1.10 kg/m$^3$ to about 1.35 kg/m$^3$, 1.20 kg/m$^3$ to about 1.35 kg/m$^3$, or from about 1.25 kg/m$^3$ to about 1.50 kg/m$^3$, or from about 1.30 kg/m$^3$ to about 1.50 kg/m$^3$, or from about 1.33 kg/m$^3$ to about 1.50 kg/m$^3$, or from about 1.20 kg/m$^3$ to about 1.45 kg/m$^3$, or from about 1.25 kg/m$^3$ to about 1.45 kg/m$^3$, or from about 1.30 kg/m$^3$ to about 1.45 kg/m$^3$, or from about 1.33 kg/m$^3$ to about 1.45 kg/m$^3$, or from about 1.20 kg/m$^3$ to about 1.40 kg/m$^3$, or from about 1.25 kg/m$^3$ to about 1.40 kg/m$^3$, or from about 1.30 kg/m$^3$ to about 1.40 kg/m$^3$, or from about 1.33 kg/m$^3$ to about 1.40 kg/m$^3$, or from about 1.20 kg/m$^3$ to about 1.35 kg/m$^3$, or from about 1.25 kg/m$^3$ to about 1.35 kg/m$^3$, or from about 1.30 kg/m$^3$ to about 1.35 kg/m$^3$, or from about 1.33 kg/m$^3$ to about 1.35 kg/m$^3$, or from about 1.20 kg/m$^3$ to about 1.34 kg/m$^3$, or from about 1.25 kg/m$^3$ to about 1.34 kg/m$^3$, or from about 1.30 kg/m$^3$ to about 1.34 kg/m$^3$, or from about 1.33 kg/m$^3$ to about 1.34 kg/m$^3$; (f) have a modulus (i.e. tensile modulus) at 50 % elongation, $M_{50}$, as measured according to ISO 37, from about 0.5 MPa to about 1.7 MPa, for example, from about 0.5 MPa to about 1.6 MPa, or from about 0.5 MPa to about 1.5 MPa, or from about 0.8 MPa to about 1.7 MPa, or from about 0.8 MPa to about 1.6 MPa, or from about 0.8 MPa to about 1.5 MPa, or from about 0.9 MPa to about 1.7 MPa, or from about 0.9 MPa to about 1.6 MPa, or from about 0.9 MPa to about 1.5 MPa, or from about 1.0 MPa to about 1.5 MPa, or from about 1.1 MPa to about 1.5 MPa, or from about 1.2 MPa to about 1.5 MPa, or from about 0.5 MPa to about 1.4 MPa, or from about 0.8 MPa to about 1.4 MPa, or from about 0.9 MPa to about 1.4 MPa, or from about 1.0 MPa to about 1.4 MPa, or from about 1.1 MPa to about 1.4 MPa, or from about 1.2 MPa to about 1.4 MPa, or from about 0.5 MPa to about 1.3 MPa, or from about 0.8 MPa to about 1.3 MPa, or from about 0.9 MPa to about 1.3 MPa, or from about 1.0 MPa to about 1.3 MPa, or from about 1.1 MPa to about 1.3 MPa, or from about 1.2 MPa to about 1.3 MPa, or from about 0.5 MPa to about 1.2 MPa, or from about 0.8 MPa to about 1.2 MPa, or from about 0.9 MPa to about 1.2 MPa, or from about 1.0 MPa to about 1.2 MPa, or from about 1.1 MPa to about 1.2 MPa, or from about 0.5 MPa to about 1.1 MPa, or from about 0.8 MPa to about 1.1 MPa, or from about 0.9 MPa to about 1.1 MPa, or from about 1.0 MPa to about 1.1 MPa; (g) have a modulus (i.e. tensile modulus) at 100 % elongation, $M_{100}$, as measured according to ISO 37, from about 1.0 MPa to about 2.5 MPa, for example, from about 1.2 MPa to about 2.5 MPa, or from about 1.4 MPa to about 2.5 MPa, or from about 1.5 MPa to about 2.5 MPa, or from about 1.6 MPa to about 2.5 MPa, or from about 1.8 MPa to about 2.5 MPa, or from about 1.0 MPa to about 2.4 MPa, or from about 1.2 MPa to about 2.4 MPa, or from about 1.4 MPa to about 2.4 MPa, or from about 1.5 MPa to about 2.4 MPa, or from about 1.6 MPa to about 2.4 MPa, or from about 1.8 MPa to about 2.4 MPa, or from about 1.0 MPa to about 2.2 MPa, or from about 1.2 MPa to about 2.2 MPa, or from about 1.4 MPa to about 2.2 MPa, or from about 1.5 MPa to about 2.2 MPa, or from about 1.6 MPa to about 2.2 MPa, or from about 1.8 MPa to about 2.2 MPa, or from about 1.0 MPa to about 2.0 MPa, or from about 1.2 MPa to about 2.0 MPa, or from about 1.4 MPa to about 2.0 MPa, or from about 1.5 MPa to about 2.0 MPa, or from about 1.6 MPa to about 2.0 MPa, or from about 1.8 MPa to about 2.0 MPa, or from about 1.0 MPa to about 1.9 MPa, or from about 1.2 MPa to about 1.9 MPa, or from about 1.4 MPa to about 1.9 MPa, or from about 1.5 MPa to about 1.9 MPa, or from about 1.6 MPa to about 1.9 MPa, or from about 1.8 MPa to about 1.9 MPa, or from about 1.0 MPa to about 1.8 MPa, or from about 1.2 MPa to about 1.8 MPa, or from about 1.4 MPa to about 1.8 MPa, or from about 1.5 MPa to about 1.8 MPa, or from about 1.6 MPa to about 1.8 MPa, or from about 1.0 MPa to about 1.6 MPa, or from about 1.2 MPa to about 1.6 MPa, or from about 1.4 MPa to about 1.6 MPa, or from about 1.5 MPa to about 1.6 MPa; (h) have a modulus (i.e. tensile modulus) at 300 % elongation, $M_{300}$, as measured according to ISO 37, of from about 1.5 MPa to about 5.5 MPa, or from about 1.5 MPa to about 5.0 MPa, for example, from about 1.5 MPa to about 4.5 MPa, or from about 1.5 MPa to about 4.0 MPa, or from about 1.5 MPa to about 3.5 MPa, or from about 1.5 MPa to about 3.4 MPa, or from about 1.5 MPa to about 3.3 MPa, or from about 1.5 MPa to about 3.2 MPa, or from about 1. 5 MPa to about 3.1 MPa, or from about 1.5 MPa to about 3.0 MPa, or from about 1.5 MPa to about 2.9 MPa, or from about 1.5 MPa to about 2.7 MPa, or from about 1.5 MPa to about 2.6 MPa, or from about 1.6 MPa to about 5.5 MPa, or from about 1.6 MPa to about 5.0 MPa, or from about 1.6 MPa to about 4.5 MPa, or from about 1.6 MPa to about 4.0 MPa, or from about 1.6 MPa to about 3.5 MPa, or from about 1.6 MPa to about 3.4 MPa, or from about 1.6 MPa to about 3.3 MPa, or from about 1.6 MPa to about 3.2 MPa, or from about 1.6 MPa to about 3.1 MPa, or from about 1.6 MPa to about 3.0 MPa, or from about 1.6 MPa to about 2.9 MPa, or from about 1.6 MPa to about 2.7 MPa, or from about 1.6 MPa to about 2.6 MPa, or from about 2.0 MPa to about 5.5 MPa, or from about 2.0 MPa to about 5.0 MPa, or from about 2.0 MPa to about 4.5 MPa, or from about 2.0 MPa to about 4.0 MPa, or from about 2.0 MPa to about 3.5 MPa, or from about 2.0 MPa to about 3.4 MPa, or from about 2.0 MPa to about 3.3 MPa, or from about 2.0 MPa to about 3.2 MPa, or from about 2.0 MPa to about 3.1 MPa, or from about 2.0 MPa to about 3.0 MPa, or from about 2.0 MPa to about 2.9 MPa, or from about 2.0 MPa to about 2.7 MPa, or from about 2.0 MPa to about 2.6 MPa, or from about 2.2 MPa to about 4.5 MPa, or from about 2.4 MPa to about 4.5 MPa, or from about 2.5 MPa to about 4.5 MPa, or from about 2.6 MPa to about 4.5 MPa, or from about 2.8 MPa to about 4.5 MPa, or from about 2.9 MPa to about 4.5 MPa, or from about 3.0 MPa to about 4.5 MPa, or from about 3.1 MPa to about 4.5 MPa, or from about 3.2 MPa to about 4.5 MPa, or from about 3.3 MPa to about 4.5 MPa, or from about 2.0 MPa to about 4.0 MPa, or from about 2.2 MPa to about 4.0 MPa, or from about 2.4 MPa to about 4.0 MPa, or from about 2.5 MPa to about 4.0 MPa, or from about 2.6 MPa to about 4.0 MPa, or from about 2.8 MPa to about 4.0 MPa, or from about 2.9 MPa to about 4.0 MPa, or from about 3.0 MPa to about 4.0 MPa, or from about 3.1 MPa to about 4.0 MPa, or from about 3.2 MPa to about 4.0 MPa, or from about 3.3 MPa to about 4.0 MPa, or from about 2.0 MPa to about 3.5 MPa, or from about 2.2 MPa to about 3.5 MPa, or from about 2.4 MPa to about 3.5 MPa, or from about 2.5 MPa to about 3.5 MPa, or from about 2.6 MPa to about 3.5 MPa, or from about 2.8 MPa to about 3.5 MPa, or from about 2.9 MPa to about 3.5 MPa, or from about 3.0 MPa to about 3.5 MPa, or from about 3.1 MPa to about 3.5 MPa, or from about 3.2 MPa to about 3.5 MPa, or from about 3.3 MPa to about 3.5 MPa, or from about 2.0 MPa to about 3.4 MPa, or from about 2.2 MPa to about 3.4 MPa, or from about 2.4 MPa to about 3.4 MPa, or from about 2.5 MPa to about 3.4 MPa, or from about 2.6 MPa to about 3.4 MPa, or from about 2.8 MPa to about 3.4 MPa, or from about 2.9 MPa to about 3.4 MPa, or from about 3.0 MPa to about 3.4 MPa, or from about 3.1 MPa to about 3.4 MPa, or from about 3.2 MPa to about 3.4 MPa, or from about 3.3 MPa to about 3.4 MPa, or from about 2.0 MPa to about 3.3 MPa, or from about 2.2 MPa to about 3.3 MPa, or from about 2.4 MPa to about 3.3 MPa, or from about 2.5 MPa to about 3.3 MPa, or from about 2.6 MPa to about 3.3 MPa, or from about 2.8 MPa to about 3.3 MPa, or from about 2.9 MPa to about 3.3 MPa, or from about 3.0 MPa to about 3.3 MPa, or from about 3.1 MPa to about 3.3 MPa, or from about 3.2 MPa to about 3.3 MPa, or from about 2.0 MPa to about 3.2 MPa, or from about 2.2 MPa to about 3.2 MPa, or from about 2.4 MPa to about 3.2 MPa, or from about 2.5 MPa to about 3.2 MPa, or from about 2.6 MPa to about 3.2 MPa, or from about 2.8 MPa to about 3.2 MPa, or from about 2.9 MPa to about 3.2 MPa, or from about 3.0 MPa to about 3.2 MPa, or from about 3.1 MPa to about 3.2 MPa, or from about 2.0 MPa to about 3.1 MPa, or from about 2.2 MPa to about 3.1 MPa, or from about 2.4 MPa to about 3.1 MPa, or from about 2.5 MPa to about 3.1 MPa, or from about 2.6 MPa to about 3.1 MPa, or from about 2.8 MPa to about 3.1 MPa, or from about 2.9 MPa to about 3.1 MPa, or from about 3.0 MPa to about 3.1 MPa, or from about 2.0 MPa to about 3.0 MPa, or from about 2.2 MPa to about 3.0 MPa, or from about 2.4 MPa to about 3.0 MPa, or from about 2.5 MPa to about 3.0 MPa, or from about 2.6 MPa to about 3.0 MPa, or from about 2.8 MPa to about 3.0 MPa, or from about 2.9 MPa to about 3.0 MPa, or from about 2.0 MPa to about 2.9 MPa, or from about 2.2 MPa to about 2.9 MPa, or from about 2.4 MPa to about 2.9 MPa, or from about 2.5 MPa to about 2.9 MPa, or from about 2.6 MPa to about 2.9 MPa, or from about 2.8 MPa to about 2.9 MPa, or from about 2.0 MPa to about 2.7 MPa, or from about 2.2 MPa to about 2.7 MPa, or from about 2.4 MPa to about 2.7 MPa, or from about 2.5 MPa to about 2.7 MPa, or from about 2.6 MPa to about 2.7 MPa, or from about 2.0 MPa to about 2.6 MPa, or from about 2.2 MPa to about 2.6 MPa, or from about 2.4 MPa to about 2.6 MPa, or from about 2.5 MPa to about 2.6 MPa; (i) have a reinforcement index, $M_{300}/M_{100}$, from about 1.45 to about 3.10, for example, from about 1.45 to about 3.0, or from about 1.45 to about 2.90, or from about 1.45 to about 2.80, or from about 1.45 to about 2.70, or from about 1.45 to about 2.60, or from about 1.45 to about 2.40, or from about 1.45 to about 2.50, or from about 1.45 to about 2.30, or from about 1.45 to about 2.10, or from about 1.45 to about 2.00, or from about 1.45 to about 1.94, or from about 1.45 to about 1.90, or from about 1.45 to about 1.80, or from about 1.45 to about 1.70, or from about 1.50 to about 3.10, or from about 1.50 to about 3.0, or from about 1.50 to about 2.90, or from about 1.50 to about 2.80, or from about 1.50 to about 2.70, or from about 1.50 to about 2.60, or from about 1.50 to about 2.40, or from about 1.50 to about 2.50, or from about 1.50 to about 2.30, or from about 1.50 to about 2.10, or from about 1.50 to about 2.00, or from about 1.50 to about 1.94, or from about 1.50 to about 1.90, or from about 1.50 to about 1.80, or from about 1.50 to about 1.70, or from about 1.50 to about 2.50, or from about 1.60 to about 2.50, or from about 1.62 to about 2.50, or from about 1.70 to about 2.50, or from about 1.80 to about 2.50, or from about 1.90 to about 2.50, or from about 1.50 to about 2.30, or from about 1.60 to about 2.30, or from about 1.62 to about 2.30, or from about 1.70 to about 2.30, or from about 1.80 to about 2.30, or from about 1.90 to about 2.30, or from about 1.50 to about 2.10, or from about 1.60 to about 2.10, or from about 1.62 to about 2.10, or from about 1.70 to about 2.10, or from about 1.80 to about 2.10, or from about 1.90 to about 2.10, or from about 1.50 to about 2.00, or from about 1.60 to about 2.00, or from about 1.62 to about 2.00, or from about 1.70 to about 2.00, or from about 1.80 to about 2.00, or from about 1.90 to about 2.00, or from about 1.50 to about 1.94, or from about 1.60 to about 1.94, or from about 1.62 to about 1.94, or from about 1.70 to about 1.94, or from about 1.80 to about 1.94, or from about 1.90 to about 1.94, or from about 1.50 to about 1.90, or from about 1.60 to about 1.90, or from about 1.62 to about 1.90, or from about 1.70 to about 1.90, or from about 1.80 to about 1.90, or from about 1.50 to about 1.80, or from about 1.60 to about 1.80, or from about 1.62 to about 1.80, or from about 1.70 to about 1.80, or from about 1.50 to about 1.70, or from about 1.60 to about 1.70, or from about 1.62 to about 1.70; (j) have a tensile strength, as measured according to ISO 37, from about 6 MPa to about 15 MPa, for example, from about 6 MPa, to about 12 MPa, or from about 6 MPa to about 11 MPa, or from about 6 MPa to about 10.8 MPa, or from about 6 MPa to about 10 MPa, or from about 8 MPa to about 15 MPa, or from about 9 MPa to about 15 MPa, or from about 9.3 MPa to about 15 MPa, or from about 10 MPa to about 15 MPa, or from about 8 MPa to about 12 MPa, or from about 9 MPa to about 12 MPa, or from about 9.3 MPa to about 12 MPa, or from about 10 MPa to about 12 MPa, or from about 8 MPa to about 11 MPa, or from about 9 MPa to about 11 MPa, or from about 9.3 MPa to about 11 MPa, or from about 10 MPa to about 11 MPa, or from about 8 MPa to about 10.8 MPa, or from about 9 MPa to about 10.8 MPa, or from about 9.3 MPa to about 10.8 MPa, or from about 10 MPa to about 10.8 MPa, or from about 8 MPa to about 10 MPa, or from about 9 MPa to about 10 MPa, or from about 9.3 MPa to about 10 MPa; (k) have an elongation at break, as measured according to ISO 37, from about 500 % to about 1500 %, for example, from about 600 % to about 1500 %, or from about 700 % to about 1500 %, or from about 710 % to about 1500 %, or from about 1000 % to about 1500 %, or from about 500 % to about 1200 %, or from about 600 % to about 1200 %, or from about 700 % to about 1200 %, or from about 710 % to about 1200 %, or from about 1000 % to about 1200 %, or from about 500 % to about 1100 %, or from about 600 % to about 1100 %, or from about 700 % to about 1100 %, or from about 710 % to about 1100 %, or from about 1000 % to about 1100 %, or from about 500 % to about 1010 %, or from about 600 % to about 1010 %, or from about 700 % to about 1010 %, or from about 710 % to about 1010 %, or from about 1000 % to about 1010 %, or from about 500 % to about 800 %, or from about 600 % to about 800 %, or from about 700 % to about 800 %, or from about 710 % to about 800 %; (l) have a tear resistance, as measured according to ISO 34, from about 20 N/mm to about 40 N/mm, for example, from about 25 N/mm to about 40 N/mm, or from about 29 N/mm to about 40 N/mm, or from about 30 N/mm to about 40 N/mm, or from about 20 N/mm to about 35 N/mm, or from about 25 N/mm to about 35 N/mm, or from about 29 N/mm to about 35 N/mm, or from about 30 N/mm to about 35 N/mm, or from about 20 N/mm to about 32 N/mm, or from about 25 N/mm to about 32 N/mm, or from about 29 N/mm to about 32 N/mm, or from about 30 N/mm to about 32 N/mm, or from about 20 N/mm to about 30 N/mm, or from about 25 N/mm to about 30 N/mm, or from about 29 N/mm to about 30 N/mm; (m) have a Shore A hardness, measured according to ISO 7619-1, from about 30 to about 70, for example, from about 40 to about 70, or from about 50 to about 70, or from about 30 to about 60, or from about 40 to about 60, or from about 50 to about 60, or from about 30 to about 55, or from about 40 to about 55, or from about 50 to about 55, or from about 30 to about 52, or from about 40 to about 52, or from about 50 to about 52; (n) have a compression set, as measured according to ISO 815, from about 10 % to about 50 %, for example, from about 20 % to about 50 %, or from about 30 % to about 50 %, or from about 35 % to about 50 %, or from about 38 % to about 50 %, or from about 10 % to about 45 %, or from about 20 % to about 45 %, or from about 30 % to about 45 %, or from about 35 % to about 45 %, or from about 38 % to about 45 %, or from about 10 % to about 43 %, or from about 20 % to about 43 %, or from about 30 % to about 43 %, or from about 35 % to about 43 %, or from about 38 % to about 43 %; (o) exhibit an abrasion loss, when tested according to ISO 4649, from about 0.200 g to about 0.450 g, for example, from about 0.210 g to about 0.450 g, or from about 0.250 g to about 0.450 g, or from about 0.300 g to about 0.450 g, or from about 0.200 g to about 0.425 g, or from about 0.210 g to about 0.425 g, or from about 0.250 g to about 0.425 g, or from about 0.300 g to about 0.425 g, or from about 0.200 g to about 0.400 g, or from about 0.210 g to about 0.400 g, or from about 0.250 g to about 0.400 g, or from about 0.300 g to about 0.400 g, or from about 0.200 g to about 0.300 g, or from about 0.210 g to about 0.300 g, or from about 0.250 g to about 0.300 g, or from about 0.300 g to about 0.300 g; and (p) have an abrasion resistance, according to ISO 4649, from about 0.20 cm$^3$ to about 0.60 cm$^3$, for example, from about 0.25 cm$^3$ to about 0.60 cm$^3$, or from about 0.30 cm$^3$ to about 0.60 cm$^3$, or from about 0.20 cm$^3$ to about 0.55 cm$^3$, or from about 0.25 cm$^3$ to about 0.55 cm$^3$, or from about 0.30 cm$^3$ to about 0.55 cm$^3$, from about 0.20 cm$^3$ to about 0.50 cm$^3$, or from about 0.25 cm$^3$ to about 0.50 cm$^3$, or from about 0.30 cm$^3$ to about 0.50 cm$^3$.

*Method of making the polymer composition*

The polymer composition may be prepared by combining a polymer or polymer precursors with the talc particulate (e.g. microcrystalline talc particulate) of the present invention and any other optional components. Where the talc particulate (e.g. microcrystalline talc particulate) (and any other optional components) are combined with polymer precursors, the resulting combination of the polymer precursors, talc particulate (e.g. microcrystalline talc particulate) (and other optional components) may be cured.

The polymer composition can be prepared by mixing of the components thereof (except the talc particulate (e.g. microcrystalline talc particulate)) intimately together. The talc particulate (e.g. microcrystalline talc particulate) may then be suitably blended, e.g., dry blended, with the mixture of components and any desired additional components, before processing to form a final polymer composite or article.

The polymer composition may, for example, be in accordance with any embodiment disclosed herein.

Preparation of the polymer compositions of the present invention can be accomplished by any suitable mixing method known in the art, as will be readily apparent to one of ordinary skill in the art. Such methods include, for example, dry blending of the individual components or precursors thereof and subsequent processing in a conventional manner. Certain of the ingredients can, if desired, be pre-mixed before addition to the compounding mixture.

In the case of thermoplastic polymer compositions, such processing may comprise melt mixing, either directly in an extruder for making an article from the composition, or premixing in a separate mixing apparatus. Dry blends of the individual components can alternatively be directly injection moulded without pre-melt mixing.

The polymer composition can be prepared by mixing of the components thereof intimately together. The talc particulate (e.g. microcrystalline talc particulate) may then be suitably dry blended with the polymer and any desired additional components, before processing as described above.

Other filler compounds, may be added and blended in at the mixing stage.

For the preparation of cross-linked or cured polymer compositions, the blend of uncured components or their precursors, and, if desired, the talc particulate (e.g. microcrystalline talc particulate) and any desired non-talc component(s), will be contacted under suitable conditions of heat, pressure and/or light with an effective amount of any suitable crosslinking agent or curing system, according to the nature and amount of the polymer used, in order to cross-link and/or cure the polymer.

For the preparation of polymer compositions where the talc particulate (e.g. microcrystalline talc particulate) and any desired other component(s) are present in situ at the time of polymerisation, the blend of monomer(s) and any desired other polymer precursors, talc particulate (e.g. microcrystalline talc particulate) and any other component(s) will be contacted under suitable conditions of heat, pressure and/or light, according to the nature and amount of the monomer(s) used, in order to polymerise the monomer(s) with the talc particulate (e.g. microcrystalline talc particulate) and any other component(s) in situ.

In certain embodiments, the talc particulate (e.g. microcrystalline talc particulate) is dispersed with agitation into a mixture comprising polymer and optionally a curing agent. The mixture may further comprise a mould release agent. The resulting dispersion can be degassed to remove entrained air. The resulting dispersion can then be poured into a suitable mould (if liquid), placed in a mould for compression moulding (if solid) or injected into a mould (if solid), and cured. Suitable curing temperatures range from 20-200°C, for example, 20-120°C, or 60-90°C, or 150-200 °C, dependent on the polymer and curing agent.

The starting polymer mixture can further comprise a pre-polymer. The pre-polymer may or may not correspond to the starting polymer.

The viscosity of the starting polymer or polymer/monomer solution, amount of curing agent, release agent and talc particulate (e.g. microcrystalline talc particulate) can be varied according to the requirements of the final cured product. Generally, the greater the amount of talc particulate (e.g. microcrystalline talc particulate) added, the higher the viscosity of the dispersion. Dispersant agents can be added to reduce the viscosity of the dispersion. Alternatively, the amount of polymer in the starting solution can be reduced.

Suitable curing agents will be readily apparent to one of ordinary skill in the art, and include organic peroxides, hydroperoxides and azo compounds. Examples of peroxide and hydroperoxide curing agents include dimethyl dibutylperoxyhexane, benzyl peroxide, dicumyl peroxide, methyl ethyl ketone peroxide, lauryl peroxide, cyclohexanone peroxide, t-butyl perbenzoate, t-butyl hydroperoxide, t-butyl benzene hydroperoxide, cumene hydroperoxide and t-butyl peroctoate.

The compounded compositions may further comprise additional components, such as slip aids (for example Erucamide), process aids (for example Polybatch® AMF-705), mould release agents and antioxidants.

Suitable mould release agents will be readily apparent to one of ordinary skill in the art, and include fatty acids, and zinc, calcium, magnesium and lithium salts of fatty acids and organic phosphate esters. Specific examples are stearic acid, zinc stearate, calcium stearate, magnesium stearate, lithium stearate calcium oleate, zinc palmitate. Typically, slip and process aids, and mould release agents are added in an amount less than about 5 wt. % based on the weight of the masterbatch. Polymer articles may then be extruded, compression moulded or injected moulded using conventional techniques known in the art, as will be readily apparent to one of ordinary skill in the art. Thus, as described below, the present invention is also directed to articles formed from the polymer compositions of the present invention.

In embodiments in which the polymer composition comprises an elastomer (e.g. a rubber), the curing (e.g. vulcanization) of the elastomer (e.g. rubber) may require the presence of sulfur. The curing (e.g. vulcanization) may also be accelerated using an accelerator. Suitable accelerators include guanidine, dithiocarbamate, thirum, 2-mercaptobenzothiazole, zinc-2-mercaptobenzothiazole, mercaptobenzothiazole disulfide, tetramethylthiuram disulfide, thiourea, benzothiazole sulfenamide and isopropylxanthate.

In certain embodiments, the polymer composition comprises a colorant which, if present, will be added during compound of the polymer composition. The colorant may be added in the form of a masterbatch. Suitable colours are many and various.

In certain embodiments, talc particulate (e.g. microcrystalline talc particulate) is added to a twin-screw extruder to which unfilled polymer is being fed and made molten. The talc particulate (e.g. microcrystalline talc particulate) is fed into the extruder through a hopper, for example, via gravimetric feeding, and uniformly blends with the polymer. The mixture emerges from the extruder and may be cooled. Then, for example, the mixture can be further compression moulded or injection moulded into useful shapes.

The methods described above may include compounding and extrusion. Compounding may be carried out using a twin screw compounder, for example, a Clextral BC 21 double screw extruder or a Leistritz ZSE 18 double screw extruder or Baker Perkins 25 mm twin screw compounder. The polymer, talc particulate (e.g. microcrystalline talc particulate) and optional additional components may be premixed and fed from a single hopper. The resulting melt may be cooled, for example, in a water bath, and then pelletized. Test pieces, e.g., Charpy bars or tensile dumbbells, may be injection moulded or compression moulded or cast or blown into film. The screw temperature may be between about 100 °C and about 300 °C, for example, between about 150 °C and about 280 °C, for example, between about 180 °C and about 250 °C, or between about 200 and 230 °C. Screw speed may be between about 100 and 1200 rpm, for example, between about 100 and 1000 rpm, for example, between about 200 and 800 rpm, for example, between about 250 and 650 rpm, for example, between about 200 and 400 rpm, or between about 500 and 700 rpm. In certain embodiments, screw speed is about 300 rpm. In other embodiments, screw speed is about 600 rpm. Suitable injection molding apparatus includes, for example, a Billion 50T Proxima press. The polymer composition may be dried prior to molding. Drying may be carried out at any suitable temperature, for example, about 60°C, for a suitable period of time, for example, between about 1 hours and 20 hours, for example, between about 2 and 18 hours, or between about 1 and 3 hours, or between about 4 and 8 hours, or between about 12 and 18 hours. The temperature during drying may be kept constant or varied. In certain embodiments, the temperature during drying is between about 70 and 120 °C, for example, between about 80 and 100 °C, for example, about 90°C. Molding is generally conducted at a temperature at which the polymer composition is flowable. For example, the molding temperature may be between about 100 and 300 °C, for example, between about 200 and 300 °C, or between about 240 and about 280°C. Following molding the molded piece will be allowed to cool and set.

The polymer composition may be prepared using a two roll mill as is commonly used for processing elastomeric polymeric compositions such as rubber. A two roll mill comprises two horizontally opposed cylinders or rolls which rotate in opposing directions and at variable speeds. The distance between the rolls and the speed of rotation is adjustable to vary the shear and compressive forces applied to polymer and other components introduced between the rolls. One or more of the rolls may be hollow and/or cooled. The polymer composition may be prepared by compounding polymer with the talc particulate (e.g. microcrystalline talc particulate) and any other components within the two roll mill. The preparation process may be carried out in two or more stages. In a first mastication stage, raw polymer (e.g. rubber) may be passed through the two roll mill to plasticise the polymer. In one or more second compounding stages, filler and/or additives may be mixed into the polymer using the two roll mill. In one example, the preparation process involves:

passing the polymer (e.g. rubber) through the two roll mill to plasticise the polymer (e.g. rubber); mixing the polymer with additives (e.g. stearic acid, zinc oxide, PEG, etc.) within the two roll mill; compounding the polymer with the talc particulate (e.g. microcrystalline talc particulate) within the two roll mill, the talc particulate (e.g. microcrystalline talc particulate) and oil being added to the polymer in an alternating fashion; and mixing accelerator and/or sulfur into the polymer within the two roll mill.

Alternatively, the polymer composition may be prepared using an internal mixer, such as a Banbury internal mixer, as is commonly used for processing elastomeric polymeric compositions such as rubber. An internal mixer comprises two or more rotors, enclosed in a mixing chamber, which rotate towards one another at different speeds. The rotors may be provided with spiral blades. One or more of the rotors may be heated or cooled. Materials to be mixed may be fed into the mixing chamber through a hopper and a floating weight may rest on top of the feed, confining the material within the mixing chamber. The polymer composition may be prepared by compounding polymer with the talc particulate (e.g. microcrystalline talc particulate) and any other components within the internal mixer.

Other suitable processing techniques include gas-assisted injection molding, calendaring, vacuum forming, thermoforming, blow-molding, drawing, spinning, film forming, laminating or any combination thereof. Any suitable apparatus may be used, as will be apparent to one of ordinary skill in the art.

The polymer composition can be processed to form, or to be incorporated in, articles of commerce in any suitable way, as described herein. The articles which may be formed from the polymer composition are many and various. Examples include tyres, shoe soles (e.g. shoe outsoles), conveyor belts, V-belts and caterpillar treads (e.g. caterpillar tread blocks).

*Uses of the talc particulate*

The talc particulate (e.g. microcrystalline talc particulate) may be used in a polymer composition.

The talc particulate (e.g. microcrystalline talc particulate) may be used to reinforce the polymer composition (i.e. by adding the talc particulate (e.g. microcrystalline talc particulate) to the polymer composition). For example, the talc particulate (e.g. microcrystalline talc particulate) may be used to: increase the stiffness of the polymer composition (e.g. by increasing the modulus of the polymer composition at 50% (i.e. $M_{50}$), 100% (i.e. $M_{100}$) and/or 300% ($M_{300}$) elongation); increase the strength of the polymer composition (e.g. by increasing the tensile strength of the polymer composition); increase the abrasion resistance of the polymer composition; increase the reinforcement index, $M_{300}/M_{100}$, of the polymer composition; and/or increase the tear resistance of the polymer composition.

The talc particulate (e.g. microcrystalline talc particulate) may increase the stiffness (e.g. $M_{50}$, $M_{100}$ or $M_{300}$), strength (e.g. tensile strength), abrasion resistance, reinforcement index (i.e. $M_{300}/M_{100}$) and/or tear resistance of the polymer composition relative to a polymer composition not comprising the talc particulate (e.g. microcrystalline talc particulate) according to the present invention. In particular, the talc particulate (e.g. microcrystalline talc particulate) may increase the stiffness (e.g. $M_{50}$, $M_{100}$ or $M_{300}$), strength (e.g. tensile strength), abrasion resistance, reinforcement index (i.e. $M_{300}/M_{100}$) and/or tear resistance of the polymer composition relative to a polymer composition filled with a talc particulate not according to the present invention. For example, the talc particulate (e.g. microcrystalline talc particulate) may increase the stiffness (e.g. $M_{50}$, $M_{100}$ or $M_{300}$), strength (e.g. tensile strength), abrasion resistance, reinforcement index (i.e. $M_{300}/M_{100}$) and/or tear resistance of the polymer composition relative to a polymer composition filled with the same amount of a talc particulate not according to the present invention.

Additionally or alternatively, the talc particulate (e.g. microcrystalline talc particulate) may be used to reduce the viscosity of the polymer composition (i.e. by adding the talc particulate (e.g. microcrystalline talc particulate) to the polymer composition). For example, the talc particulate (e.g. microcrystalline talc particulate) may be used to reduce the Mooney viscosity of the polymer composition at 100°C. The talc particulate (e.g. the microcrystalline talc particulate) may reduce the viscosity of the polymer composition (e.g. the Mooney viscosity of the polymer composition at 100°C) relative to a polymer composition not comprising the talc particulate (e.g. microcrystalline talc particulate) according to the present invention (e.g. relative to a polymer composition filled with, for example the same amount of, a talc particulate not according to the present invention).

The polymer composition may comprise filler other than the talc particulate (e.g. microcrystalline talc particulate). For example, the polymer composition may comprise one or more minerals other than the talc particulate (e.g. microcrystalline talc particulate). For example, the polymer composition may comprise synthetic silica or silicates (e.g. precipitated silica or silicates), natural silica or silicates, a clay mineral (for example, a hydrous kandite clay such as kaolin, halloysite or ball clay), carbon black, an alkaline earth metal carbonate or sulphate, such as calcium carbonate, magnesium carbonate, dolomite, gypsum, an anhydrous (calcined) kandite clay such as metakaolin or fully calcined kaolin, mica, perlite, feldspars, nepheline syenite, wollastonite, diatomaceous earth, barite and/or glass. In certain embodiments, the polymer composition comprises, in addition to the talc particulate (e.g. microcrystalline talc particulate), precipitated silica, a clay mineral such as kaolin, and/or carbon black. In certain embodiments, the polymer composition may comprise a talc other than the talc particulate (e.g. microcrystalline talc particulate) of the present invention. It may be that the talc particulate (e.g. microcrystalline talc particulate) according to the present invention is used as a replacement for one or more other fillers. It may be that use of the talc particulate (e.g. microcrystalline talc particulate) according to the present invention enables a reduction in the amount of one or more other fillers used without a substantial loss of reinforcement, stiffness, strength or tear resistance and/or without a substantial increase in viscosity. It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

For the avoidance of doubt, the present application is directed to the subject-matter described in the following numbered paragraphs:

1. A talc particulate (for example, a microcrystalline talc particulate) having a BET specific surface area no less than about 35 m$^2$/g and one or both of: (a) a $d_{50}$, by Sedigraph, no greater than about 2.0 $\mu$m; and (b) a $d_{50}$, by laser, no greater than about 5.0 $\mu$m.

2. The talc particulate (for example, the microcrystalline talc particulate) according to paragraph 1, wherein: (a) the $d_{50}$, by Sedigraph, is no greater than about 1.5 $\mu$m, for example, no greater than about 1.0 $\mu$m, or is from about 0.1 $\mu$m to about 2.0 $\mu$m, for example, from about 0.1 $\mu$m to about 1.5 $\mu$m, or from about 0.1 $\mu$m to about 1.0 $\mu$m; (c) the $d_{50}$, by laser, is no greater than about 4.0 $\mu$m, for example, no greater than about 3.0 $\mu$m, or is from about 1.0 $\mu$m to about 5.0 $\mu$m, for example, from about 1.0 $\mu$m to about 4.0 $\mu$m, or from about 1.0 $\mu$m to about 3.0 $\mu$m; and/or (c) the BET specific surface area is no less than about 40 m$^2$/g.

3. The talc particulate (for example, the microcrystalline talc particulate) according to paragraph 1 or paragraph 2, having: (a) a $d_{95}$, by laser, no greater than about 10.0 $\mu$m, for example, no greater than about 7.0 $\mu$m, or from about 4.0 $\mu$m to about 10.0 $\mu$m, or from about 4.0 $\mu$m to about 7.0 $\mu$m; (b) a $d_{75}$, by laser, no greater than about 7.0 $\mu$m, for example, no greater than about 5.0 $\mu$m, or from about 2.0 $\mu$m to about 7.0 $\mu$m, or from about 2.0 $\mu$m to about 5.0 $\mu$m; (c) a $d_{25}$, by laser, no greater than about 3.0 $\mu$m, for example, no greater than about 2.0 $\mu$m, or from about 0.5 $\mu$m to about 3.0 $\mu$m, or from about 0.5 $\mu$m to about 2.0 $\mu$m; (d) a $d_{95}$, by Sedigraph, no greater than about 5.0 $\mu$m, for example, no greater than about 3.0 $\mu$m, or from about 0.5 $\mu$m to about 5.0 $\mu$m, or from about 0.5 $\mu$m to about 3.0 $\mu$m; (e) a $d_{75}$, by Sedigraph, no greater than about 3.0 $\mu$m, for example, no greater than about 2.0 $\mu$m, or from about 0.1 $\mu$m to about 3.0 $\mu$m, or from about 0.1 $\mu$m to about 2.0 $\mu$m; (f) a $d_{25}$, by Sedigraph, no greater than about 1.0 $\mu$m, for example, no greater than about 0.5 $\mu$m, or from about 0.1 $\mu$m to about 1.0 $\mu$m, or from about 0.1 $\mu$m to about 0.5 $\mu$m; and/or (g) a crystallinity index, CI, no greater than about 7.5 g/m$^2$, for example, from about 0.01 g/m$^2$ to about 7.5 g/m$^2$, or from about 0.01 g/m$^2$ to about 4.0 g/m$^2$.

4. A method for preparing the talc particulate (for example, the microcrystalline talc particulate) according to any preceding paragraph, the method comprising: (a) dry milling a talc feed material (for example, a microcrystalline talc feed material) in a stirred bead mill to produce a milled talc material (for example, a milled microcrystalline talc material); and (b) classifying the milled talc material (for example, the milled microcrystalline talc material) to remove a coarse fraction.

5. The method according to paragraph 4, comprising dry milling the talc feed material (for example, the microcrystalline talc feed material) in the stirred bead mill using grinding media comprising milling beads having diameters from about 2 mm to about 10 mm, for example, from about 4 mm to about 6 mm, optionally wherein the milling beads are made of: ceramic, for example, alumina or zirconia; plastic; or metal, for example, steel.

6. The method according to paragraph 4 or paragraph 5, comprising returning the coarse fraction to the stirred bead mill for further dry milling.

7. The method according to any of paragraphs 4 to 6, wherein the talc feed material (for example, the microcrystalline talc feed material) has: (a) a $d_{50}$, by Sedigraph for values of $d_{50}$ no greater than 50 $\mu$m and by sieving for values of $d_{50}$ greater than 50 $\mu$m, from about 5.0 $\mu$m to about 20 mm, for example, from about 5.0 $\mu$m to about 10 mm, or from about 5.0 $\mu$m to about 1 mm, or from about 5.0 $\mu$m to about 20.0 $\mu$m, or from about 5.0 $\mu$m to about 10.0 $\mu$m; (b) a $d_{50}$, by laser for values of $d_{50}$ no greater than 1 mm and by sieving for values of $d_{50}$ greater than 1 mm, from about 5.0 $\mu$m to about 20 mm, for example, from about 5.0 $\mu$m to about 10 mm, or from about 5.0 $\mu$m to about 1 mm, or from about 5.0 $\mu$m to about 40.0 $\mu$m, or from about 5.0 $\mu$m to about 20.0 $\mu$m; (c) a Minolta Y whiteness no less than about 80, for example, no less than about 85; (d) a CIELAB L* no less than about 85, for example, no less than about 90; (e) a CIELAB a* no greater than about 1.0, for example, no greater than about 0.5; (f) a CIELAB b* from about 1.0 to about 4.0, for example, from about 2.0 to about 3.0; (g) a BET specific surface area no greater than about 30 $m^2$/g, for example, no greater than about 20 $m^2$/g, or no greater than about 10 $m^2$/g; (h) a talc content of no less than about 60 %, for example no less than about 80 %, talc and an optional chlorite content of no greater than about 40 %, for example no greater than about 20 %; and/or (i) a crystallinity index, Cl, no greater than about 7.5 $g/m^2$, for example, from about 0.01 $g/m^2$ to about 7.5 $g/m^2$, or from about 0.01 $g/m^2$ to about 4.0 $g/m^2$.

8. A polymer composition comprising the talc particulate (for example, the microcrystalline talc particulate) according to any of paragraphs 1 to 3.

9. The polymer composition according to paragraphs 8, wherein: (a) the polymer composition comprises no less than about 5 phr, for example, no less than about 50 phr, of the talc particulate (for example, the microcrystalline talc particulate); (b) the polymer composition further comprises a mineral other than the talc particulate (for example, the microcrystalline talc particulate), for example, precipitated silica or a clay mineral such as kaolin, or carbon black; and/or (c) the polymer composition comprises an elastomer such as a synthetic rubber or a natural rubber, for example, a styrene-butadiene rubber.

10. A method of making the polymer composition according to paragraph 8 or paragraph 9, the method comprising combining a polymer or polymer precursors with the talc particulate (for example, the microcrystalline talc particulate) according to any of paragraphs 1 to 3.

11. Use of the talc particulate (for example, the microcrystalline talc particulate) according to any of paragraphs 1 to 3 in a polymer composition to: (a) increase the modulus at 50% elongation, $M_{50}$, of the polymer composition; (b) increase the modulus at 100% elongation, $M_{100}$, of the polymer composition; (c) increase the modulus at 300% elongation, $M_{300}$, of the polymer composition; (d) increase the abrasion resistance of the polymer composition; (e) increase the reinforcement index $M_{300}/M_{100}$ of the polymer composition; (f) increase the tensile strength of the polymer composition; and/or (g) increase the tear resistance of the polymer composition, as compared to a polymer composition comprising the same amount of a talc particulate not according to any of paragraphs 1 to 3.

12. A method of: (a) increasing the modulus at 50% elongation, $M_{50}$, of a polymer composition; (b) increasing the modulus at 100% elongation, $M_{100}$, of the polymer composition; (c) increasing the modulus at 300% elongation, $M_{300}$, of the polymer composition; (d) increasing the abrasion resistance of the polymer composition; (e) increasing the reinforcement index $M_{300}/M_{100}$ of the polymer composition; (f) increasing the tensile strength of the polymer composition; and/or (g) increasing the tear resistance of the polymer composition; as compared to a reference polymer composition comprising a reference amount of a talc particulate not according to any of paragraphs 1 to 3; wherein the method comprises adding the talc particulate (for example, the microcrystalline talc particulate) according to any of paragraphs 1 to 3 to the polymer composition in the reference amount.

13. The use or method according to paragraph 11 or paragraph 12, wherein the polymer composition is an elastomeric polymer composition comprising an elastomer such as a synthetic rubber or a natural rubber, for example, a styrene-butadiene rubber.

14. The use or method according to any of paragraphs 11 to 13, wherein: (a) the polymer composition comprises no less than about 5 phr, for example, no less than about 50 phr, of the talc particulate (for example, the microcrystalline talc particulate); and/or (b) the polymer composition further comprises a mineral other than the talc particulate (for example, the microcrystalline talc particulate), for example, precipitated silica, diatomaceous earth and/or a clay mineral such as kaolin, or carbon black.

## EXAMPLES

Example 1

Three different microcrystalline talc particulates (Ex. 1, Ex. 2 and Ex. 3) were prepared by milling and classifying a microcrystalline talc feed material.

The microcrystalline talc feed material was a microcrystalline talc obtained from the Three Springs talc mine in Australia, having a $d_{50}$ (by Sedigraph) of 7.8 $\mu$m, a $d_{50}$ (by laser) of 10.4 $\mu$m and a BET specific surface area of 9.2 $m^2$/g, and containing 95 % talc (i.e. magnesium silicate) and 4 % chlorite (by thermogravimetric analysis).

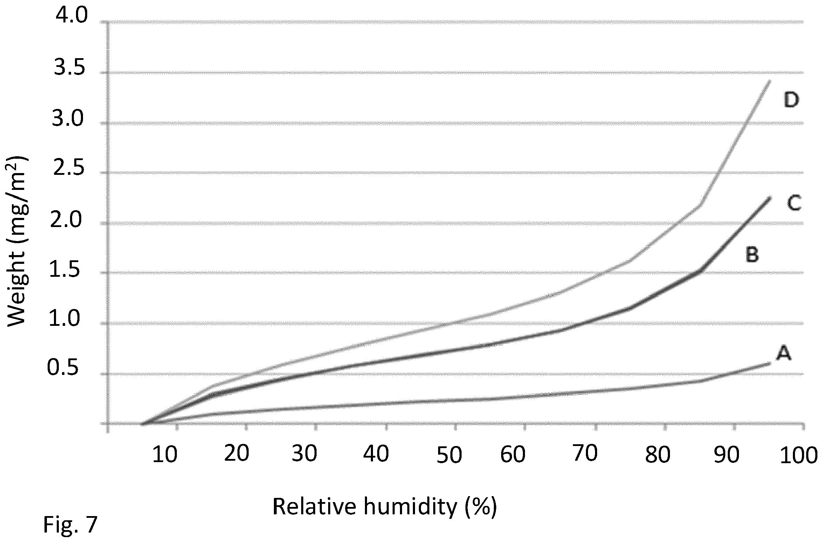

Figure 7 shows a plot of water adsorption as a function of relative humidity for four different talc materials A to D. Talc material D corresponds to a reference microcrystalline talc.

The microcrystalline talc feed material was milled using a NETZSCH Ecutec PAMIR 30 stirred bead mill (available from NETZSCH-Feinmahltechnik GmbH, Germany) using 52 kg of 4 to 6 mm diameter milling beads made of steel (for Ex. 1) or alumina (for Ex. 2 and Ex. 3). The NETZSCH Ecutec PAMIR 30 stirred bead mill has an installed power of 22 kW, an absorbed power of 6 to 8 kW (when used with ceramic beads) and an operating speed of 400 rpm.

The milled microcrystalline talc was classified using a NETZSCH Ecutec BORA 50 turbo air classifier (available from NETZSCH-Feinmahltechnik GmbH, Germany) into a coarse fraction and a fine fraction. The NETZSCH Ecutec BORA 50 turbo air classifier has a maximum air flow of 1800 m$^3$/h, a maximum rotor speed of 8700 rpm, an installed power of 10 kW, a feed rate of up to 1800 kg/h and a main fan installed power of 30 kW.

The stirred bead mill and the air classifier were arranged in a milling/classifying circuit as shown in Figure 1, such that the coarse fraction was fed back into the stirred bead mill for further milling.

The operating conditions for the NETZSCH Ecutec PAMIR 30 stirred bead mill and the NETZSCH Ecutec BORA 50 turbo air classifier are given in Table 1.

Table 1.

| System Operating Parameters | Ex. 1 | Ex. 2 | Ex. 3 |
|---|---|---|---|
| BORA speed (rpm) | 7000 | 8700 | 6000 |
| Air flow (m$^3$/h) | 1400 | 1100 | 1100 |
| Secondary air flow (m$^3$/h) | 150 | 100 | 200 |
| Feed rate / Throughout (kg/h) | 35 | 13.8 | 21.6 |
| PAMIR discharge (kg/h) | 240 | 179 | 209 |
| Fines yield (%) | 14.6 | 7.7 | 10.3 |
| PAMIR speed (rpm) | 400 | 400 | 400 |
| PAMIR absorbed power (kW) | 11.0 | 7.29 | 7.07 |
| Specific grinding energy (kWh/t) | 315 | 528 | 327 |
| Product outlet temperature (°C) | 102 | 64 | 53 |
| PAMIR ∆P (daPa) | - | 169 | 183 |
| BORA ∆P (daPa) | 1756 | 1773 | 1148 |
| Fan inlet static pressure (daPa) | 2080 | 2086 | 1459 |
| Fan absorbed power (kW) | 24.9 | 9.09 | 6.37 |
| BORA absorbed power (kW) | 4.23 | 3.01 | 1.54 |
| Total specific energy (kW/t) | 1147 | 1405 | 694 |

The particle size distribution (by both Sedigraph and Malvern laser scattering), BET specific surface area, Minolta Y whiteness, and the CIElab L* and b* values, were analysed for each of the examples. The methods for obtaining the particle size distribution and the BET specific surface area are set out in more detail in Examples 4, 5 and 6. The results are shown in Table 2, as compared to a commercially available talc particulate (Ref. 1). For Ex. 1, Ex. 2 and Ex. 3, Table 2 also shows the percentage increase in BET specific surface area (∆BET) relative to Ref. 1.

Table 2.

| | Ref. 1 | Ex. 1 | Ex. 2 | Ex. 3 |
|---|---|---|---|---|
| **Sedigraph** | | | | |
| d$_{95}$(μm) | 6.5 | 1.7 | 1.4 | 2.0 |
| d$_{75}$ (μm) | 3.2 | 1.0 | 0.8 | 1.1 |
| dso (μm) | 1.6 | 0.6 | 0.5 | 0.7 |
| d$_{25}$ (μm) | 0.7 | 0.3 | 0.3 | 0.4 |

(continued)

| Laser | | | | |
|---|---|---|---|---|
| $d_{95}$ ($\mu$m) | 10.3 | 4.9 | 6.3 | 5.4 |
| $d_{75}$ ($\mu$m) | 6.2 | 3.2 | 3.8 | 3.5 |
| dso ($\mu$m) | 4.3 | 2.4 | 2.5 | 2.4 |
| $d_{25}$ ($\mu$m) | 2.9 | 1.8 | 1.7 | 1.7 |
| Other Measurements | | | | |
| BET ($m^2$/g) | 14.1 | 43.7 | 48.7 | 41.4 |
| $\triangle$BET (%) | - | 210 | 245 | 194 |
| Minolta Y | 91.9 | 92.8 | 94 | 92.8 |
| L* | 96.78 | 97.13 | 97.63 | 97.15 |
| b* | 1.4 | 1.18 | 1.28 | 1.43 |

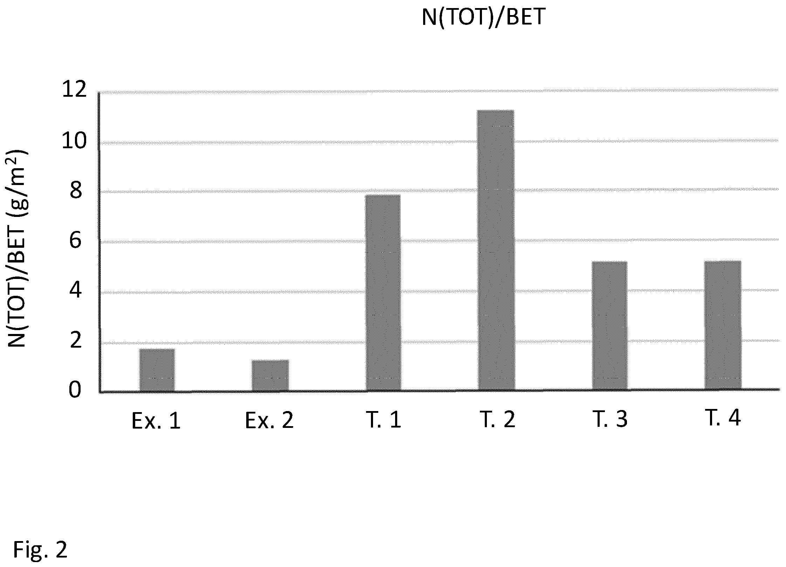

The crystallinity index, CI, defined as the ratio of the number of TOT layers per coherent scattering domain, N(TOT), to the BET specific surface area, was determined for Ex. 1 and Ex. 2 by the method described hereinabove. The results are shown in Figure 2. Figure 2 also shows measurements of CI for reference talc particulates T. 1, T. 2, T. 3 and T. 4. Reference talc particulates T. 1 and T. 2 are commercially available macrocrystalline talcs. Reference talc particulates T. 3 and T. 4 are commercially available microcrystalline talcs.

Six styrene-butadiene white rubber (SBR) formulations (F. 1 to F. 6) having the compositions (measured in parts per hundred rubber (phr)) set out in Table 3 were prepared on a laboratory two-roll mill (available from Gibitre Instruments srl) with a friction ratio of 18:24, by the process set out in Table 4.

Table 3.

| | F. 1 | F. 2 | F. 3 | F. 4 | F. 5 | F. 6 |
|---|---|---|---|---|---|---|
| SBR | 100 | 100 | 100 | 100 | 100 | 100 |
| PS* | 50 | - | - | - | - | - |
| Ref. 1 | - | 100 | - | - | - | - |
| Kaolin** | - | - | 100 | - | - | - |
| Ex. 2 | - | - | - | 100 | - | - |
| Ex. 3 | - | - | - | - | 100 | - |
| Ex. 1 | - | - | - | - | - | 100 |
| PEG*** | 3 | 3 | 3 | 3 | 3 | 3 |
| Rubber process oil | 20 | 20 | 20 | 20 | 20 | 20 |
| Active ZnO | 2 | 2 | 2 | 2 | 2 | 2 |
| Stearic acid | 1 | 1 | 1 | 1 | 1 | 1 |
| Sulfur | 2.0 | 2.5 | 2.5 | 2.5 | 2.5 | 2.5 |
| MBTS[†] | 1.5 | 2 | 2 | 2 | 2 | 2 |
| MBT[††] | 0.7 | 0.9 | 0.9 | 0.9 | 0.9 | 0.9 |
| DTMT[‡] | 0.2 | 0.3 | 0.3 | 0.3 | 0.3 | 0.3 |
| Total | 180.4 | 231.6 | 231.6 | 231.6 | 231.6 | 231.6 |

*Commercially available precipitated silica having a BET specific surface area of 180 $m^2$/g; **Commercially available hydrous kaolin having a BET specific surface area of 16 $m^2$/g and a $d_{50}$ (by Sedigraph) of 0.4 $\mu$m; ***Polyethylene glycol having a molecular weight of 4000 daltons; [†]2-mercaptobenzothiazole; [††]Mercaptobenzothiazole disulfide; [‡]Tetramethylthiuram disulfide.

Table 4.

| Time (minutes) | Incorporation or task | Roll temperature (°C) | Roll spacing (mm) |
|---|---|---|---|
| 0 to 12 | Plasticizing the rubber | 70 | 0.5 |
| 2 to 15 | Stearic acid; ZnO; PEG 4000 | 70 | 0.5 |
| 15 | Removal of mixture; Cooling cylinders | - | - |
| 0 to 12 | Filler and oil added in alternating fashion | 40 | Progressing from 0.5 to 1.0 |
| 12 to 17 | Accelerants and sulfur | 40 | 1.0 |
| 17 | Removal of mixture; Cooling mixture | - | - |
| 17+ | 3 final passes | | Maximum tightness |
| 17+ | Making a sheet | | 2 |

Table 5 shows the minimum torque measure (ML), the maximum torque measure (MH), the crosslink density ($\Delta C$), the ts2 scorch time, the vulcanization time to 50 % cure (t50), the vulcanization time to 90 % cure (t90) and the Mooney viscosity at 100°C (MV) for each of the formulations F. 1 to F. 6. ML, MH, $\Delta C$, ts2, t50 and t90 were measured using a moving die rheometer according to ISO - 6502. The Mooney viscosity was measured using a Mooney viscometer according to ISO 289-1.

Table 5.

| | F. 1 | F. 2 | F. 3 | F. 4 | F. 5 | F. 6 |
|---|---|---|---|---|---|---|
| **ML (dNm)** | 20.2 | 11.5 | 9.2 | 11.9 | 11.2 | 11.6 |
| **MH (dNm)** | 55.6 | 62.4 | 43.7 | 53.9 | 51.3 | 57.6 |
| **$\Delta C$ (dNm)** | 35.3 | 50.9 | 34.5 | 42.0 | 40.1 | 46.0 |
| **ts2 (min)** | 7.2 | 0.9 | 5.3 | 1.1 | 1.1 | 1.1 |
| **t50 (min)** | 11.8 | 1.6 | 7.9 | 1.7 | 1.7 | 1.7 |
| **t90 (min)** | 19.0 | 2.3 | 11.8 | 2.3 | 2.4 | 2.3 |
| **MV (MU)** | 80.7 | 29.4 | 27.9 | 36.4 | 32.9 | 32.6 |

Physical properties including the density, modulus at 50 % elongation (Mso), modulus at 100 % elongation ($M_{100}$), modulus at 300 % elongation ($M_{300}$), reinforcement index $M_{300}/M_{100}$, tensile strength (TS), elongation at break (Elong.), tear resistance (TR), Shore A hardness (H) and compression set (CS) were measured for each of the formulations F. 1 to F. 6. Each property was measured from ten different samples and an average obtained. The results are shown in Table 6 along with corresponding standard deviations (a) below each measurement. Density was measured according to ISO 2781. Tensile properties were measured according to ISO 37. Tear resistance was measured according to ISO 34. Shore A hardness was measured according to ISO 7619-1. Compression set was measured according to ISO 815. Abrasion resistance was measured according to ISO 4649.

Table 6.

| | F. 1 | F. 2 | F. 3 | F. 4 | F. 5 | F. 6 |
|---|---|---|---|---|---|---|
| **Density (kg/m$^3$)** | 1.13 | 1.34 | 1.32 | 1.33 | 1.33 | 1.34 |
| **$\sigma$ (density)** | 0 | 0 | 0 | 0 | 0 | 0 |
| **$M_{50}$ (MPa)** | 0.8 | 1.2 | 0.8 | 1.1 | 1.1 | 1.2 |
| **$\sigma$ ($M_{50}$)** | 0 | 0.03 | 0.04 | 0.02 | 0.02 | 0.04 |
| **$M_{100}$ (MPa)** | 1 | 1.7 | 1.1 | 1.6 | 1.6 | 1.8 |
| **$\sigma$ ($M_{100}$)** | 0 | 0.03 | 0.05 | 0.04 | 0.04 | 0.07 |
| **$M_{300}$ (MPa)** | 2.1 | 2.6 | 1.6 | 3.1 | 2.9 | 3.3 |

(continued)

|  | F. 1 | F. 2 | F. 3 | F. 4 | F. 5 | F. 6 |
|---|---|---|---|---|---|---|
| $\sigma$ ($M_{300}$) | 0.1 | 0.1 | 0.04 | 0.12 | 0.12 | 0.2 |
| $M_{300}/M_{100}$ | 2.1 | 1.53 | 1.45 | 1.94 | 1.81 | 1.83 |
| TS (MPa) | 12.5 | 7.8 | 8.0 | 10.1 | 10.5 | 10.8 |
| $\sigma$ (TS) | 1 | 1.2 | 0.4 | 0.7 | 1.1 | 0.7 |
| Elong. (%) | 1125 | 860 | 1190 | 710 | 780 | 710 |
| $\sigma$ (Elong.) | 70 | 120 | 90 | 55 | 55 | 45 |
| TR (N/mm) | 35 | 24 | 22 | 32 | 29 | 30 |
| $\sigma$ (TR) | 1 | 2 | 1 | 2 | 1 | 1.5 |
| H | 55 | 51 | 45 | 52 | 51 | 50 |
| $\sigma$ (H) | 1 | 1 | 1 | 1 | 1 | 1 |
| CS (%) | 41 | 41 | 35 | 38 | 42 | 39 |
| $\sigma$ (CS) | 1 | 1 | 1 | 2 | 1 | 2 |

Example 2

Six styrene-butadiene white rubber (SBR) formulations (F. 7 to F. 12) having the compositions (measured in parts per hundred rubber (phr)) set out in Table 7 were prepared using the process described in Example 1.

Table 7.

|  | F. 7 | F. 8 | F. 9 | F. 10 | F. 11 | F.12 |
|---|---|---|---|---|---|---|
| SBR | 100 | 100 | 100 | 100 | 100 | 100 |
| PS* | 50 | 45 | 40 | 30 | 25 | 20 |
| Ex. 2 | - | 12 | 24 | 48 | 60 | 72 |
| PEG** | 3 | 3 | 3 | 3 | 3 | 3 |
| Rubber process oil | 20 | 20 | 20 | 20 | 20 | 20 |
| Active ZnO | 2 | 2 | 2 | 2 | 2 | 2 |
| Stearic acid | 1 | 1 | 1 | 1 | 1 | 1 |
| Sulfur | 2 | 2 | 2 | 2 | 2 | 2 |
| MBTS[†] | 1.5 | 1.5 | 1.5 | 1.5 | 1.5 | 1.5 |
| MBT[††] | 0.7 | 0.7 | 0.7 | 0.7 | 0.7 | 0.7 |
| DTMT[‡] | 0.2 | 0.2 | 0.2 | 0.2 | 0.2 | 0.2 |

*Commercially available precipitated silica having a BET specific surface area of 180 $m^2$/g; **Polyethylene glycol having a molecular weight of 4000 daltons; [†]2-mercaptobenzothiazole; [††]Mercaptobenzothiazole disulfide; [‡]Tetramethylthiuram disulfide.

Table 8 shows the minimum torque measure (ML), the maximum torque measure (MH), the crosslink density ($\Delta$C), the ts1 scorch time, the ts2 scorch time, the vulcanization time to 50 % cure (t50), the vulcanization time to 90 % cure (t90) and the Mooney viscosity at 100°C (MV) for each of the formulations, measured as set out in Example 1.

Table 8.

|  | F. 7 | F. 8 | F. 9 | F. 10 | F. 11 | F.12 |
|---|---|---|---|---|---|---|
| ML (dNm) | 5.19 | 4.92 | 4.31 | 3.37 | 3.05 | 2.6 |

(continued)

|  | F. 7 | F. 8 | F. 9 | F. 10 | F. 11 | F.12 |
|---|---|---|---|---|---|---|
| MH (dNm) | 21.52 | 19.67 | 20.33 | 17.69 | 16.17 | 15.64 |
| △C (dNm) | 16.33 | 14.75 | 16.02 | 14.32 | 13.12 | 13.04 |
| ts1 (min) | 0.51 | 0.89 | 1.12 | 1.07 | 1.01 | 0.84 |
| ts2 (min) | 2.95 | 1.90 | 1.55 | 1.31 | 1.20 | 0.90 |
| t50 (min) | 5.56 | 3.23 | 2.45 | 1.96 | 1.67 | 1.48 |
| t90 (min) | 5.56 | 3.23 | 2.45 | 1.96 | 1.67 | 1.38 |
| MV (MU) | 79 | 82 | 70 | 60 | 55 | 53 |

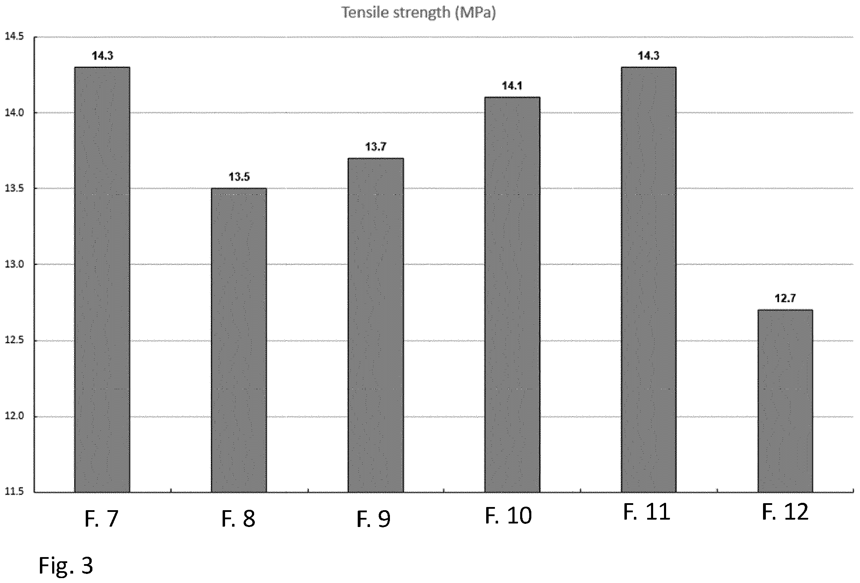

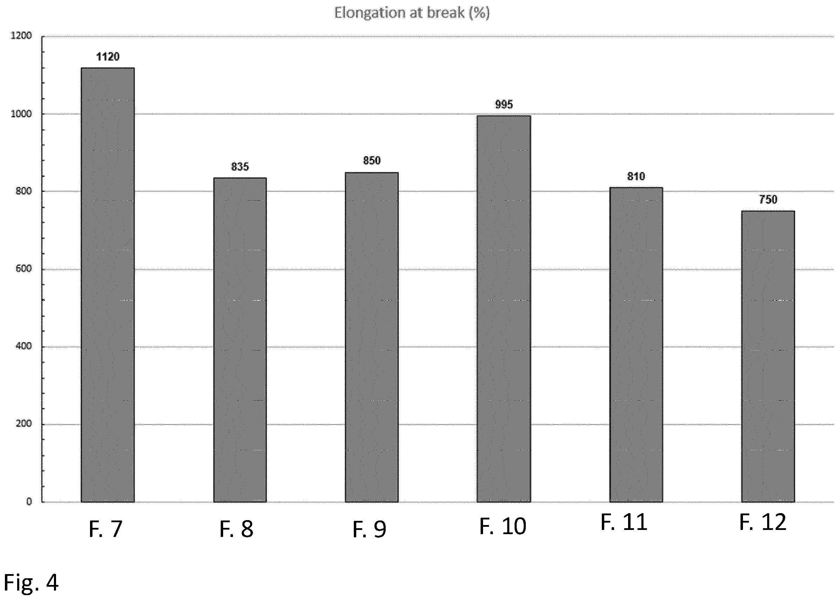

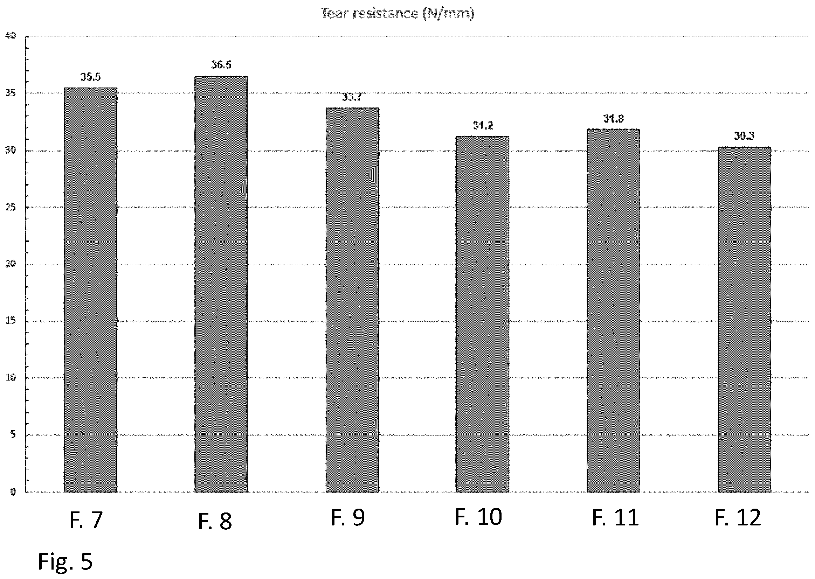

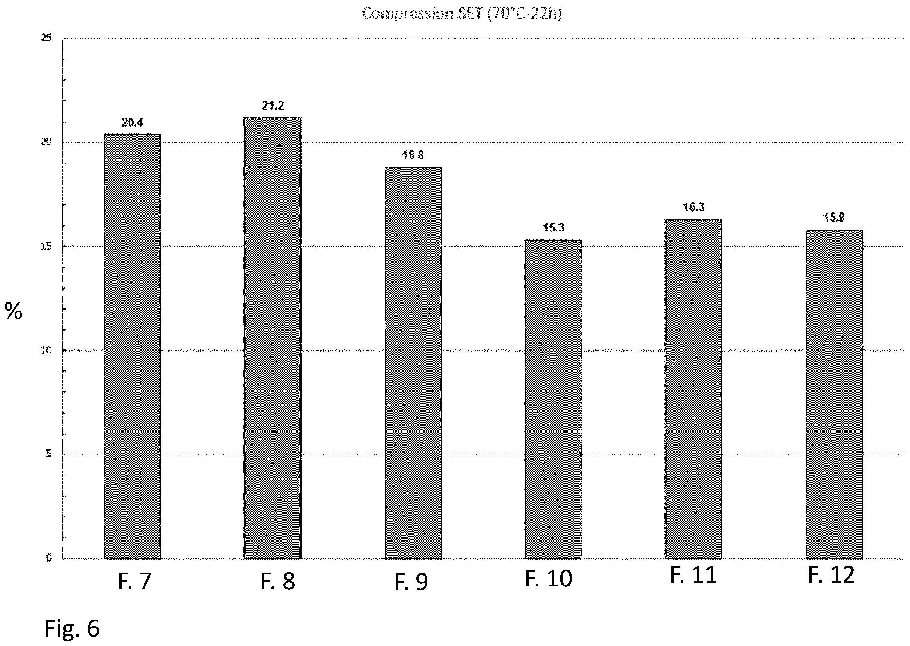

The tensile strength, elongation at break, tear resistance and compression set were measured for each of the formulations by the methods set out in Example 1. The results are shown in Figures 3, 4, 5 and 6.

Physical properties including the density, modulus at 50 % elongation (Mso), modulus at 100 % elongation ($M_{100}$), modulus at 300 % elongation ($M_{300}$), reinforcement index $M_{300}/M_{100}$, tensile strength (TS), elongation at break (Elong.), tear resistance (TR), Shore A hardness (H), compression set (CS), abrasion loss and abrasion resistance (AR) were then measured for each of the formulations F. 7 to F. 12. Each property was measured from ten different samples and an average obtained. The results are shown in Table 9 along with corresponding standard deviations (a) below each measurement. Density was measured according to ISO 2781. Tensile properties were measured according to ISO 37. Tear resistance was measured according to ISO 34. Shore A hardness was measured according to ISO 7619-1. Compression set was measured according to ISO 815. Abrasion resistance was measured according to ISO 4649.

Table 9.

|  | F. 7 | F. 8 | F. 9 | F. 10 | F. 11 | F. 12 |
|---|---|---|---|---|---|---|
| Density (kg/m³) | 1.13 | 1.16 | 1.19 | 1.24 | 1.27 | 1.29 |
| σ (density) | 0 | 0 | 0 | 0 | 0 | 0 |
| $M_{50}$ (MPa) | 1.04 | 1.3 | 1.31 | 1.41 | 1.51 | 1.56 |
| σ ($M_{50}$) | 0.0 | 0.0 | 0.0 | 0.1 | 0.0 | 0.0 |
| $M_{100}$ (MPa) | 1.45 | 1.92 | 1.9 | 2.11 | 2.28 | 2.38 |
| σ ($M_{100}$) | 0.0 | 0.0 | 0.1 | 0.1 | 0.1 | 0.1 |
| $M_{300}$ (MPa) | 3.7 | 4.6 | 4.4 | 4.4 | 4.7 | 4.7 |
| σ ($M_{300}$) | 0.2 | 0.1 | 0.2 | 0.3 | 0.1 | 0.1 |
| $M_{300}/M_{100}$ | 2.6 | 2.4 | 2.3 | 2.1 | 2.1 | 2.0 |
| TS (MPa) | 14.3 | 13.5 | 13.7 | 14.1 | 14.3 | 12.7 |
| σ (TS) | 1.2 | 0.6 | 0.5 | 0.7 | 0.6 | 1.0 |
| Elong. (%) | 1120 | 835 | 850 | 995 | 810 | 750 |
| σ (Elong.) | 30 | 100 | 85 | 80 | 75 | 110 |
| TR (N/mm) | 35.5 | 36.5 | 33.7 | 31.2 | 31.8 | 30.3 |
| σ (TR) | 0.6 | 0.9 | 0.9 | 0.5 | 0.7 | 0.9 |
| H | 60 | 63 | 63 | 60 | 59 | 60 |
| σ (H) | 1 | 1 | 1 | 1 | 1 | 1 |
| CS (%) | 20.4 | 21.2 | 18.8 | 15.3 | 16.3 | 15.8 |
| σ (CS) | 1 | 1 | 2 | 1 | 1 | 1 |
| Abrasion loss (g) | 0.2194 | 0.2383 | 0.2603 | 0.2958 | 0.3098 | 0.3374 |

(continued)

|  | F. 7 | F. 8 | F. 9 | F. 10 | F. 11 | F. 12 |
|---|---|---|---|---|---|---|
| σ (Abrasion) | 0.004 | 0.007 | 0.003 | 0.005 | 0.005 | 0.013 |
| AR (cm³) | 0.25 | 0.28 | 0.31 | 0.37 | 0.39 | 0.44 |

The modulus at 50 % elongation ($M_{50}$), modulus at 100 % elongation ($M_{100}$), modulus at 300 % elongation ($M_{300}$), tensile strength (TS), elongation at break (Elong.), tear resistance (TR), Shore A hardness (H) were also measured for each of the formulations F. 7 to F. 12 following ageing at 70°C for 168 hours. Each property was measured from ten different samples and an average obtained. The results are shown in Table 10 along with corresponding standard deviations (a) below each measurement and the percentage change (Δ) relative to the corresponding measurements prior to ageing.

Table 10.

|  | F. 7 | F. 8 | F. 9 | F. 10 | F. 11 | F. 12 |
|---|---|---|---|---|---|---|
| $M_{50}$ (MPa) | 1.50 | 1.76 | 1.81 | 1.90 | 1.90 | 2.00 |
| σ ($M_{50}$) | 0 | 0 | 0 | 0 | 0 | 0 |
| Δ($M_{50}$) | 44.2% | 35.4% | 38.2% | 34.8% | 25.8% | 28.2% |
| $M_{100}$ (MPa) | 2.26 | 2.70 | 2.72 | 2.79 | 2.79 | 2.95 |
| σ ($M_{100}$) | 0 | 0 | 0 | 0 | 0.1 | 0.1 |
| Δ($M_{100}$) | 55.9% | 40.6% | 43.2% | 32.2% | 22.4% | 23.9% |
| $M_{300}$ (MPa) | 5.8 | 6.5 | 6.0 | 5.7 | 5.5 | 5.5 |
| σ ($M_{300}$) | 0.3 | 0.3 | 0.4 | 0.1 | 0.4 | 0.3 |
| Δ($M_{300}$) | 57.6% | 41.6% | 36.1% | 30.2% | 15.5% | 16.7% |
| TS (MPa) | 13.5 | 11.0 | 11.8 | 12.8 | 12.1 | 10.9 |
| σ (TS) | 1.1 | 0.4 | 0.5 | 0.6 | 0.7 | 0.5 |
| Δ(TS) | -5.6% | -18.5% | -13.9% | -9.2% | -15.4% | -14.2% |
| Elong. (%) | 800 | 630 | 680 | 770 | 785 | 690 |
| σ (Elong.) | 65 | 35 | 60 | 40 | 40 | 30 |
| Δ(Elong.) | -28.6% | -24.6% | -20.0% | -22.6% | -3.1% | -8.0% |
| TR (N/mm) | 38.1 | 35.3 | 34.8 | 30.5 | 30.6 | 28.2 |
| σ (TR) | 1 | 0.7 | 1.2 | 1.2 | 1.1 | 1.4 |
| Δ(TR) | 7.3% | -3.3% | 3.3% | -2.2% | -2.8% | -6.9% |
| H | 65 | 68 | 67 | 65 | 65 | 65 |
| σ (H) | 1 | 1 | 1 | 1 | 1 | 1 |

Example 3

Eight styrene-butadiene white rubber (SBR) formulations (F. 13 to F. 20) having the compositions (measured in parts per hundred rubber (phr)) set out in Table 11 were prepared using the process described in Example 1.

Table 11.

|  | F. 13 | F. 14 | F. 15 | F. 16 | F. 17 | F. 18 | F. 19 | F. 20 |
|---|---|---|---|---|---|---|---|---|
| SBR | 100 | 100 | 100 | 100 | 100 | 100 | 100 | 100 |
| PS* | 50 | 45 | 40 | 30 | 25 | 25 | 25 | 20 |

(continued)

| | F. 13 | F. 14 | F. 15 | F. 16 | F. 17 | F. 18 | F. 19 | F. 20 |
|---|---|---|---|---|---|---|---|---|
| **Ex. 2** | - | 12 | 24 | 48 | 60 | - | - | 72 |
| **Ex. 3** | - | - | - | - | - | 60 | - | - |
| **Clay\*\*** | - | - | - | - | - | - | 60 | - |
| **PEG\*\*\*** | 3 | 3 | 3 | 3 | 3 | 3 | 3 | 3 |
| **Rubber process oil** | 20 | 20 | 20 | 20 | 20 | 20 | 20 | 20 |
| **Active ZnO** | 2 | 2 | 2 | 2 | 2 | 2 | 2 | 2 |
| **Stearic acid** | 1 | 1 | 1 | 1 | 1 | 1 | 1 | 1 |
| **Sulfur** | 2 | 2 | 2 | 2 | 2 | 2 | 2 | 2 |
| **MBTS†** | 1.5 | 1.5 | 1.5 | 1.5 | 1.5 | 1.5 | 1.5 | 1.5 |
| **MBT††** | 0.7 | 0.7 | 0.7 | 0.7 | 0.7 | 0.7 | 0.7 | 0.7 |
| **DTMT‡** | 0.2 | 0.2 | 0.2 | 0.2 | 0.2 | 0.2 | 0.2 | 0.2 |

*Commercially available precipitated silica having a BET specific surface area of 120 $m^2$/g; **Commercially available ball clay having a $d_{50}$, by Sedigraph, of about 0.3 $\mu$m and a $d_{50}$, by laser, of about 4.4 $\mu$m; ***Polyethylene glycol having a molecular weight of 4000 daltons; †2-mercaptobenzothiazole; ††Mercaptobenzothiazole disulfide; ‡Tetramethylthiuram disulfide.

Table 12 shows the minimum torque measure (ML), the maximum torque measure (MH), the crosslink density ($\triangle$C), the ts1 scorch time, the ts2 scorch time, the vulcanization time to 50 % cure (t50) and the vulcanization time to 90 % cure (t90) for each of the formulations, measured as described in Example 1. Table 12 also includes measurements of the storage modulus G' (of the complex dynamic modulus $G = G' + iG''$) at 150 % extension obtained using a moving die rheometer according to ISO 13145. G' is comparable to the Mooney viscosity.

Table 12.

| | F. 13 | F. 14 | F. 15 | F. 16 | F. 17 | F. 18 | F. 19 | F. 20 |
|---|---|---|---|---|---|---|---|---|
| **ML (dNm)** | 1.13 | 0.78 | 0.89 | 0.96 | 0.81 | 0.91 | 2.44 | 0.82 |
| **MH (dNm)** | 19.18 | 17.37 | 17.6 | 13.87 | 13.5 | 13.42 | 15.17 | 13.19 |
| **$\triangle$C (dNm)** | 18.05 | 16.59 | 16.71 | 12.91 | 12.69 | 12.51 | 12.73 | 12.37 |
| **ts1 (min)** | 1.13 | 0.78 | 0.89 | 0.96 | 0.81 | 0.91 | 2.44 | 0.82 |
| **ts2 (min)** | 1.93 | 1.01 | 1.08 | 1.13 | 0.94 | 1.06 | 3.44 | 0.94 |
| **t50 (min)** | 3.07 | 1.6 | 1.6 | 1.53 | 1.25 | 1.42 | 5.24 | 1.24 |
| **t90 (min)** | 5.55 | 2.54 | 2.59 | 2.48 | 2 | 2.26 | 11.42 | 1.96 |
| **G' (kPa)** | 31.05 | 23.99 | 26.87 | 22.01 | 21.68 | 21.93 | 21.51 | 20.33 |

Physical properties including the density, modulus at 50 % elongation (Mso), modulus at 100 % elongation ($M_{100}$), modulus at 300 % elongation ($M_{300}$), reinforcement index $M_{300}$/$M_{100}$, tensile strength (TS), elongation at break (Elong.), tear resistance (TR) and Shore A hardness (H) were then measured for formulations F. 13 to F. 17 and F. 20. Each property was measured from ten different samples and an average obtained. The results are shown in Table 13 along with corresponding standard deviations (a) below each measurement. Density was measured according to ISO 2781. Tensile properties were measured according to ISO 37. Tear resistance was measured according to ISO 34. Shore A hardness was measured according to ISO 7619-1.

Table 13.

| | F. 13 | F. 14 | F. 15 | F. 16 | F. 17 | F. 20 |
|---|---|---|---|---|---|---|
| **Density (kg/$m^3$)** | 1.13 | 1.16 | 1.18 | 1.23 | 1.26 | 1.29 |

(continued)

|  | F. 13 | F. 14 | F. 15 | F. 16 | F. 17 | F. 20 |
|---|---|---|---|---|---|---|
| $\sigma$ (density) | 0 | 0 | 0 | 0 | 0 | 0 |
| $M_{50}$ (MPa) | 0.9 | 1.0 | 1.2 | 1.2 | 1.3 | 1.4 |
| $\sigma$ ($M_{50}$) | 0 | 0 | 0 | 0 | 0 | 0.1 |
| $M_{100}$ (MPa) | 1.4 | 1.6 | 1.8 | 1.8 | 2.0 | 2.0 |
| $\sigma$ ($M_{100}$) | 0 | 0 | 0.1 | 0.1 | 0.1 | 0.1 |
| $M_{300}$ (MPa) | 4.3 | 5.0 | 5.0 | 4.2 | 4.4 | 4.1 |
| $\sigma$ ($M_{300}$) | 0.1 | 0.1 | 0.2 | 0.2 | 0.1 | 0.3 |
| $M_{300}/M_{100}$ | 3.1 | 3.1 | 2.8 | 2.3 | 2.2 | 2.1 |
| TS (MPa) | 10.7 | 13.7 | 13.7 | 14.5 | 14.8 | 14.4 |
| $\sigma$ (TS) | 0.7 | 0.5 | 0.5 | 0.3 | 1.1 | 0.5 |
| Elong. (%) | 605 | 610 | 610 | 700 | 720 | 665 |
| $\sigma$ (Elong.) | 105 | 90 | 50 | 70 | 65 | 115 |
| TR (N/mm) | 34.9 | 37.6 | 34.6 | 33.9 | 32.6 | 32.8 |
| $\sigma$ (TR) | 0.7 | 1 | 1.6 | 0.8 | 0.7 | 0.6 |
| H | 57 | 58 | 59 | 56 | 57 | 57 |
| $\sigma$ (H) | 1 | 1 | 1 | 1 | 1 | 1 |

The compression set (CS), abrasion loss and abrasion resistance (AR) were also measured for formulations F. 13 to F. 20. Each property was measured from ten different samples and an average obtained. The results are shown in Table 14 along with corresponding standard deviations ($\sigma$) below each measurement. Compression set was measured according to ISO 815. Abrasion resistance was measured according to ISO 4649.

Table 14.

|  | F. 13 | F. 14 | F. 15 | F. 16 | F. 17 | F. 18 | F. 19 | F. 20 |
|---|---|---|---|---|---|---|---|---|
| CS (%) | 16.3 | 17.9 | 14.8 | 14 | 14.4 | 14.9 | 18.1 | 14.4 |
| $\sigma$ (CS) | 1.2 | 1.1 | 0.9 | 0.8 | 1.4 | 1.3 | 1.5 | 1.2 |
| Abrasion (g) | 0.296 | 0.218 | 0.24 | 0.265 | 0.271 | 0.281 | 0.34 | 0.277 |
| $\sigma$ (Abrasion) | 0.046 | 0.016 | 0.079 | 0.011 | 0.011 | 0.009 | 0.049 | 0.024 |
| AR ($cm^3$) | 0.33 | 0.25 | 0.28 | 0.33 | 0.34 | 0.36 | 0.43 | 0.36 |

The modulus at 50 % elongation (Mso), modulus at 100 % elongation ($M_{100}$), modulus at 300 % elongation ($M_{300}$), tensile strength (TS), elongation at break (Elong.), tear resistance (TR) and Shore A hardness (H) were also measured for each of the formulations F. 13 to F. 20 following ageing at 70°C for 168 hours. Each property was measured from ten different samples and an average obtained. The results are shown in Table 15 along with corresponding standard deviations ($\sigma$) below each measurement and the percentage change ($\Delta$) relative to the corresponding measurements prior to ageing.

Table 15.

|  | F. 13 | F. 14 | F. 15 | F. 16 | F. 17 | F. 18 | F. 19 | F. 20 |
|---|---|---|---|---|---|---|---|---|
| $M_{50}$ (MPa) | 1.5 | 1.7 | 1.7 | 1.7 | 1.9 | 2 | 1.5 | 1.9 |
| $\sigma$ ($M_{50}$) | 0 | 0 | 0 | 0 | 0 | 0 | 0 | 0 |
| $\Delta$($M_{50}$) | 67% | 70% | 42% | 42% | 46% | - | - | 36% |

(continued)

|  | F. 13 | F. 14 | F. 15 | F. 16 | F. 17 | F. 18 | F. 19 | F. 20 |
|---|---|---|---|---|---|---|---|---|
| $M_{100}$ (MPa) | 2.4 | 2.8 | 2.6 | 2.5 | 2.7 | 2.8 | 2.3 | 2.8 |
| $\sigma$ ($M_{100}$) | 0 | 0 | 0.1 | 0.1 | 0.1 | 0.1 | 0 | 0 |
| $\Delta$($M_{100}$) | 71.4% | 75% | 44.4% | 38.9% | 35% | 33.3% | 76.9% | 40% |
| $M_{300}$ (MPa) | 8.1 | 9.5 | 7.5 | 5.7 | 5.8 | 6.1 | 4.4 | 5.5 |
| $\sigma$ ($M_{300}$) | 0.2 | 0.1 | 0.2 | 0.2 | 0.2 | 0.2 | 0.1 | 0.1 |
| $\Delta$($M_{300}$) | 88.4% | 90% | 50% | 35.7% | 31.8% | 38.6% | 83.3% | 34.1% |
| TS (MPa) | 9 | 10.8 | 10.8 | 12.3 | 13.8 | 12.3 | 12.3 | 12.5 |
| $\sigma$ (TS) | 0.3 | 0.5 | 0.5 | 0.7 | 0.7 | 0.8 | 0.2 | 0.1 |
| $\Delta$(TS) | -15.9% | -21.2% | -21.2% | -15.2% | -6.8% | -13.4% | -13.4% | -13.2% |
| Elong. (%) | 340 | 330 | 385 | 470 | 490 | 470 | 750 | 490 |
| $\sigma$ (Elong.) | 25 | 10 | 10 | 20 | 15 | 20 | 60 | 15 |
| $\Delta$(Elong.) | -43.8% | -45.9% | -36.9% | -32.9% | -31.9% | -28.8% | -38.8% | -26.3% |
| TR (N/mm) | 36.9 | 33.3 | 34.7 | 34.4 | 34.3 | 33.3 | 35.4 | 34.2 |
| $\sigma$ (TR) | 1.9 | 2.6 | 2.2 | 1.8 | 2 | 1.5 | 1.3 | 0.5 |
| $\Delta$(TR) | 5.7% | -11.4% | 0.3% | 1.5% | 5.2% | 2.5% | 31.6% | 4.3% |
| H | 67 | 66 | 66 | 63 | 64 | 64 | 61 | 63 |
| $\sigma$ (H) | 1 | 1 | 1 | 1 | 1 | 1 | 1 | 1 |
| $\Delta$(H) | 17.% | 13.8% | 11.9% | 12.5% | 12.3% | 12.3% | 19.6% | 10.5% |

Example 4 - Method for determining Particle Size Distribution (by Sedigraph)

The Particle Size Distribution (PSD) was determined using a Sedigraph III from Micromeritics Instruments.

A dispersive solution was prepared by weighing out (using an analytical balance) and fully dissolving (by mechanical stirring) 250 mg of Calgon (sodium metaphosphate) in a beaker containing 1 litre of demineralised water. This step took from 45 to 60 minutes. 1 ml of Triton X (polyethylene glycol octyl phenyl ether) was then added to the solution while stirring for at least 10 minutes. Calgon and Trion X are wetting and dispersing agents.

A sample of talc particulate was prepared for sedimentation analysis by combining 4.8 g of the talc particulate sample with 80 ml of the dispersive solution. Initially, the talc particulate was combined with a few drops of the 80 ml of dispersive solution in a beaker and the mixture was mixed using a manual stirrer until a paste consistency was achieved. The remainder of the 80 ml of the dispersive solution was then added to the beaker. The beaker was placed in an ultrasonic bath for 30 seconds to remove air bubbles.

Sedimentation analysis was then carried out on the dispersed sample using the Sedigraph III with the following settings:

- Dispersive solution viscosity: 0.7523 mPa.s
- Dispersive solution density: 0.9948 g/cm$^3$
- Sample density: 2.78 g/cm$^3$ for talc powder
- Diameter max.: 52 $\mu$m
- Diameter min.: 0.4 $\mu$m
- Mode: high speed
- Air bubbles detection: coarse

A result was considered to be valid when the following criteria were met:

- the Reynolds number was below 0.3;
- the baseline (on the dispersive solution only) was between 125-130 kcounts/s;

- the full scale (on the sample suspension) was between 95-105 kcounts/s; and
- the difference between base/full scale was below 35 kcounts/s.

Example 5 - Method for determining Particle Size Distribution (by laser diffraction)

The Particle Size Distribution (PSD) was determined using a Mastersizer 2000 from Malvern instruments.

A sample of talc particulate was prepared for laser diffraction analysis. The required quantity of talc particulate was weighed in a 50 ml beaker. For a talc particulate having a $d_{50}$ (by Sedigraph) equal to or greater than 10 $\mu$m, a quantity of between 1 g and 2 g of the talc particulate was used. For a talc particulate having a $d_{50}$ (by Sedigraph) less than 10 $\mu$m, a quantity of between 0.2 g and 0.5 g of the talc particulate was used.

For coarse talc particulates (having a $d_{50}$, by Sedigraph, equal to or greater than 10 $\mu$m), the sample was combined with absolute ethanol (99.5%) wetting agent. In particular, the powder sample was distributed well at the bottom of the beaker. A few drops of ethanol was added to the powder and mixed using a manual stirrer until a paste consistency was achieved. Between 2 ml and 2.5 ml of ethanol was added to the beaker using a 3 ml disposable pipette and the suspension mixed with the manual stirrer. The beaker was placed in an ultrasonic bath for 30 seconds to remove air bubbles.

Laser diffraction analysis was then carried out on the sample using the Mastersizer 2000 with the following settings:

- Sampler: Hydro 2000G
- Measurement theory: Mie 1.589- 0.01 (i.e. the talc refractive index)
- Water refraction index: 1.33
- Measurement range: 0.02 - 2000 $\mu$m
- Result calculation model: standard analysis
- Number of snaps:

  Duration of measurement: 8 seconds
  Number of snaps per measurement: 8000 snaps
  Background noise time: 8000 snaps
  Background noise snaps: 8 seconds

- Obscuration limits:

  Low: 5 %
  High: 20 %

- Background noise alarm (value of background noise of detector n°1): below 150 units
- Measurement parameters of the sampler:

  Pump: 1800 rpm
  Stirring: 700 rpm
  Ultra-sonics: 100%

The analysis was carried out as follows:
It was checked that the obscuration lower limit was set to 5 % and the obscuration upper limit was set to 20 %. The stirrer speed was set to 700 rpm, the pump to 1800 rpm, and the Ultrasonics to 100 %. The intensity of the laser was checked. If the intensity of the laser was below 77.5%, the following were checked: that the measurement cell was clean; that there were no air bubbles; and that there was no condensation on the measurement cell windows.

The background noise was measured and the intensity of the lasers (red and blue) was measured. Once the lasers were aligned, the intensity of the lasers and the intensity of the background noise (which must be in continuous decline from detector n° 1 to detector n° 51) was checked.

A 2 ml sample was taken from the beaker containing the talc particulate suspension using a disposable pipette and added, drop by drop, into the measurement cell until the required obscuration was obtained: for products with a $d_{50}$ (by Sedigraph) greater than or equal to 10 $\mu$m, measurement with an obscuration of between 15 and 20% was used; for products with a $d_{50}$ (by Sedigraph) below 10 $\mu$m, measurement an obscuration of between 5 and 12% was used. The suspension was homogenised in the cell for about 60 seconds.

The software directly traces the PSD curve expressed as a percentage of fines. The curve validity is controlled by the value of the weighted residual, the signal-to-noise ratio and the distribution of the luminous intensity of the background noise as a function of detectors. The result obtained is valid so long as the weighted residue is below 1.5% and there are no anomalies in the curve. The intensities of the measurement signal and the background noise on the detectors can be consulted using the data report tab. The intensity of the background noise must steadily decline from detector n° 1 to detector n° 51. The intensity of the measurement signal must be significantly greater than that of the background noise. The intensity of the background noise depends on how clean the cell is. The intensity of the signal depends mainly on the sample concentration (i.e. on the obscuration).

It has been found that a number of problems may arise, such as air bubbles or condensation in the measurement cell, if the pressure is too high or the water temperature is too cold. In order to avoid such problems, it is recommended to install a filtration system to improve water cleanliness and reduce its pressure, and to install a mixer tap to regulate the water temperature between 20 and 25°C before the tank is supplied. It is also recommended that the optical bench (lasers) is never switched off

Example 6 - Method for determining BET Specific Surface Area

The BET specific surface area was determined using a method based on the standard NF X 11-621 titled "Determination de l'aire massique (surface spécifique) des poudres par adsorption de gaz - Méthode B.E.T. - Mesure volumétrique par adsorption d'azote a basse température" (Determination of mass area (specific surface) of powders by gas adsorption - BET Methods - Volumetric measurement by nitrogen adsorption at low temperature).

The method made use of a Micromeritics measurement apparatus (available from Micromeritics Instrument Corp., USA) including a vacuum pump, a VacPrep 061 degassing section, a Tristar 3000S measurement section and sample holders, a Mettler AG204 scale with a precision of 0.1 mg, Dewar flasks, nitrogen adsorbant gas and helium carrier gas.

The sample was weighed (to 0.1 mg accuracy) near the empty sample holder and its mass $M_0$ was recorded in g. The previously homogenised powder sample was then introduced, using a funnel, into the sample holder. Sufficient space (dead volume) was left between the sample and the top of the sample holder to enable free circulation of gas. The sample holder was placed into one of the degassing stations and degassed at 250°C under a primary vacuum of 10 Pa for about 20 minutes. After degassing, a sufficient volume of nitrogen was added to the sample holder to avoid introducing air during transfer of the sample holder from the degassing station to the measurement station.

The sample holder was then attached to the measurement station and a Dewar flask containing liquid nitrogen was placed around the sample holder. The BET measurement was commenced using the device control software. The device then carried out the following operations automatically:

- Vacuum removal of the nitrogen introduced for the transfer of the sample holder;
- Leak test;
- Adding helium carrier gas;
- Measuring the dead volume at ambient temperature;
- Measuring the cold dead volume using liquid nitrogen;
- Helium vacuum removal;
- Leak test;
- Adding nitrogen at 950 mm Hg and measuring the saturation pressure; and
- Acquisition of analysis values.

The instrument's data acquisition and processing software plotted the transformed BET line from 5 measured adsorption points. The Dewar flask and then the sample holder were removed. The apparatus was allowed to return to ambient temperature and then the sample was again weighed (to an accuracy of 0.1 mg) near the sample holder and the weight was recorded as $M_2$ in g. The mass of the test portion of the sample, M, was calculated (in g) according to:

$$M = M_2 - M_0$$

The value M was then introduced into the software calculation program which automatically calculated the BET specific surface area of the sample in $m^2/g$.

**Claims**

1. A microcrystalline talc particulate having a BET specific surface area no less than about 35 $m^2/g$ and one or both of:

(a) a $d_{50}$, by Sedigraph, no greater than about 2.0 $\mu$m; and

(b) a $d_{50}$, by laser, no greater than about 5.0 $\mu$m.

2. The microcrystalline talc particulate according to claim 1, wherein:

(a) the $d_{50}$, by Sedigraph, is no greater than about 1.5 $\mu$m, for example, no greater than about 1.0 $\mu$m, or is from about 0.1 $\mu$m to about 2.0 $\mu$m, for example, from about 0.1 $\mu$m to about 1.5 $\mu$m, or from about 0.1 $\mu$m to about 1.0 $\mu$m;

(b) the $d_{50}$, by laser, is no greater than about 4.0 $\mu$m, for example, no greater than about 3.0 $\mu$m, or is from about 1.0 $\mu$m to about 5.0 $\mu$m, for example, from about 1.0 $\mu$m to about 4.0 $\mu$m, or from about 1.0 $\mu$m to about 3.0 $\mu$m; and/or

(c) the BET specific surface area is no less than about 40 m$^2$/g.

3. The microcrystalline talc particulate according to claim 1 or claim 2, having:

(a) a $d_{95}$, by laser, no greater than about 10.0 $\mu$m, for example, no greater than about 7.0 $\mu$m, or from about 4.0 $\mu$m to about 10.0 $\mu$m, or from about 4.0 $\mu$m to about 7.0 $\mu$m;

(b) a $d_{75}$, by laser, no greater than about 7.0 $\mu$m, for example, no greater than about 5.0 $\mu$m, or from about 2.0 $\mu$m to about 7.0 $\mu$m, or from about 2.0 $\mu$m to about 5.0 $\mu$m;

(c) a $d_{25}$, by laser, no greater than about 3.0 $\mu$m, for example, no greater than about 2.0 $\mu$m, or from about 0.5 $\mu$m to about 3.0 $\mu$m, or from about 0.5 $\mu$m to about 2.0 $\mu$m;

(d) a $d_{95}$, by Sedigraph, no greater than about 5.0 $\mu$m, for example, no greater than about 3.0 $\mu$m, or from about 0.5 $\mu$m to about 5.0 $\mu$m, or from about 0.5 $\mu$m to about 3.0 $\mu$m;

(e) a $d_{75}$, by Sedigraph, no greater than about 3.0 $\mu$m, for example, no greater than about 2.0 $\mu$m, or from about 0.1 $\mu$m to about 3.0 $\mu$m, or from about 0.1 $\mu$m to about 2.0 $\mu$m;

(f) a $d_{25}$, by Sedigraph, no greater than about 1.0 $\mu$m, for example, no greater than about 0.5 $\mu$m, or from about 0.1 $\mu$m to about 1.0 $\mu$m, or from about 0.1 $\mu$m to about 0.5 $\mu$m; and/or

(g) a crystallinity index, CI, no greater than about 7.5 g/m$^2$, for example, from about 0.01 g/m$^2$ to about 7.5 g/m$^2$, or from about 0.01 g/m$^2$ to about 4.0 g/m$^2$.

4. A method for preparing the microcrystalline talc particulate according to any preceding claim, the method comprising:

(a) dry milling a microcrystalline talc feed material in a stirred bead mill to produce a milled microcrystalline talc material; and

(b) classifying the milled microcrystalline talc material to remove a coarse fraction.

5. The method according to claim 4, comprising dry milling the microcrystalline talc feed material in the stirred bead mill using grinding media comprising milling beads having diameters from about 2 mm to about 10 mm, for example, from about 4 mm to about 6 mm, optionally wherein the milling beads are made of: ceramic, for example, alumina or zirconia; plastic; or metal, for example, steel.

6. The method according to claim 4 or claim 5, comprising returning the coarse fraction to the stirred bead mill for further dry milling.

7. The method according to any of claims 4 to 6, wherein the microcrystalline talc feed material has:

(a) a $d_{50}$, by Sedigraph for values of $d_{50}$ no greater than 50 $\mu$m and by sieving for values of $d_{50}$ greater than 50 $\mu$m, from about 5.0 $\mu$m to about 20 mm, for example, from about 5.0 $\mu$m to about 10 mm, from about 5.0 $\mu$m to about 1 mm, or from about 5.0 $\mu$m to about 20.0 $\mu$m, or from about 5.0 $\mu$m to about 10.0 $\mu$m;

(b) a $d_{50}$, by laser for values of $d_{50}$ no greater than 1 mm and by sieving for values of $d_{50}$ greater than 1 mm, from about 5.0 $\mu$m to about 20 mm, for example, from about 5.0 $\mu$m to about 10 mm, or from about 5.0 $\mu$m to about 1 mm, or from about 5.0 $\mu$m to about 40.0 $\mu$m, or from about 5.0 $\mu$m to about 20.0 $\mu$m;

(c) a Minolta Y whiteness no less than about 80, for example, no less than about 85;

(d) a CIELAB L* no less than about 85, for example, no less than about 90;

(e) a CIELAB a* no greater than about 1.0, for example, no greater than about 0.5;

(f) a CIELAB b* from about 1.0 to about 4.0, for example, from about 2.0 to about 3.0;

(g) a BET specific surface area no greater than about 30 m$^2$/g, for example, no greater than about 20 m$^2$/g, or no greater than about 10 m$^2$/g;

(h) a talc content of no less than about 60 %, for example, no less than about 80 %, talc and an optional chlorite content of no greater than about 40 %, for example, no greater than about 20 %; and/or

(i) a crystallinity index, CI, no greater than about 7.5 $g/m^2$, for example, from about 0.01 $g/m^2$ to about 7.5 $g/m^2$, or from about 0.01 $g/m^2$ to about 4.0 $g/m^2$.

8. A polymer composition comprising the microcrystalline talc particulate according to any of claims 1 to 3.

9. The polymer composition according to claim 8, wherein:

(a) the polymer composition comprises no less than about 5 phr, for example, no less than about 50 phr, of the microcrystalline talc particulate;

(b) the polymer composition further comprises a mineral other than the microcrystalline talc particulate, for example, precipitated silica or a clay mineral such as kaolin, or carbon black; and/or

(c) the polymer composition comprises an elastomer such as a synthetic rubber or a natural rubber, for example, a styrene-butadiene rubber.

10. A method of making the polymer composition according to claim 8 or claim 9, the method comprising combining a polymer or polymer precursors with the microcrystalline talc particulate according to any of claims 1 to 3.

11. Use of the microcrystalline talc particulate according to any of claims 1 to 3 in a polymer composition to:

(a) increase the modulus at 50% elongation, $M_{50}$, of the polymer composition;

(b) increase the modulus at 100% elongation, $M_{100}$, of the polymer composition;

(c) increase the modulus at 300% elongation, $M_{300}$, of the polymer composition;

(d) increase the abrasion resistance of the polymer composition;

(e) increase the reinforcement index $M_{300}/M_{100}$ of the polymer composition;

(f) increase the tensile strength of the polymer composition; and/or

(g) increase the tear resistance of the polymer composition;

as compared to a polymer composition comprising the same amount of a talc particulate not according to any of claims 1 to 3.

12. A method of:

(a) increasing the modulus at 50% elongation, $M_{50}$, of a polymer composition;

(b) increasing the modulus at 100% elongation, $M_{100}$, of the polymer composition;

(c) increasing the modulus at 300% elongation, $M_{300}$, of the polymer composition;

(d) increasing the abrasion resistance of the polymer composition;

(e) increasing the reinforcement index $M_{300}/M_{100}$ of the polymer composition;

(f) increasing the tensile strength of the polymer composition; and/or

(g) increasing the tear resistance of the polymer composition;

as compared to a reference polymer composition comprising a reference amount of a talc particulate not according to any of claims 1 to 3,

wherein the method comprises adding the microcrystalline talc particulate according to any of claims 1 to 3 to the polymer composition in the reference amount.

13. The use or method according to claim 11 or claim 12, wherein the polymer composition is an elastomeric polymer composition comprising an elastomer such as a synthetic rubber or a natural rubber, for example, a styrene-butadiene rubber.

14. The use or method according to any of claims 11 to 13, wherein:

(a) the polymer composition comprises no less than about 5 phr, for example, no less than about 50 phr, of the microcrystalline talc particulate; and/or

(b) the polymer composition further comprises a mineral other than the microcrystalline talc particulate, for example, precipitated silica, diatomaceous earth and/or a clay mineral such as kaolin, or carbon black.

Fig. 1

N(TOT)/BET

Fig. 2

Fig. 3

EP 4 074 772 A1

Elongation at break (%)

Fig. 4

Fig. 5

Compression SET (70°C-22h)

Fig. 6

Fig. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 041112 A (ASAHI KASEI CORP) 13 February 2003 (2003-02-13) * abstract * * paragraphs [0093], [0095] * * paragraph [0124] - paragraph [0125] * * examples 4,5; table 1 * * examples 1-7; table 2 * | 1,2,8-10 | INV. C08K3/34 C01B33/22 C09C1/30 |
| X | US 2010/285189 A1 (SCHOELKOPF JOACHIM [CH] ET AL) 11 November 2010 (2010-11-11) * paragraph [0042] - paragraph [0047] * * paragraph [0124]; examples * * claim 61 * | 1,2 | |
| X | JP S57 73034 A (MITSUBISHI PETROCHEMICAL CO) 7 May 1982 (1982-05-07) * abstract * * examples 10,24; tables 1,2 * * claim * | 1-4,6, 8-10 | |
| X | JP S57 73033 A (MITSUBISHI PETROCHEMICAL CO) 7 May 1982 (1982-05-07) * claims 1-3 * * examples 1-8; table 1 * | 1-4,6, 8-10 | TECHNICAL FIELDS SEARCHED (IPC) C08K C01B C09C |
| X | US 5 266 619 A (TERADA MASAHIRO [JP] ET AL) 30 November 1993 (1993-11-30) * column 5, line 5 - column 6, line 37 * * examples * * claims * | 1-14 | |
| X | US 4 504 617 A (YUI HIROSHI [JP] ET AL) 12 March 1985 (1985-03-12) * column 4, line 9 - line 14 * * example 3 * * example 10; table 10 * * claims 1, 15-18 * | 1-3,5-8, 10-14 | |

The present search report has been drawn up for all claims

| Place of search | Date of completion of the search | Examiner |
|---|---|---|
| Munich | 10 September 2021 | Russell, Graham |

EPO FORM 1503 03.82 (P04C01)

## ANNEX TO THE EUROPEAN SEARCH REPORT
## ON EUROPEAN PATENT APPLICATION NO.

EP 21 30 5501

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2021

| Patent document cited in search report | | Publication date | Patent family member(s) | | Publication date |
|---|---|---|---|---|---|
| JP 2003041112 | A | 13-02-2003 | NONE | | |
| US 2010285189 | A1 | 11-11-2010 | AU | 2008264037 A1 | 18-12-2008 |
| | | | CY | 1115402 T1 | 04-01-2017 |
| | | | DK | 2006367 T3 | 11-08-2014 |
| | | | EP | 2006367 A1 | 24-12-2008 |
| | | | EP | 2160457 A1 | 10-03-2010 |
| | | | ES | 2461861 T3 | 21-05-2014 |
| | | | MY | 150681 A | 28-02-2014 |
| | | | PL | 2006367 T3 | 31-10-2014 |
| | | | PT | 2006367 E | 30-05-2014 |
| | | | SI | 2006367 T1 | 29-08-2014 |
| | | | US | 2010285189 A1 | 11-11-2010 |
| | | | WO | 2008151928 A1 | 18-12-2008 |
| JP S5773034 | A | 07-05-1982 | JP | S603414 B2 | 28-01-1985 |
| | | | JP | S5773034 A | 07-05-1982 |
| JP S5773033 | A | 07-05-1982 | JP | S603413 B2 | 28-01-1985 |
| | | | JP | S5773033 A | 07-05-1982 |
| US 5266619 | A | 30-11-1993 | CA | 2045724 A1 | 28-12-1991 |
| | | | GB | 2246358 A | 29-01-1992 |
| | | | JP | 3253954 B2 | 04-02-2002 |
| | | | JP | H0456649 A | 24-02-1992 |
| | | | US | 5266619 A | 30-11-1993 |
| US 4504617 | A | 12-03-1985 | GB | 2111071 A | 29-06-1983 |
| | | | US | 4504617 A | 12-03-1985 |
| | | | US | 4552689 A | 12-11-1985 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DUMAS.** *Angewandte Chemie International Edition,* 2016, vol. 55, 9868-9871

- Determination de l'aire massique (surface spécifique) des poudres par adsorption de gaz - Méthode B.E.T. - Mesure volumétrique par adsorption d'azote a basse température. *NF X 11-621*